(19) **Europäisches Patentamt**
**European Patent Office**
**Office européen des brevets**

(11) **EP 4 425 137 A1**

(12) **EUROPEAN PATENT APPLICATION**
published in accordance with Art. 153(4) EPC

(43) Date of publication:
**04.09.2024 Bulletin 2024/36**

(21) Application number: **22887106.7**

(22) Date of filing: **27.10.2022**

(51) International Patent Classification (IPC):
*G01L 5/16* (2020.01)     *B25J 19/02* (2006.01)
*G01L 5/1627* (2020.01)     *G01L 5/165* (2020.01)
*G01L 5/166* (2020.01)     *G01L 5/169* (2020.01)

(52) Cooperative Patent Classification (CPC):
**B25J 19/02; G01L 5/16; G01L 5/1627; G01L 5/165; G01L 5/166; G01L 5/169**

(86) International application number:
**PCT/JP2022/040095**

(87) International publication number:
**WO 2023/074781 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2021   JP 2021175762**
**15.11.2021   JP 2021185817**

(71) Applicant: **CANON KABUSHIKI KAISHA**
**Tokyo 146-8501 (JP)**

(72) Inventors:
• **YAJIMA, Akira**
**Tokyo 146-8501 (JP)**
• **BENIYA, Yoshiyuki**
**Tokyo 146-8501 (JP)**
• **SASAKI, Shoji**
**Tokyo 146-8501 (JP)**
• **HORIGUCHI, Haruhiko**
**Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **SENSOR, APPARATUS, SYSTEM, AND METHOD FOR MANUFACTURING ARTICLE**

(57)     A sensor (10) includes a structure (5) having at least four elastic sections (31 to 34) discretely disposed along an imaginary circle, and a detector (8) arranged to detect a deformation of the structure (5). The structure (5) includes a metal component (51) having at least one elastic section (31) of the four elastic sections (31 to 34), a reinforcement component (56) coupled to the metal component (51), and a reinforcement component (57) coupled to the metal component (51). The metal component (51) has a top surface section (1) coupled to the reinforcement component (56) and a bottom surface section (2) coupled to the reinforcement component (57). The metal component (51) is formed by bending a metal member (50).

EP 4 425 137 A1

FIG. 26

**Description**

Technical Field

The present invention relates to a sensor.

Background Art

There is known a sensor that includes a structure and a detector arranged to detect a deformation of the structure and that measures the amount of mechanical energy applied to the structure. PTL 1 describes a torque sensor that includes an elastic member and optical encoders. PTL 2 describes a torque sensor that includes a fixing member, a coupling member, an intermediate member, and a detection unit. In the intermediate member, the rigidity of the torque sensor in the radial direction is lower than the rigidity of the torque sensor in the rotation direction. Thus, the influence of deformation of the torque sensor, caused by a wave generator, on a detected torque is reduced.

Citation List

Patent Literature

PTL 1: Japanese Patent Laid-Open No. 2017-096929
PTL2: Japanese Patent Laid-Open No. 2019-174472

Summary of Invention

Technical Problem

PTL 1 suggests casting or machining a predetermined material, such as resin and metal, as a method of integrally molding a fastening portion and a spring portion in an elastic member. However, casting or machining has an inconvenience in terms of production, such as a decrease in throughput and an increase in manufacturing cost. It is a first object of the present invention to provide a technology beneficial to improvement in the productivity of a sensor.
PTL 2 studies rigidity in a radial direction and in a circumferential direction but does not sufficiently study rigidity in other directions. It is a second object of the present invention to provide a technology beneficial to improvement in the detection accuracy of a sensor.

Solution to Problem

A solution to the problem is a sensor. The sensor includes a structure having at least four elastic sections discretely disposed along an imaginary circle, and a detector arranged to detect a deformation of the structure. The structure includes at least one metal component having at least one elastic section of the four elastic sections, a first reinforcement component disposed on one side of the circle and coupled to the at least one metal component, and a second reinforcement component disposed on the other side of the circle and coupled to the at least one metal component. The at least one metal component has a first coupling surface section disposed on the one side of the circle and coupled to the first reinforcement component, and a second coupling surface section disposed on one side of the circle and coupled to the second reinforcement component. The at least one metal component is formed by bending a metal member.

Advantageous Effects of Invention

According to the present invention, it is possible to provide a technology beneficial to improvement in the productivity of a sensor and improvement in the detection accuracy.

Brief Description of Drawings

[Fig. 1A] Fig. 1A is a schematic diagram illustrating a sensor.
[Fig. 1B] Fig. 1B is a schematic diagram illustrating the sensor.

[Fig. 1C] Fig. 1C is a schematic diagram illustrating the sensor.
[Fig. 2A] Fig. 2A is a schematic diagram illustrating the sensor.
[Fig. 2B] Fig. 2B is a schematic diagram illustrating the sensor.
[Fig. 2C] Fig. 2C is a schematic diagram illustrating the sensor.
[Fig. 2D] Fig. 2D is a schematic diagram illustrating the sensor.
[Fig. 3A] Fig. 3A is a schematic diagram illustrating the sensor.
[Fig. 3B] Fig. 3B is a schematic diagram illustrating the sensor.
[Fig. 4A] Fig. 4A is a schematic diagram illustrating the sensor.
[Fig. 4B] Fig. 4B is a schematic diagram illustrating the sensor.
[Fig. 4C] Fig. 4C is a schematic diagram illustrating the sensor.
[Fig. 5A] Fig. 5A is a schematic diagram illustrating the sensor.
[Fig. 5B] Fig. 5B is a schematic diagram illustrating the sensor.
[Fig. 5C] Fig. 5C is a schematic diagram illustrating the sensor.
[Fig. 6] Fig. 6 is a schematic diagram illustrating the sensor.
[Fig. 7A] Fig. 7A is a schematic diagram illustrating the sensor.
[Fig. 7B] Fig. 7B is a schematic diagram illustrating the sensor.
[Fig. 7C] Fig. 7C is a schematic diagram illustrating the sensor.
[Fig. 8] Fig. 8 is a schematic diagram illustrating a sensor.
[Fig. 9A] Fig. 9A is a schematic diagram illustrating the sensor.
[Fig. 9B] Fig. 9B is a schematic diagram illustrating the sensor.
[Fig. 9C] Fig. 9C is a schematic diagram illustrating the sensor.
[Fig. 10A] Fig. 10A is a schematic diagram illustrating the sensor.
[Fig. 10B] Fig. 10B is a schematic diagram illustrating the sensor.
[Fig. 10C] Fig. 10C is a schematic diagram illustrating the sensor.
[Fig. 11A] Fig. 11A is a schematic diagram illustrating the sensor.
[Fig. 11B] Fig. 11B is a schematic diagram illustrating the sensor.
[Fig. 12A] Fig. 12A is a schematic diagram illustrating the sensor.
[Fig. 12B] Fig. 12B is a schematic diagram illustrating the sensor.
[Fig. 12C] Fig. 12C is a schematic diagram illustrating the sensor.
[Fig. 12D] Fig. 12D is a schematic diagram illustrating the sensor.
[Fig. 13A] Fig. 13A is a schematic diagram illustrating the sensor.
[Fig. 13B] Fig. 13B is a schematic diagram illustrating the sensor.
[Fig. 13C] Fig. 13C is a schematic diagram illustrating the sensor.
[Fig. 14A] Fig. 14A is a schematic diagram illustrating a sensor.
[Fig. 14B] Fig. 14B is a schematic diagram illustrating the sensor.
[Fig. 14C] Fig. 14C is a schematic diagram illustrating the sensor.
[Fig. 14D] Fig. 14D is a schematic diagram illustrating the sensor.
[Fig. 15A] Fig. 15A is a schematic diagram illustrating a manufacturing method for the sensor.
[Fig. 15B] Fig. 15B is a schematic diagram illustrating a manufacturing method for a sensor.
[Fig. 16A] Fig. 16A is a schematic diagram illustrating the manufacturing method for the sensor.
[Fig. 16B] Fig. 16B is a schematic diagram illustrating the manufacturing method for the sensor.
[Fig. 16C] Fig. 16C is a schematic diagram illustrating the manufacturing method for the sensor.
[Fig. 17A] Fig. 17A is a schematic diagram illustrating the manufacturing method for the sensor.
[Fig. 17B] Fig. 17B is a schematic diagram illustrating the manufacturing method for the sensor.
[Fig. 18A] Fig. 18A is a schematic diagram illustrating the manufacturing method for the sensor.
[Fig. 18B] Fig. 18B is a schematic diagram illustrating the manufacturing method for the sensor.
[Fig. 18C] Fig. 18C is a schematic diagram illustrating the manufacturing method for the sensor.
[Fig. 19A] Fig. 19A is a schematic diagram illustrating a sensor.
[Fig. 19B] Fig. 19B is a schematic diagram illustrating the sensor.
[Fig. 19C] Fig. 19C is a schematic diagram illustrating the sensor.
[Fig. 20A] Fig. 20A is a schematic diagram illustrating a sensor.
[Fig. 20B] Fig. 20B is a schematic diagram illustrating the sensor.
[Fig. 20C] Fig. 20C is a schematic diagram illustrating the sensor.
[Fig. 21A] Fig. 21A is a schematic diagram illustrating a manufacturing method for the sensor.
[Fig. 21B] Fig. 21B is a schematic diagram illustrating the manufacturing method for the sensor.
[Fig. 21C] Fig. 21C is a schematic diagram illustrating the manufacturing method for the sensor.
[Fig. 21D] Fig. 21D is a schematic diagram illustrating the manufacturing method for the sensor.
[Fig. 21E] Fig. 21E is a schematic diagram illustrating the manufacturing method for the sensor.

[Fig. 21F] Fig. 21F is a schematic diagram illustrating the manufacturing method for the sensor.

[Fig. 21G] Fig. 21G is a schematic diagram illustrating the manufacturing method for the sensor.

[Fig. 21H] Fig. 21H is a schematic diagram illustrating the manufacturing method for the sensor.

[Fig. 22A] Fig. 22A is a schematic diagram illustrating a sensor.

[Fig. 22B] Fig. 22B is a schematic diagram illustrating the sensor.

[Fig. 23A] Fig. 23A is a schematic diagram illustrating the sensor.

[Fig. 23B] Fig. 23B is a schematic diagram illustrating the sensor.

[Fig. 24A] Fig. 24A is a schematic diagram illustrating the sensor.

[Fig. 24B] Fig. 24B is a schematic diagram illustrating the sensor.

[Fig. 24C] Fig. 24C is a schematic diagram illustrating the sensor.

[Fig. 25] Fig. 25 is a schematic diagram illustrating the sensor.

[Fig. 26] Fig. 26 is a schematic diagram illustrating a sensor.

[Fig. 27A] Fig. 27A is a schematic diagram illustrating the sensor.

[Fig. 27B] Fig. 27B is a schematic diagram illustrating the sensor.

[Fig. 27C] Fig. 27C is a schematic diagram illustrating the sensor.

[Fig. 27D] Fig. 27D is a schematic diagram illustrating the sensor.

[Fig. 27E] Fig. 27E is a schematic diagram illustrating the sensor.

[Fig. 28A] Fig. 28A is a schematic diagram illustrating a sensor.

[Fig. 28B] Fig. 28B is a schematic diagram illustrating a sensor.

[Fig. 29A] Fig. 29A is a schematic diagram illustrating a sensor.

[Fig. 29B] Fig. 29B is a schematic diagram illustrating a sensor.

[Fig. 29C] Fig. 29C is a schematic diagram illustrating a sensor.

[Fig. 30A] Fig. 30A is a schematic diagram illustrating a sensor.

[Fig. 30B] Fig. 30B is a schematic diagram illustrating a sensor.

[Fig. 30C] Fig. 30C is a schematic diagram illustrating a sensor.

[Fig. 30D] Fig. 30D is a schematic diagram illustrating a sensor.

[Fig. 31A] Fig. 31A is a schematic diagram illustrating a sensor.

[Fig. 31B] Fig. 31B is a schematic diagram illustrating a sensor.

[Fig. 31C] Fig. 31C is a schematic diagram illustrating a sensor.

[Fig. 32A] Fig. 32A is a schematic diagram illustrating a sensor.

[Fig. 32B] Fig. 32B is a schematic diagram illustrating a sensor.

[Fig. 32C] Fig. 32C is a schematic diagram illustrating a sensor.

[Fig. 33A] Fig. 33A is a schematic diagram illustrating the sensor.

[Fig. 33B] Fig. 33B is a schematic diagram illustrating the sensor.

[Fig. 33C] Fig. 33C is a schematic diagram illustrating the sensor.

[Fig. 33D] Fig. 33D is a schematic diagram illustrating the sensor.

[Fig. 33E] Fig. 33E is a schematic diagram illustrating the sensor.

[Fig. 33F] Fig. 33F is a schematic diagram illustrating the sensor.

[Fig. 33G] Fig. 33G is a schematic diagram illustrating the sensor.

[Fig. 33H] Fig. 33H is a schematic diagram illustrating the sensor.

[Fig. 34A] Fig. 34A is a schematic diagram illustrating an apparatus.

[Fig. 34B] Fig. 34B is a schematic diagram illustrating the apparatus.

Description of Embodiments

Hereinafter, embodiments of the present invention will be described with reference to the attached drawings. In the following description and the drawings, like reference signs are assigned to common components over a plurality of the drawings. Therefore, common components will be described with reference to a plurality of drawings, and the description of components with common reference signs will not be repeated as needed.

Different matters with the same name can be distinguished by prefixing "Xth" (X is a number) like a first matter and a second matter. In the following description, when the signs N, N+1, N+2, ..., n-1, n (n - N ≥ 2) are consecutive natural numbers N to n, the signs N, N+1, N+2, ..., n-1, n can be abbreviated as the signs N to n. When the total number of elements is K, the number of elements may be expressed as at least k by using a number k (k ≤ K) smaller than or equal to K. At this time, k elements are obtained by selecting from among K elements in a selected combination. In expressions, [A & B] means at least any one of A and B, and [C to D] means at least any one of C to D.

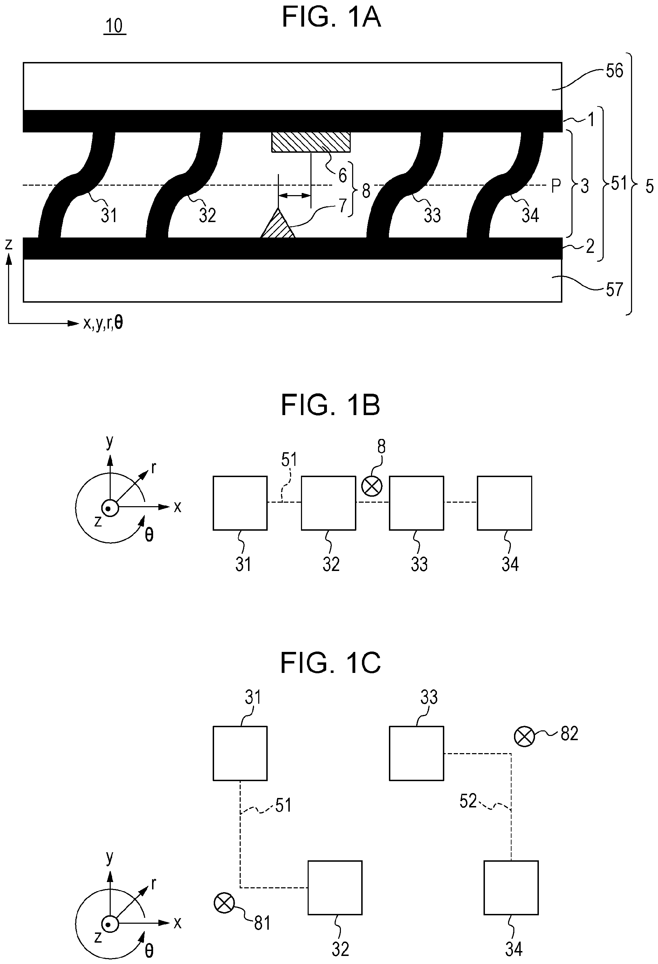

Fig. 1A schematically shows a sensor 10 according to the present embodiment. The sensor 10 includes a structure 5 and a detector 8 for detecting a deformation of the structure 5. Fig. 1A shows an imaginary plane P parallel to an x-y plane in an xyz orthogonal coordinate system and parallel to an r-θ plane in an rθz cylindrical coordinate system.

The cylindrical coordinate system is represented by r direction, θ direction, and z direction. The r direction may be referred to as radial direction, the θ direction may be referred to as circumferential direction, and the z direction may be referred to as axial direction. In the cylindrical coordinate system, the r-θ plane coincides with the x-y plane, and the z direction coincides with the z direction of the orthogonal coordinate system. The structure 5 has an elastic section group that is a group of a plurality of elastic sections discretely disposed in the imaginary plane P. The elastic section group has at least four elastic sections 31, 32, 33, 34 discretely disposed in the imaginary plane P. In other words, the number of elastic sections discretely disposed in the imaginary plane P and included in the elastic section group 3 is four or more. The sensor 10 may have one or a plurality of elastic sections not present in the imaginary plane P in which the elastic section group 3 is disposed. However, one or a plurality of elastic sections not present in the imaginary plane P is not counted as the elastic section of the elastic section group 3 present in the imaginary plane P.

The structure 5 includes at least one metal component 51. The one metal component 51 has at least two elastic sections 31, 32 of the four elastic sections 31, 32, 33, 34. In other words, the elastic sections 31, 32 are part of the one metal component 51.

A range in which a metallic bond of metal atoms included in a metal component is continuous is included in the one metal component. A metallic bond is discontinuous between two metal components only screwed to each other or only bonded by adhesive, so two metal components are separate metal components.

A metal material of the metal component 51 is an elemental metal or a mixture (alloy) of metals. The metal component 51 may be the one obtained by plating a base material made of a metal material. To ensure the rigidity of the structure 5, the metal component 51 is preferably hard and is preferably, for example, a metal material with a Vickers hardness of 90 HV or higher. Iron alloys (steels), such as carbon steels and alloy steels, aluminum alloys, titanium alloys, and the like may be used as the material of the metal component 51. In terms of a material cost, iron alloys are suitable.

The one metal component 51 can have a top surface section 1 and a bottom surface section 2 opposed to the top surface section 1. The at least two elastic sections 31, 32 (in this example, the four elastic sections 31 to 34) are provided such that the plane P is located between the top surface section 1 and the bottom surface section 2. In the following description, the words "top" and "bottom" just correspond to a positive side and a negative side in the z direction, and, for the posture of the sensor 10 during usage of the sensor 10, the z direction does not need to coincide with a vertical direction. The top surface section 1 may be referred to as front surface section, and the bottom surface section 2 may be referred to as back surface section.

The detector 8 includes one or a plurality of detecting units. The detecting unit of the detector 8 can include a plurality of components 6, 7. With a deformation of the structure 5, a relative positional relationship between the component 6 and the component 7 changes, and the relative positional relationship between the component 6 and the component 7 can be detected by using the component 6 and the component 7. The detecting unit of the detector 8 is, for example, an encoder including a head and a scale. An example of the component 6 is a head. An example of the component 7 is a scale. The component 6 may be a scale. The component 7 may be a head. The detector 8 can include a component that processes a signal output from the component 6 or the component 7, in addition to the components 6, 7. The encoder of the detector 8 may be an optical encoder or may be a magnetic encoder. When an optical encoder is used as the detector 8, magnetic constraints on the metal component 51 are small. The head of the optical encoder has at least a light receiving portion and, where necessary, may have a light emitting portion that emits light to be applied to the scale. Here, the example in which the component 6 and the component 7 are opposed to each other in the z direction is described. Alternatively, the component 6 and the component 7 may be opposed to each other in any one of the x direction, the y direction, the r direction, and the θ direction. The encoder serving as the detector 8 may be a linear encoder or may be a rotary encoder. The output method may be of an incremental type or an absolute type. The encoder can adopt a configuration in which the component 6 and the component 7 relatively move in a direction orthogonal to a direction in which the component 6 and the component 7 are opposed to each other. The encoder may be arranged to, for example, detect a change in distance between the component 6 and the component 7 optically, magnetically, or electrostatically by the adoption of the configuration in which the component 6 and the component 7 relatively move in the direction in which the component 6 and the component 7 are opposed to each other. For example, the detecting unit of the detector 8 may be a capacitance displacement sensor. The detecting unit of the detector 8 may be a strain gauge. A displacement of the structure 5 may be detected by a strain gauge bonded to at least any one of the elastic sections of the elastic section group 3 of the structure 5.

The structure 5 includes a reinforcement component 56 and a reinforcement component 57. The reinforcement component 56 is disposed on one side (positive z side) of the plane P in the z direction, and the reinforcement component 57 is disposed on the other side (negative z side) of the plane P in the z direction. The plane P can be located between the reinforcement component 56 and the reinforcement component 57. In this example, the metal component 51 is located between the reinforcement component 56 and the reinforcement component 57. The reinforcement component 56 is coupled to the metal component 51, and the reinforcement component 57 is also coupled to the metal component 51. More specifically, the reinforcement component 56 is coupled to the top surface section 1 of the metal component 51, and the reinforcement component 57 is coupled to the bottom surface section 2 of the metal component 51. In this example, the metal component 51 is located between the reinforcement component 56 and the reinforcement component 57. However, at least one of the reinforcement component 56 and the reinforcement component 57 may be located between the top surface section 1 and the bottom surface section 2. For example, the reinforcement component 56 may be disposed on the side adjacent to the bottom surface section 2 with respect to the top surface section 1 and coupled to the top surface section 1, and the reinforcement component 57 may be disposed on the side adjacent to the top surface section 1 with respect to the bottom surface section 2 and coupled to the bottom surface section 2.

A force intended to be detected with the detector 8 is referred to as detection target force, and a force in a direction different from a direction in which a force to be detected is applied is referred to as non-detection target force. When, for example, a force that is applied in the θ direction is intended to be detected with the detector 8, a force that is applied in the r direction and a force that is applied in the z direction are non-detection target forces. Non-detection target forces may be referred to as other-axis forces. Non-detection target forces are a disturbance factor in detecting a detection target force. A disturbance in detecting a detection target force due to other-axis forces is referred to as other-axis interference. It is beneficial to reduce the influence of other-axis interference and improve the detection accuracy of the sensor 10 for a detection target force. Since the structure 5 includes the reinforcement components 56, 57 that reinforce the metal component 51, the rigidity of the structure 5 against non-detection target forces increases, so the detection accuracy of the sensor 10 for a detection target force is improved.

The sensor 10 can be a force/torque sensor. Here, a force (detection target force) to be detected by the force/torque sensor is at least any one of a force in the x direction, a force in the y direction, a force in the z direction, a force around the x axis, a force around the y axis, and a force around the z axis. A force around the z axis in the above-described rθz cylindrical coordinate system is a force in the θ direction. When the sensor 10 detects f (f ≤ 6) forces of the six forces, the sensor 10 can be referred to as f-axis force/torque sensor. When the sensor 10 exclusively detects at least any one of a force around the x axis, a force around the y axis, and a force around the z axis, the sensor 10 can be referred to as torque sensor. When the sensor 10 detects only a force around the z axis, the sensor 10 may be referred to as single-axis force/torque sensor or single-axis torque sensor.

When the detector 8 includes a plurality of detecting units, a mode in which the plurality of detecting units detects a force in the same direction can be adopted. By statistically processing the outputs from the plurality of detecting units, the influence of variations in characteristics among the detecting units is reduced, with the result that the detection accuracy of the sensor 10 is improved. Here, a statistical process is to extract a maximum value, a minimum value, a mean value, a total value, a median value, or the like from the outputs from the plurality of detecting units. An E/2-th or ((E/2)+1)-th largest value can be adopted as the median value in the case where the number of detecting units is E (E is an even number).

Fig. 1B shows a first layout example of four elastic sections 31 to 34 when the imaginary plane P is viewed in plan in the z direction. In the first layout example, the four elastic sections 31 to 34 are arranged in a one-dimensional array. In Fig. 1B, the dashed lines connecting the elastic sections 31 to 34 represent that one metal component 51 has these elastic sections 31, 32, 33, 34. At least one detecting unit 8 is provided in the metal component 51.

Fig. 1C shows a second layout example of four elastic sections 31, 32, 33, 34 when the imaginary plane P is viewed in plan in the z direction. In the second layout example, the four elastic sections 31, 32, 33, 34 are arranged in a two-dimensional array. In Fig. 1C, the dashed line connecting the elastic sections 31, 32 represents that one metal component 51 has the elastic sections 31, 32. In Fig. 1C, the dashed line connecting the elastic sections 33, 34 represents that one metal component 52 has the elastic sections 33, 34. Since no dashed line connects the elastic section 31 with the elastic section 33 or the elastic section 34 and no dashed line connects the elastic section 32 with the elastic section 33 or the elastic section 34, it represents that the metal component 51 and the metal component 52 are separate metal components. In other words, of the four elastic sections 31 to 34, the metal component 52 has the two elastic sections 33, 34 different from the two elastic sections 31, 32 of the metal component 51.

In the second layout example, at least one detecting unit 81 is provided in the metal component 51, and at least one detecting unit 82 is provided in the metal component 52.

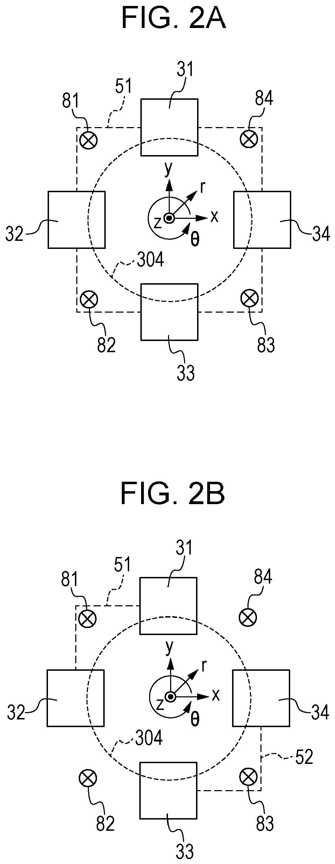

Fig. 2A shows a third layout example of four elastic sections 31, 32, 33, 34 when the imaginary plane P is viewed in plan in the z direction. In the third layout example, the four elastic sections 31 to 34 are disposed in the plane P such that an imaginary circle 304 passes through the four elastic sections 31 to 34. Such a layout is beneficial to detect a deformation that occurs in the θ direction (circumferential direction) in the cylindrical coordinate system. Alternatively, such a layout is beneficial to detect a deformation that occurs in the x direction and the y direction in the orthogonal coordinate system. In the third layout example, one metal component 51 has the four elastic sections 31 to 34. In the third layout example, at least four detecting units 81, 82, 83, 84 are provided in the metal component 51.

Fig. 2B shows a fourth layout example of four elastic sections 31, 32, 33, 34 when the imaginary plane P is viewed in plan in the z direction. The fourth layout example differs from the third layout example in that one metal component 51 has the elastic sections 31, 32 and one metal component 52 has the elastic sections 33, 34. In the fourth layout example, at least two detecting units 81, 82 are provided in the metal component 51, and at least two detecting units 83, 84 are provided in the metal component 52. The other configuration can be similar to that of the third layout example.

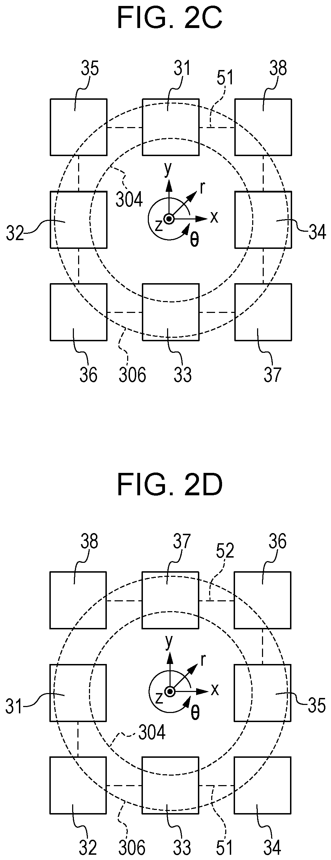

Fig. 2C shows a fifth layout example of at least six elastic sections when the imaginary plane P is viewed in plan in the z direction. In the fifth layout example, the at least six elastic sections include elastic sections 35, 36, 37, 38 in addition to the above-described four elastic sections 31 to 34 and include the eight elastic sections 31, 32, 33, 34, 35, 36, 37, 38 in total. In the fifth layout example, one metal component 51 includes the at least six elastic sections (for example, the elastic sections 31 to 36) of the eight elastic sections 31 to 38 and includes the eight elastic sections 31 to 38 of the eight elastic sections 31 to 38. In the fifth layout example, the six elastic sections (for example, the elastic sections 31 to 36) are disposed in the plane P such that an imaginary circle 306 passes through the at least six elastic sections (for example, the elastic sections 31 to 36). In this example, the imaginary circle 306 passes through the eight elastic sections 31 to 38.

Fig. 2D shows a sixth layout example of at least six elastic sections when the imaginary plane P is viewed in plan in the z direction. In the sixth layout example, one metal component 51 includes the four elastic sections 31 to 34 of the eight elastic sections 31 to 38, and another metal component 52 includes the four elastic sections 35 to 38 of the eight elastic sections 31 to 38.

In Figs. 2A to 2D, each of the elastic sections included in the elastic section group 3 deforms, for example, in the θ direction, and each of the detecting units 81 to 84 included in the detector 8 can detect a force in the θ direction as a torque. Alternatively, each of the elastic sections included in the elastic section group 3 deforms in the x direction or in the y direction to make it possible to detect a force in the x direction or in the y direction.

As described above, in the sensor 10 according to the present embodiment, the one metal component 51 has the at least two elastic sections 31, 32 of the four elastic sections 31 to 34.

The sensor 10 can be mounted on various machine apparatuses. Various machine apparatuses each can include a prime mover (electric motor), such as a motor and an engine, and the sensor 10. Various machine apparatuses including a prime mover that relatively moves two links include video apparatuses, such as cameras, optical apparatuses, such as lenses, business apparatuses, such as printers and copying machines, medical apparatuses, such as CTs and MRIs, industrial apparatuses, such as robots and exposure machines, and transportation apparatuses, such as vehicles, ships, and airplanes. Vehicles can include automobiles, bicycles, and railroad vehicles. Various machine apparatuses may be medical apparatuses or nursing-care apparatuses, such as powered suits and artificial limbs. When the sensor 10 that measures the amount of mechanical energy is mounted on these machine apparatuses and then a force that occurs in a movable portion and near the movable portion, the operations of the machine apparatuses can be controlled.

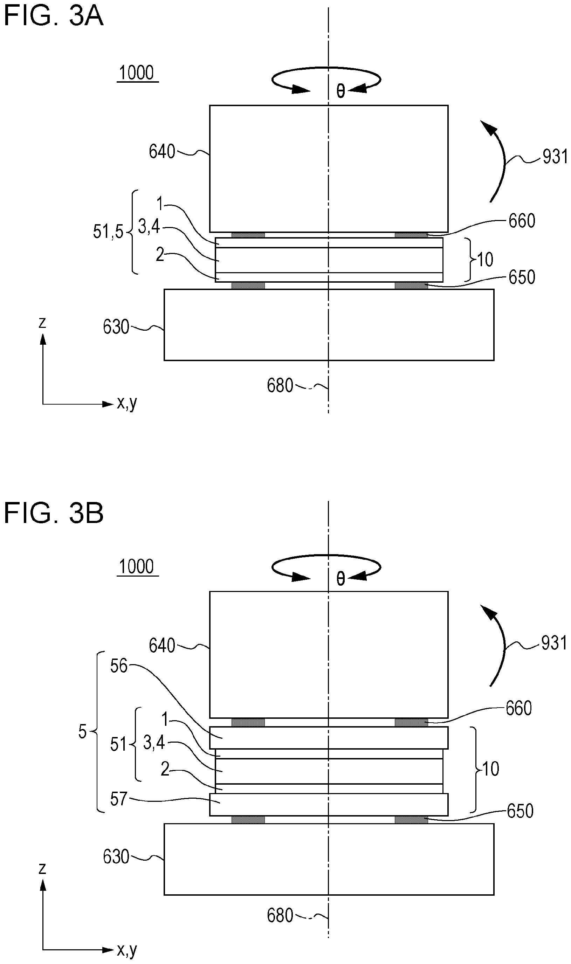

Figs. 3A and 3B illustrate examples of the usage mode of the sensor 10. A machine apparatus 1000 including the sensor 10 includes a link 630 and a link 640. A link is a machine element that relatively moves, and a coupling portion between a link and a link is a joint. For example, the link 630 and the link 640 relatively rotate about an axis 680 that is a rotation axis. The sensor 10 is provided between the link 630 and the link 640. The sensor 10 is fixed to the link 630 by fixing members 650, such as screws. The sensor 10 is fixed to the link 640 by fixing members 660, such as screws and bolts.

In the sensor 10 of Fig. 3A, the top surface section 1 of the metal component 51 is fixed to the link 640 by the fixing members 660, and the bottom surface section 2 of the metal component 51 is fixed to the link 630 by the fixing members 650. In the sensor 10 of Fig. 3B, the reinforcement component 56 fixed to the top surface section 1 is fixed to the link 640 by the fixing members 660, and the reinforcement component 57 fixed to the bottom surface section 2 is fixed to the link 630 by the fixing members 650.

In recent years, a robot 600 is used. The robot 600 operates in accordance with a robot program for the purpose of production of products. As for production of products that need accuracy in assembly operation, the following control method is used. In the control method, the sensor 10 capable of acquiring mechanical information, such as torque, is disposed in the robot 600, a force that is applied to a joint is measured, and the operation of the robot 600 is controlled. A torque sensor that uses a detector capable of detecting a deformation of the structure 5 that is a component of the sensor 10 and that detects a torque applied to the joint in accordance with the detected deformation and the rigidity of the structure 5 has become a focus of attention as the sensor 10 of this type. In twisting about a rotation axis, a force of Mz is on the rotation axis of torque, and forces in the other directions are other-axis forces. Other-axis forces become a disturbance (other-axis interference) on torque detection. A twisting amount caused by other-axis interference becomes a factor of disturbance on torque detection. When the structure 5 includes the top surface section 1 and the bottom surface section 2 and further includes the reinforcement components 56, 57, other-axis interference is reduced.

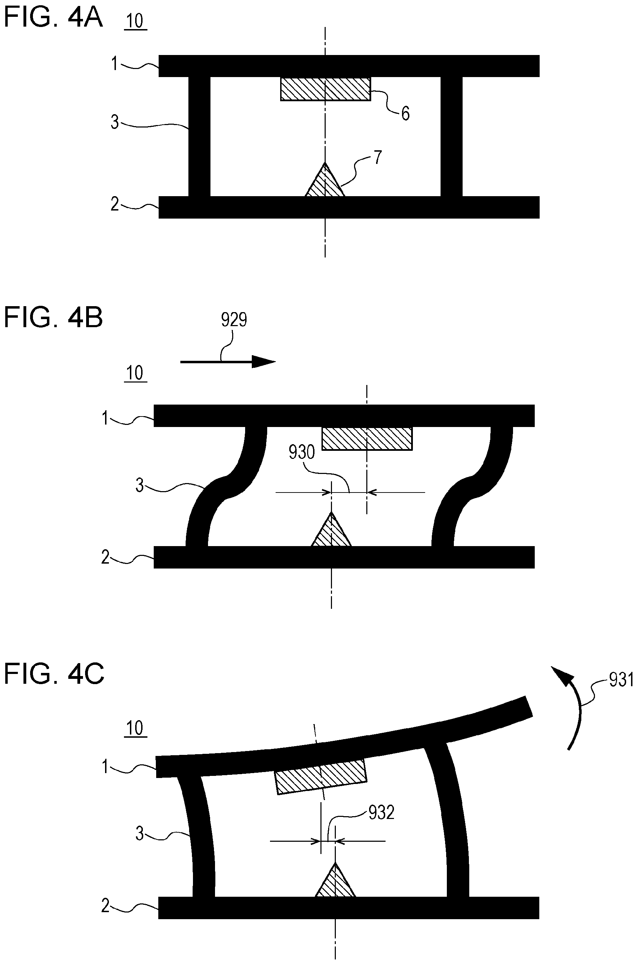

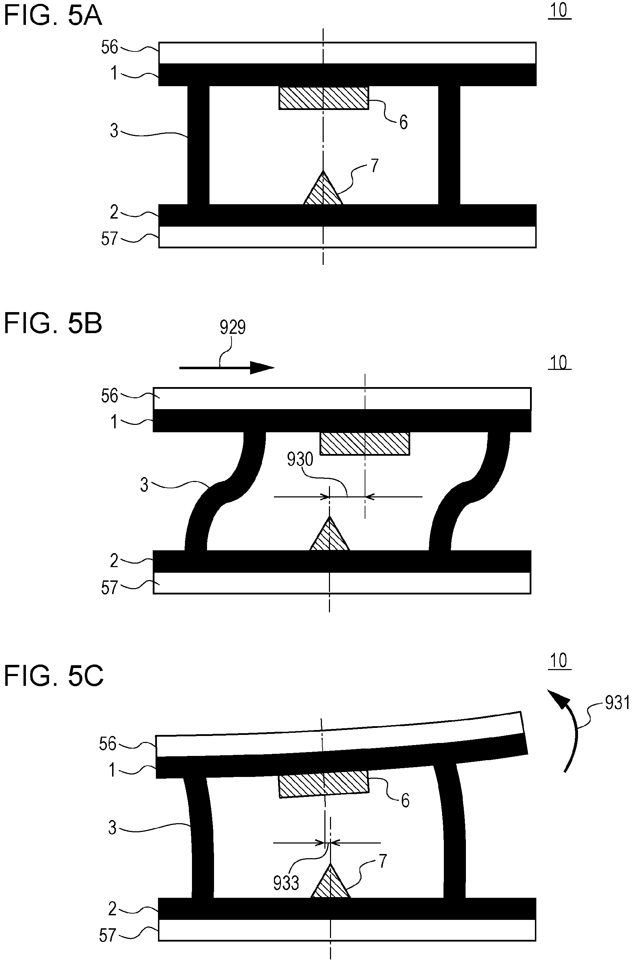

Figs. 4A to 4C and 5A to 5C schematically illustrate methods of torque detection using the sensor 10. Figs. 4A to 4C are associated with the mode of Fig. 3A. Figs. 5A to 5C are associated with the mode of Fig. 3B.

Figs. 4A and 5A show a state where no torque is occurring. This state is defined as an initial position of the component 6, attached to the top surface section 1, and the component 7.

Fig. 4B and Fig. 5B show a state where, for example, the axis 680 shown in Fig. 3A or Fig. 3B rotates to generate a torque. In this case, the top surface section 1 coupled to the link 640 and the bottom surface section 2 coupled to the link 630 are displaced in the rotation direction. Furthermore, the top surface section 1 and the bottom surface section 2 elastically deform, and the amount of deformation is proportional to the magnitude of torque generated.

Here, in the positional relationship between the component 6 and the component 7 in Fig. 4B or Fig. 5B, there is a change 930 from the initial position shown in Fig. 4A or Fig. 5B. The sensor 10 measures the change 930 and detects the value of torque generated in accordance with the measured value. For this purpose, a rotational rigidity Gz [kNm/rad] that is a torque Nt [kNm] used to rotate the sensor 10 by a unit angle [rad] is obtained in advance by measurement or finite element method. When the rotational angle measured by the component 6 and the component 7 is $\Theta$, a torque Nt generated is detected as Nt = Gz $\times$ $\theta$ [kNm]. In terms of this point, a detection target force can be similarly detected between Fig. 3A and Fig. 3B.

Fig. 4C and Fig. 5C show a state where, for example, bending moment 931 shown in Fig. 3A or Fig. 3B is generated. In this case, with a bending deformation of the top surface section 1, the component 6 is displaced to the left in the drawing. As a result of this displacement, there occurs a displacement 932 from the initial position in the component 6 and the component 7. The displacement caused by the bending moment 931 may appear as other-axis interference to decrease the detection accuracy of the sensor 10.

In the mode of Fig. 5C, the rigidity of the structure 5 increases by the addition of the reinforcement components 56, 57. Therefore, a displacement 933 from the initial position of the component 6 and the component 7 in the event of occurrence of the bending moment 931 is smaller than the displacement 932 in the case of the configuration of Fig. 4C, so the influence of other-axis interference is reduced.

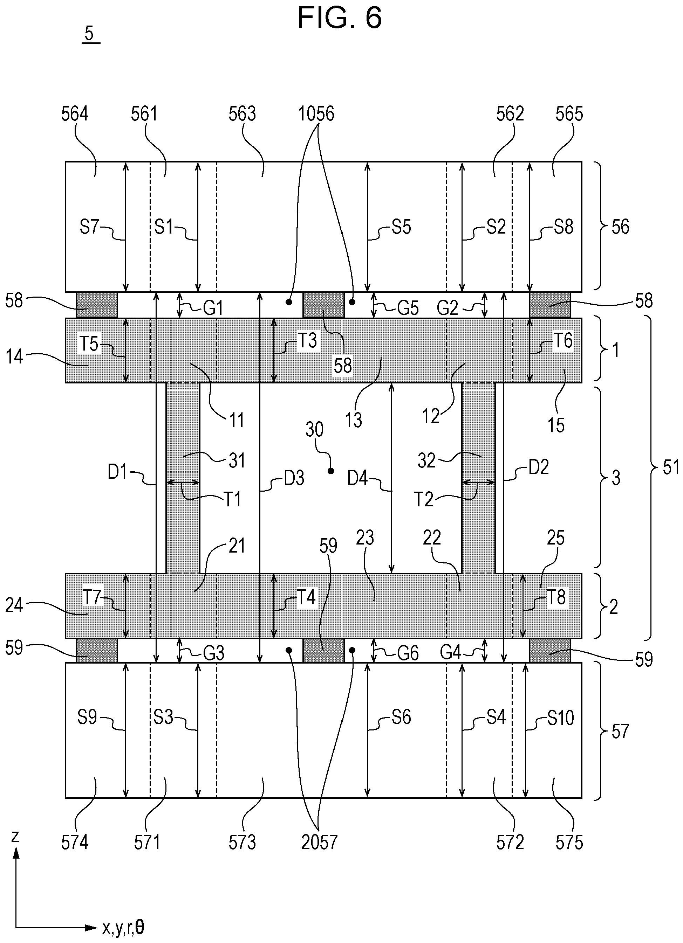

The shape of the structure 5 will be specifically described with reference to Fig. 6. The reinforcement component 56 has an overlapping portion 561 overlapping the elastic section 31, an overlapping portion 562 overlapping the elastic section 32, and a relay portion 563 connecting the overlapping portion 561 and the overlapping portion 562. Similarly, the reinforcement component 57 has an overlapping portion 571 overlapping the elastic section 31, an overlapping portion 572 overlapping the elastic section 32, and a relay portion 573 connecting the overlapping portion 571 and the overlapping portion 572. Here, the state that two portions "overlap" means that the two portions are arranged in the z direction. The state that one portion "connects" two portions means that the two portions are continuous via the one portion in the x direction, the y direction, the $\theta$ direction, or the r direction. One portion connecting two portions is not limited to being located between the two portions and may be located at a portion not between the two portions.

The metal component 51 has a metal portion 11 overlapping the overlapping portion 561 and a metal portion 12 overlapping the overlapping portion 562. The metal component 51 has a metal portion 21 overlapping the overlapping portion 571 and a metal portion 22 overlapping the overlapping portion 572. The elastic section 31 couples the metal portion 11 with the metal portion 21. The elastic section 32 is located between the metal portion 12 and the metal portion 22. The elastic section 32 couples the metal portion 12 with the metal portion 22. The elastic section 31 is located between the metal portion 11 and the metal portion 21. The metal portion 11 is located between the elastic section 31 and the overlapping portion 561, and the metal portion 12 is located between the elastic section 32 and the overlapping portion 562. The metal portion 21 is located between the elastic section 31 and the overlapping portion 571, and the metal portion 22 is located between the elastic section 32 and the overlapping portion 572.

The metal component 51 has a metal portion 13. The metal portion 13 satisfies at least any one of overlapping the relay portion 563 and coupling the elastic section 31 with the elastic section 32. The metal component 51 has a metal portion 23. The metal portion 23 satisfies at least any one of overlapping the relay portion 573 and coupling the elastic section 31 with the elastic section 32. An air gap 30 is provided between the metal portion 13 and the metal portion 23. The air gap 30 is present between the elastic section 31 and the elastic section 32 in any one of the x direction, the y direction, the r direction, and the $\theta$ direction. By providing the air gap 30, the rigidity of the metal component 51 decreases, and the elastic sections 31, 32 elastically deform.

The metal portions 11, 12, 13 make up the top surface section 1 of the metal component 51. The metal portions 21, 22, 23 make up the bottom surface section 2 of the metal component 51.

The reinforcement component 56 has an extended portion 564 extending from the overlapping portion 561 to the side opposite to the relay portion 563, and an extended portion 565 extending from the overlapping portion 562 to the side opposite to the relay portion 563. The reinforcement component 57 has an extended portion 574 extending from the overlapping portion 571 to the side opposite to the relay portion 573, and an extended portion 575 extending from the overlapping portion 572 to the side opposite to the relay portion 573.

The metal component 51 has a metal portion 14. The metal portion 14 satisfies at least any one of overlapping the extended portion 564 and extending from the metal portion 11 to the side opposite to the metal portion 13. The metal component 51 has a metal portion 15. The metal portion 15 satisfies at least any one of overlapping the extended portion 565 and extending from the metal portion 12 to the side opposite to the metal portion 13. The metal component 51 has a metal portion 24. The metal portion 24 satisfies at least any one of overlapping the extended portion 574 and extending from the metal portion 21 to the side opposite to the metal portion 23. The metal component 51 has a metal portion 25. The metal portion 25 satisfies at least any one of overlapping the extended portion 575 and extending from the metal portion 22 to the side opposite to the metal portion 23.

When the relay portion 563 and the extended portions 564, 565 each overlap the metal component 51 (the metal portions 13, 14, 15), the relay portion 563 and the extended portions 564, 565 each may be referred to as overlapping portion. When the relay portion 573 and the extended portions 574, 575 each overlap the metal component 51 (the metal portions 23, 24, 25), the relay portion 573 and the extended portions 574, 575 each may be referred to as overlapping portion. The relay portion 563, the extended portions 564, 565, the relay portion 573, and the extended portions 574, 575 do not need to overlap the metal component 51.

The reinforcement component 56 and the metal component 51 are coupled by joints 58. The reinforcement component 57 and the metal component 51 are coupled by joints 59. Various modes, such as bonding, welding, and fastening, may be used for coupling by the joints 58. When the reinforcement components 56, 57 are metal components, coupling of each of the reinforcement components 56, 57 with the metal component 51 is preferably welding. In this case, the joints 58, 59 may be referred to as welding portions.

Fig. 6 shows the thickness S1 of the overlapping portion 561, the thickness S2 of the overlapping portion 562, the thickness S3 of the overlapping portion 571, and the thickness S4 of the overlapping portion 572. Fig. 6 shows the thickness S5 of the relay portion 563, the thickness S6 of the relay portion 573, the thickness S7 of the extended portion 564, the thickness S8 of the extended portion 565, the thickness S9 of the extended portion 574, and the thickness S10 of the extended portion 575. The thicknesses S1 to S10 are the dimensions of the reinforcement components 56, 57 in the z direction. It means that, as the thicknesses S1 to S10 increase, the rigidity of the reinforcement components 56, 57 in the z direction increases. At least two of the thicknesses S1 to S10 may be different from each other, and at least two of the thicknesses S1 to S10 may be equal to each other. In this example, the description will be made on the assumption that all the thicknesses S1 to S10 are equal. When the maximum value of the thicknesses S1 to S10 is less than 110% of the minimum value, all the thicknesses S1 to S10 may be regarded to be equal. In this case, a larger one of at least two of the thicknesses S1 to S10 is less than 110% of a smaller one.

Fig. 6 shows the thickness T1 of the elastic section 31 and the thickness T2 of the elastic section 32. The thicknesses T1, T2 are the dimensions of the elastic sections 31, 32 of the metal component 51 in the x direction, the y direction, the r direction, or the θ direction. It means that, as the thicknesses T1, T2 reduce, the rigidity of the metal component 51 in the x direction, the y direction, the r direction, or the θ direction reduces. The thicknesses T1, T2 are small in a predetermined direction, so the rigidity of the elastic sections 31, 32 reduces, with the result that the elastic sections 31, 32 are easy to elastically deform in the predetermined direction. The thicknesses T1, T2 may be different from each other or the thicknesses T1, T2 may be equal to each other. In this example, the description will be made on the assumption that the thicknesses T1, T2 are equal. When the larger one of the thicknesses T1, T2 is less than 110% of the smaller one, T1 and T2 may be regarded to be equal in this example.

Fig. 6 shows the thickness T3 of the metal portion 13, the thickness T4 of the metal portion 23, the thickness T5 of the metal portion 14, the thickness T6 of the metal portion 15, the thickness T7 of the metal portion 24, and the thickness T8 of the metal portion 25. The thicknesses T3 to T8 are the dimensions of the top surface section 1 and bottom surface section 2 of the metal component 51 in the z direction. It means that, as the thicknesses T3 to T8 reduce, the rigidity of the metal component 51 in the z direction reduces. The thicknesses T3 to T8 may be different from one other or the thicknesses T3 to T8 may be equal to one other. In this example, the description will be made on the assumption that the thicknesses T3 to T8 are equal. When the maximum value of the thicknesses T3 to T8 is less than 110% of the minimum value, all the thicknesses T3 to T8 may be regarded to be equal. In this case, a larger one of at least two of the thicknesses T3 to T8 is less than 110% of a smaller one.

Fig. 6 shows the distance G1 between the overlapping portion 561 and the metal component 51 (metal portion 11) and the distance G2 between the overlapping portion 562 and the metal component 51 (metal portion 12). Fig. 6 shows the distance G3 between the overlapping portion 571 and the metal component 51 (metal portion 21) and the distance G4 between the overlapping portion 572 and the metal component 51 (metal portion 22). Fig. 6 shows the distance G5 between the relay portion 563 and the metal component 51 (metal portion 13) and the distance G6 between the relay portion 573 and the metal component 51 (metal portion 23). The distances G1 to G6 may be different from one other or the distances G1 to G6 may be equal to one other. In this example, the description will be made on the assumption that the distances G1 to G6 are equal. When the maximum value of the distances G1 to G6 is less than 110% of the minimum value, all the distances G1 to G6 may be regarded to be equal. In this case, a larger one of at least two of the distances G1 to G6 is less than 110% of a smaller one. At least any one of the distances G1 to G6 may be zero, that is, at least one of the overlapping portions 561, 562, 571, 572, and the relay portions 563, 573 may be in contact with the metal component 51. However, the distances G1 to G6 are preferably greater than zero. Even when one part of each of the overlapping portions 561, 562, 571, 572 and the relay portions 563, 573 is in contact with the metal component 51, the other part of each of the overlapping portions 561, 562, 571, 572, and the relay portions 563, 573 is preferably spaced away from the metal component 51. In this example, a gap 1056 is provided between the reinforcement component 56 and the metal component 51, and a gap 2057 is provided between the reinforcement component 57 and the metal component 51. Each of the distances G1 to G6 is preferably the distance between the metal component 51 and any one of the reinforcement components 56, 57 via the gap 1056 or the gap 2057.

Fig. 6 shows the distance D1 between the overlapping portion 561 and the overlapping portion 571, the distance D2 between the overlapping portion 562 and the overlapping portion 572, the distance D3 between the relay portion 563 and the relay portion 573, and the distance D4 between the metal portion 13 and the metal portion 23. The distances D1 to D3 may be different from one other or the distances D1 to D3 may be equal to one other. In this example, the description will be made on the assumption that the distances D1 to D3 are equal. When the maximum value of the distances D1 to D3 is less than 110% of the minimum value, all the distances D1 to D3 may be regarded to be equal. In this case, a larger one of at least two of the distances D1 to D3 is less than 110% of a smaller one.

In the present embodiment, the reinforcement components 56, 57 that reinforce the top surface section 1 and the bottom surface section 2 are provided such that the top surface section 1 and the bottom surface section 2 do not elastically deform as much as possible when the elastic sections 31, 32 elastically deform. It is desirable that the rigidity of the reinforcement components 56, 57 be higher than that of the elastic sections 31, 32 that impart elasticity (that reduce rigidity) in the structure 5. In terms of this viewpoint, the thicknesses S1 to S10 of the portions of the reinforcement components 56, 57 can be set so as to be greater than the thicknesses T1, T2 of the elastic sections 31, 32 ([S1 to S10] > [T1 & T2]). For example, the thickness S5 of the relay portion 563 is greater than the thickness T1 of the elastic section 31 (S5 > T1), and the thickness S6 of the relay portion 573 is greater than the thickness T2 of the elastic section 32 (S6 > T2) .

The reinforcement components 56, 57 are particularly effective when the rigidity of the top surface section 1 and the bottom surface section 2 is not sufficient. It is desirable that the rigidity of the reinforcement components 56, 57 be higher than that of the top surface section 1 and the bottom surface section 2 that impart rigidity to the structure 5. In terms of this viewpoint, the thicknesses S1 to S10 of the portions of the reinforcement components 56, 57 can be set so as to be greater than the thicknesses T3 to T8 of the portions of the top surface section 1 and the bottom surface section 2, associated with the portions of the reinforcement components 56, 57 ([S1 to S10] > [T3 to T8]). For example, the thickness S5 of the relay portion 563 is greater than the thickness T3 of the metal portion 13 (S5 > T3), and the thickness S6 of the relay portion 573 is greater than the thickness T4 of the metal portion 23 (S6 > T4) .

Since the reinforcement components 56, 57 are provided, the thicknesses T1 to T8 of the portions of the top surface section 1 and the bottom surface section 2 may be closer to the thicknesses T1, T2 of the elastic sections 31, 32 than to the thicknesses S1 to S10 of the portions of the reinforcement components 56, 57, associated with the portions of the top surface section 1 and the bottom surface section 2. In other words, a difference between each of the thicknesses T1, T2 of the elastic sections 31, 32 and each of the thicknesses T3 to T8 of the portions of the top surface section 1 and the bottom surface section 2 may be less than a difference between each of the thicknesses S1 to S10 of the portions of the reinforcement components 56, 57 and each of the thicknesses T3 to T8 of the portions of the top surface section 1 and the bottom surface section 2, associated with the portions of the reinforcement components 56, 57 (|[T3 to T8] - [T1 & T2]| < |[S1 to S10] - [T3 to T8]|). For example, a difference between the thickness T1 of the elastic section 31 and the thickness T3 of the metal portion 13 is less than a difference between the thickness S5 of the relay portion 563 and the thickness T3 of the metal portion 13. A difference between the thickness T2 of the elastic section 32 and the thickness T4 of the metal portion 23 is less than a difference between the thickness S6 of the relay portion 573 and the thickness T4 of the metal portion 23.

To impart appropriate elasticity to the elastic sections 31, 32 and impart appropriate rigidity to the top surface section 1 and the bottom surface section 2, each of the thicknesses T1, T2 of the elastic sections 31, 32 is preferably less than each of the thicknesses T3 to T8 of the portions of the top surface section 1 and the bottom surface section 2 ([T1 & T2] < [T3 to T8]) . However, when appropriate elasticity and rigidity are imparted to the elastic sections 31, 32, the rigidity of the structure 5 can be imparted to the reinforcement components 56, 57 even when the rigidity of the top surface section 1 and the bottom surface section 2 is small. Therefore, each of the thicknesses T1, T2 of the elastic sections 31, 32 may be equal to each of the thicknesses T3 to T8 of the portions of the top surface section 1 and the bottom surface section 2 ([T1 & T2] = [T3 to T8]) and may be greater than each of the thicknesses T3 to T8 of the portions of the top surface section 1 and the bottom surface section 2 (([T1 & T2] > [T3 to T8])). When each of the thicknesses T3 to T8 of the portions of the top surface section 1 and the bottom surface section 2 is equal to each of the thicknesses T1, T2 of the elastic sections 31, 32 or less than each of the thicknesses T1, T2 of the elastic sections 31, 32, a cost for the metal component 51 having the elastic sections 31, 32 is reduced. When each of the thicknesses T1, T2 of the elastic sections 31, 32 is equal to each of the thicknesses T3 to T8 of the portions of the top surface section 1 and the bottom surface section 2, a difference between each of the thicknesses T1, T2 of the elastic sections 31, 32 and each of the thicknesses T3 to T8 of the portions of the top surface section 1 and the bottom surface section 2 is zero.

The elasticity of the metal component 51 mostly depends on the thicknesses T1, T2 of the elastic sections 31, 32 and the lengths of the elastic sections 31, 32, and the lengths (dimensions in the z direction) of the elastic sections 31, 32 can correlate with the distance D4 between the metal portion 13 and the metal portion 23. As the distance D4 between the metal portion 13 and the metal portion 23 increases, the rigidity of the metal component 51 can reduce. In this example, the length of each of the elastic sections 31, 32 coincides with the distance D4 between the metal portion 13 and the metal portion 23. On the other hand, as the distances G1 to G3 between the reinforcement component 56 and the reinforcement component 57 reduce, the rigidity of the structure 5 can increase. To reduce the rigidity of the metal component 51 while increasing the rigidity of the structure 5, the distance D4 between the metal portion 13 and the metal portion 23 is preferably greater than or equal to two thirds of each of the distances G1 to G3 between the reinforcement component 56 and the reinforcement component 57. For example, the distance G1 between the overlapping portion 561 and the overlapping portion 571 is preferably greater than or equal to two thirds of the length of the elastic section 31, and the distance G2 between the overlapping portion 562 and the overlapping portion 572 is preferably greater than or equal to two thirds of the length of the elastic section 32. The distance D4 between the metal portion 13 and the metal portion 23 is preferably greater than or equal to two thirds of the distance D3 between the relay portion 563 and the relay portion 573 (D4 ≥ D3 × 2/3).

When the thicknesses S1 to S10 of the portions of the reinforcement components 56, 57 are extremely increased, it leads to an increase in the size, weight, and cost of the structure 5.

Each of the thicknesses S1 to S10 of the portions of the reinforcement components 56, 57 is preferably less than each of the distances D1 to D3 between the reinforcement component 56 and the reinforcement component 57. For example, the thickness S1 of the overlapping portion 561 is less than the distance D1 between the overlapping portion 561 and the overlapping portion 571 (S1 < D1), and the thickness S3 of the overlapping portion 571 is less than the distance D1 between the overlapping portion 561 and the overlapping portion 571 (S3 < D1). The thickness S5 of the relay portion 563 is less than the distance D3 between the relay portion 563 and the relay portion 573 (S5 < D3), and the thickness S6 of the relay portion 573 is less than the distance D3 between the relay portion 563 and the relay portion 573 (S6 < D3). In addition, each of the thicknesses S1 to S10 of the portions of the reinforcement components 56, 57 may be less than each of the lengths of the elastic sections 31, 32 and may be less than the distance D4 between the metal portion 13 and the metal portion 23 ([S1 to S10] < D4). For example, the thickness S5 of the relay portion 563 is less than the distance D4 between the metal portion 13 and the metal portion 23 (S5 < D4), and the thickness S6 of the relay portion 573 is less than the distance D4 between the metal portion 13 and the metal portion 23 (S6 < D4).

In order for the reinforcement components 56, 57 to effectively function for (reinforce) the metal component 51, the reinforcement components 56, 57 are preferably disposed near the metal component 51 as much as possible. Therefore, each of the distances G1 to G6 between the portions of the reinforcement components 56, 57 and the top surface section 1 and bottom surface section 2 of the metal component 51 is preferably less than the distance between the top surface section 1 and the bottom surface section 2. For example, the distance G5 between the relay portion 563 and the metal portion 13 is less than the distance D4 between the relay portion 563 and the relay portion 573 (G5 < D4), and the distance G6 between the relay portion 563 and the metal portion 23 is less than the distance D4 between the relay portion 563 and the relay portion 573 (G6 < D4).

Each of the distances G1 to G6 between the portions of the reinforcement components 56, 57 and the top surface section 1 and bottom surface section 2 of the metal component 51 is preferably less than each of the thicknesses S1 to S10 of the portions of the reinforcement components 56, 57, associated with the portions of the top surface section 1 and bottom surface section 2. For example, the distance G5 between the relay portion 563 and the metal portion 13 is less than the thickness S5 of the relay portion 563 (G5 < S5), and the distance G6 between the relay portion 573 and the metal portion 23 is less than the thickness S6 of the relay portion 573 (G6 < S6). The structure 5 can satisfy G3 < S3 and G6 < S6.

Each of the distances G1 to G6 between the portions of the reinforcement components 56, 57 and the top surface section 1 and bottom surface section 2 of the metal component 51 is preferably less than each of the thicknesses T3 to T8 of the portions of the top surface section 1 and bottom surface section 2, associated with the portions of the reinforcement components 56, 57. For example, the distance G5 between the relay portion 563 and the metal portion 13 is less than the thickness T3 of the metal portion 13 (G5 < T3), and the distance G6 between the relay portion 573 and the metal portion 23 is less than the thickness T4 of the relay portion 23 (G6 < T4).

Each of the distances G1 to G6 between the portions of the reinforcement components 56, 57 and the top surface section 1 and bottom surface section 2 of the metal component 51 is preferably less than each of the thicknesses T1, T2 of the elastic sections 31, 32 ([G1 to G6] < [T1 & T2]). For example, the distance G1 between the overlapping portion 561 and the metal component 51 (metal portion 11) is less than the thickness T1 of the elastic section 31 (G1 < T1), and the distance G2 between the overlapping portion 562 and the metal component 51 (metal portion 12) is less than the thickness T2 of the elastic section 32 (G2 < T2). For example, the distance G3 between the overlapping portion 571 and the metal component 51 (metal portion 21) is less than the thickness T1 of the elastic section 31 (G3 < T1), and the distance G4 between the overlapping portion 572 and the metal component 51 (metal portion 22) is less than the thickness T2 of the elastic section 32 (G2 < T2). The distance G5 between the relay portion 563 and the metal component 51 (metal portion 13) is less than the thickness T1 of the elastic section 31 or the thickness T2 of the elastic section 32 (G5 < [T1 & T2]). The distance G6 between the relay portion 573 and the metal component 51 (metal portion 23) is less than the thickness T1 of the elastic section 31 or the thickness T2 of the elastic section 32 (G6 < [T1 & T2]).

Each of the thicknesses S1 to S10 of the portions of the reinforcement components 56, 57 may be between the length of each of the elastic sections 31, 32 or the distance D4 from the metal portion 13 to the metal portion 23 and the thickness of each of the portions of the top surface section 1 and the bottom surface section 2. For example, the thickness S5 of the relay portion 563 can be between the distance D4 from the metal portion 13 to the metal portion 23 and the thickness T3 of the metal portion 13 (T3 < S5 < D4 or T3 > S5 > D4). The thickness S6 of the relay portion 573 can be between the distance D4 from the metal portion 13 to the metal portion 23 and the thickness T4 of the metal portion 23 (T4 < S6 < D4 or T4 > S6 > D4). When both the above-described [S1 to S10] < D4 and [S1 to S10] > [T3 to T8] are satisfied, this relationship can be satisfied.

Specific numeric value ranges in the above-described mode are, for example, [G1 to G6] ranges from 0 mm to 1 mm, [T1 & T2] ranges from 1 mm to 3 mm, [T3 to T8] ranges from 1 mm to 10 mm, [S1 to S10] ranges from 1 mm to 20 mm, D4 ranges from 5 mm to 15 mm, and [D1 to D3] ranges from 5 mm to 30 mm. Among these ranges, preferably [G1 to G6] < [T1 & T2] ≤ [T3 to T8] < [S1 to S10] < D4 < [D1 to D3] is satisfied.

A gap is preferably provided between each of the portions of the reinforcement components 56, 57 and each of the top surface section 1 and bottom surface section 2 of the metal component 51. For example, the gap 1056 is provided between the reinforcement component 56 and the metal component 51 (top surface section 1). The gap 2057 is provided between the reinforcement component 57 and the metal component 51 (bottom surface section 2). In other words, each of the reinforcement components 56, 57 and the metal component 51 (the top surface section 1 or the bottom surface section 2) can be opposed to each other via the gap 1056 or the gap 2057. Each of the above-described distances G1 to G6 can be the distance between any one of the reinforcement components 56, 57 and the metal component 51 (the top surface section 1 or the bottom surface section 2), opposed to each other via the gap 1056 or the gap 2057.

When the reinforcement components 56, 57 are respectively in contact with the top surface section 1 and the bottom surface section 2 of the metal component 51, friction can occur between each of the reinforcement components 56, 57 and the metal component 51 in the event of a deformation of the structure 5. This friction can decrease the detection accuracy of the sensor 10. When the gaps 1056, 2057 are provided as described above, friction between each of the reinforcement components 56, 57 and the metal component 51 is reduced, with the result that the detection accuracy of the sensor 10 is improved. In a region in which the reinforcement components 56, 57 overlap the metal component 51, the area of each of the gaps 1056, 2057 is preferably increased as much as possible. When the gaps 1056, 2057 are provided, there may be a portion where the reinforcement components 56, 57 are in contact with the metal component 51. The area in which the reinforcement component 56 and the metal component 51 (top surface section 1) are opposed to each other via the gap 1056 to the area of a region in which the reinforcement component 56 and the metal component 51 (top surface section 1) overlap is preferably higher than or equal to 25%. The area in which the reinforcement component 56 and the metal component 51 (top surface section 1) are opposed to each other via the gap 1056 to the area of a region in which the reinforcement component 56 and the metal component 51 (top surface section 1) overlap may be lower than or equal to 75% or may be lower than or equal to 50%. The area in which the reinforcement component 57 and the metal component 51 (bottom surface section 2) are opposed to each other via the gap 2057 to the area of a region in which the reinforcement component 57 and the metal component 51 (bottom surface section 2) overlap is preferably higher than or equal to 25%. The area in which the reinforcement component 57 and the metal component 51 (bottom surface section 2) are opposed to each other via the gap 2057 to the area of a region in which the reinforcement component 57 and the metal component 51 (bottom surface section 2) overlap may be lower than or equal to 75% or may be lower than or equal to 50%.

Various methods can be adopted to form the gaps 1056, 2057. For example, a protruding portion can be provided on one of the metal component 51-side surface of each of the reinforcement components 56, 57 and the reinforcement components 56, 57-side surface of the metal component 51, and the protruding portion can be brought into contact with the other. Thus, the gaps 1056, 2057 according to the height of the protruding portion can be formed. A plurality of protruding portions may be provided on one of the metal component 51-side surface of each of the reinforcement components 56, 57 and the reinforcement components 56, 57-side surface of the metal component 51. In this case, gaps 1056, 2057 can be formed between the plurality of protruding portions. Alternatively, a recess may be provided on one of the metal component 51-side surface of each of the reinforcement components 56, 57 and the reinforcement components 56, 57-side surface of the metal component 51. Thus, the gaps 1056, 2057 according to the depth of the recess can be formed. Alternatively, a space regulating component (spacer or shim) that regulates the space between each of the reinforcement components 56, 57 and the metal component 51 may be disposed between each of the reinforcement components 56, 57 and the metal component 51. Thus, the gaps 1056, 2057 according to the thickness of the space regulating component can be formed.

The size of each of the gaps 1056, 2057 can be set such that, even when the structure 5 (the metal component 51, and the reinforcement components 56, 57) deforms, the metal component 51 (the top surface section 1 and the bottom surface section 2) does not contact with the reinforcement components 56, 57. When, for example, the amounts of deformation of the top surface section 1, the bottom surface section 2, and the reinforcement components 56, 57 in the z direction, which are estimated from a normal use of the sensor 10, are obtained, the dimensions of the gaps 1056, 2057 in the z direction should be increased so as to be larger than the amounts of deformation. The dimension of each of the gaps 1056, 2057 in the z direction may be greater than or equal to 1 μm, may be less than or equal to 1 mm, may range from 10 um to 100 $\mu$m, or may range from 10 um to 50 $\mu$m.

In the present embodiment, the one metal component 51 is characteristically formed by bending a metal member. A metal member to be subjected to bending is a metal plate, and bending is, for example, press working. In preparing the metal component 51, not only bending but also various sheet metal workings, such as punching, are used. As compared to casting or machining of metal, the productivity of sensors is improved by using bending. In other words, in casting (molding) of metal, a sand mold is needed to form a complicated shape but the sand mold is not suitable for mass production; whereas, when a metal mold is used, a cost for the metal mold is excessively high to form a complicated shape. In machining, a solid material serving as a base material is expensive, but the usage rate of the base material is low and not efficient, and cutting using an NC processing machine or the like takes a long processing time. When bending is used, a metal component 51 having at least two elastic sections can be manufactured at high throughput and low cost, so the productivity of sensors 10 is improved. When the structure 5 is made up of a metal component 51 and one metal component 52 different from the metal component 51, the metal component 52 can also be formed by bending a metal member.

A mode beneficial to ensure sensor accuracy by using a structure formed by bending a metal member will be described.

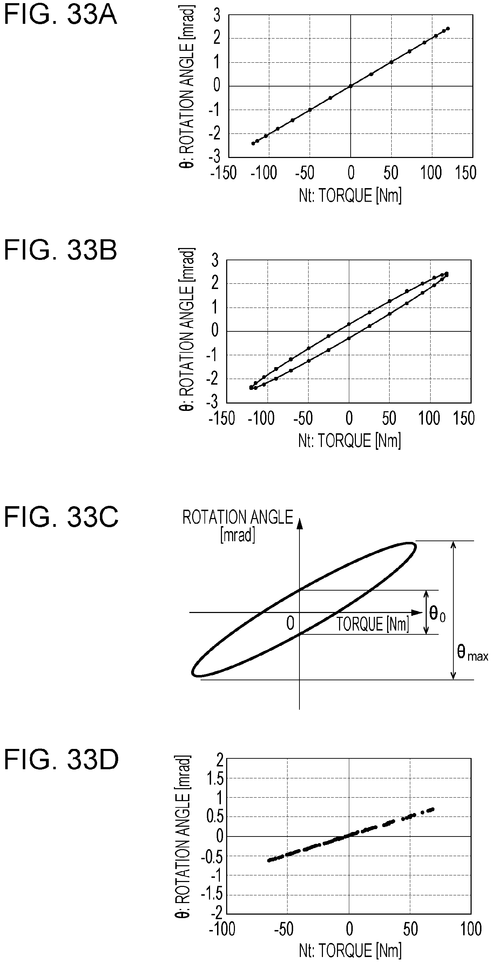

For torque detection with high accuracy, the relationship between rotational angle $\theta$ and torque Nt needs linearity as shown in Fig. 33A and can have a hysteresis loop as shown in Fig. 33B. The relationship between rotational angle $\theta$ and torque Nt is referred to as "$\theta$-Nt characteristics" hereinafter. In the case of Fig. 33B, the value of torque Nt is not uniquely determined from a rotational angle $\theta$, so the torque detection accuracy decreases. Various causes to impair the linearity are conceivable, and one of factors of significant effects is that a deformation of a material itself has nonlinearity. Here, nonlinearity means that a force applied to a member is not proportional to a deformation force. Many industrial metal materials exhibit a phenomenon called yield. When a stress loaded is smaller than or equal to a specific value for each material type, called yield point $\sigma y$, a stress and a deformation amount represent linearity, and, at or above the yield point $\sigma y$, represent nonlinearity. Therefore, to maintain the linearity of $\theta$-Nt characteristics, it is effective to use a member in a range in which a stress does not reach the yield point $\sigma y$ when torque is loaded. To objectively discuss the size of hysteresis loop, a numeric value is expressed by using Te that is defined in the following expression.

$$\texttt{Te = } \theta_0/\theta\texttt{max × 100[\%]}$$

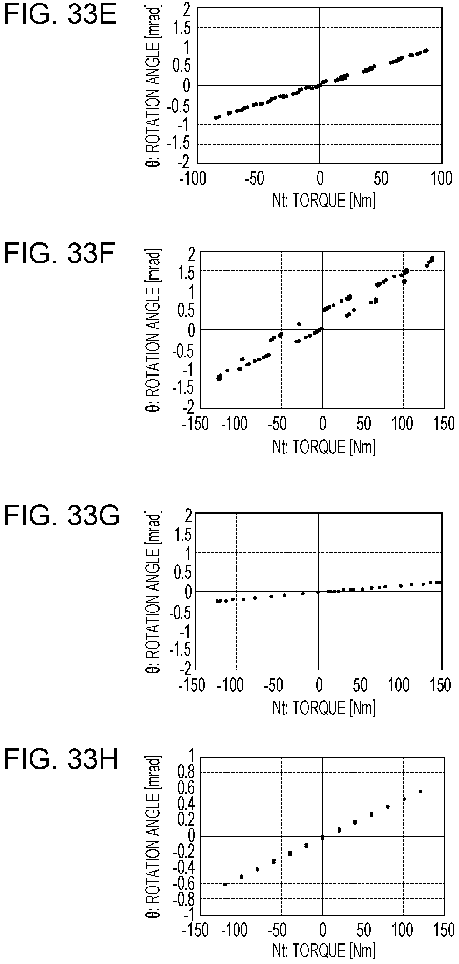

Fig. 33C is a definition of symbols $\theta_0$, $\theta$max in the above expression. $\theta_0$ is a distance between two intersection points of the graph with the ordinate axis, and $\theta$max is a difference between a maximum value and a minimum value of the graph in an ordinate axis direction. Te is referred to as torque detection error. A rotational rigidity Gz [kNm/rad] is calculated from the slope of the graph of the $\theta$-Nt characteristics. Figs. 33D, 33E, and 33F show results of measured $\theta$-Nt characteristics in a different range of torque loaded for a certain torque sensor, and $\pm$65 Nm for Fig. 33D, $\pm$85 Nm for Fig. 33E, and $\pm$135 Nm for Fig. 33F. In Figs. 33D to 33F, it appears that the hysteresis loop visually increases according to a torque range.

A rotational deformation amount caused by a torque load reduces in inverse proportional to a rotational rigidity Gz, so the rotational deformation amount when the same torque is loaded reduces, with the result that there is a concern about a decrease in torque detection accuracy. For this reason, it is necessary to not provide an opening causing high stress and reduce members to suppress an increase in rotational rigidity.

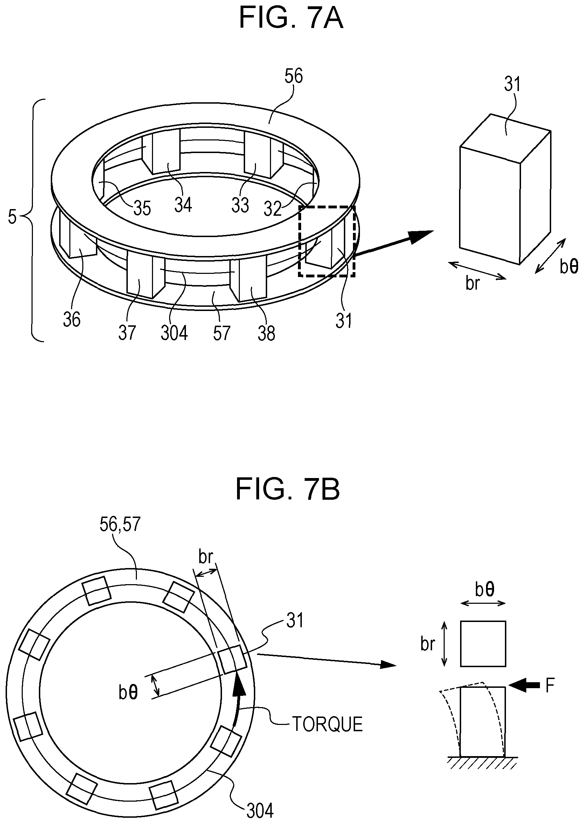

Hereinafter, which area of a member reduction is effective is studied based on structural mechanics. Fig. 7A is a modeled one of the structure 5 according to the present embodiment for study. The modeled structure 5 is made up of the reinforcement components 56, 57, and the elastic sections 31 to 38.

The reinforcement component 56 and the elastic sections 31 to 38 are rigidly coupled at contact surfaces, and the reinforcement component 57 and the elastic sections 31 to 38 are rigidly coupled at contact surfaces. Each of the elastic sections 31 to 38 is a quadrangular prism having a square cross section. Fig. 7B is a plan view of the modeled structure 5 and shows the layout of the elastic sections 31 to 38.

The elastic sections 31 to 38 are disposed such that the centers of square cross sections are placed along one imaginary circle 304. Then, the elastic sections 31 to 38 are disposed such that two sides of the square cross section are parallel and the other two sides of the square cross section are perpendicular to a tangential direction of the imaginary circle 304 at the center of the square cross section.

As shown in Fig. 7A, the side length of two sides of the square cross section, parallel to the tangential direction of the imaginary circle 304, is represented by the sign br, the side length of two sides perpendicular to the tangential direction is represented by the sign b$\theta$, and which is effective to decrease the rotational rigidity Gz is investigated. Fig. 7B shows a direction in which torque is applied to each of the elastic sections 31 to 38. Here, when focusing on one elastic section 38 as shown in Fig. 7B, torque is applied to the elastic section 31 as a force in the tangential direction of the imaginary circle 304, indicated by the sign F, and presumably causes the elastic section 31 to bend in the direction shown in Fig. 7B. In the above dynamical model, the rotational rigidity Gz is expressed by a mathematical expression. It is not strict but it is sufficiently valid modelization to compare the advantage between br and bθ. Then, the geometrical moment of inertia I of a member is expressed as follows from the mathematical formula of structural mechanics.

$$I = br \times b\theta^3/12$$

Furthermore, a flexural rigidity EI is the one obtained by multiplying a Young's modulus E similarly from the mathematical formula of structural mechanics, so the flexural rigidity EI is expressed as follows.

$$EI = E \times br \times b\theta^3/12$$

Therefore, the rotational rigidity Gz is proportional to br and is proportional to a cube of bθ. For this reason, when br and bθ are compared with each other, it is possible to further effectively decrease the rotational rigidity Gz by reducing bθ. When the fact that the present embodiment is a mode in which a metal component formed by bending a metal plate is used for the elastic sections 31 to 38 is considered together, the imaginary circle 304 is preferably disposed so as to pass through the elastic sections 31 to 38 in a plate-thickness direction. For each of the elastic sections 31 to 38, the distance between two sides opposed to each other is the thickness of each of the elastic sections 31 to 38. When there is a plurality of combinations of two sides opposed to each other, two sides for which the distance between two sides opposed to each other is minimum are set for two sides that define the thickness. When the imaginary circle 304 passes through two sides that define the thickness, the imaginary circle 304 intersects with two sides that define the thickness. Therefore, the two sides can be referred to as intersecting sides with the imaginary circle 304. An angle formed between each intersecting side and the imaginary circle 304 preferably ranges from 45 degrees to 135 degrees, more preferably ranges from 60 degrees to 120 degrees, and preferably, for example, ranges from 80 degrees to 100 degrees. An angle formed between the imaginary circle 304 and each of the intersecting sides that define the thickness is strictly an angle that each of the tangents of the imaginary circle 304 makes with a corresponding one of the intersecting sides at the intersection points between the imaginary circle 304 and the intersecting sides.

This study refers to part of a metal component having a function of coupling the reinforcement component 56 to the reinforcement component 57 and does not refer to preferences of the dimension in a bθ direction of a member that does not have this function.

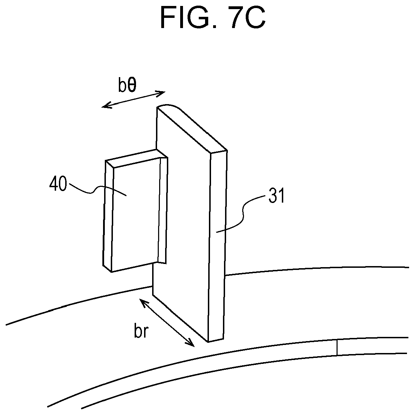

Fig. 7C shows an example. A non-coupling portion 40 in this drawing does not have a function to couple the reinforcement component 56 or the reinforcement component 57 and has a small influence on the rotational rigidity Gz. Therefore, such a non-coupling portion 40 may be provided as needed and may be deleted.

In the above description, a preferred example in the direction of each of the elastic sections 31 to 38 has been described. Next, the fact that the influence of other-axis interference can be decreased by bending a metal component having an elastic section, a top surface section, and a bottom surface section at the connection between the elastic section and the top surface section or the bottom surface section will be described.

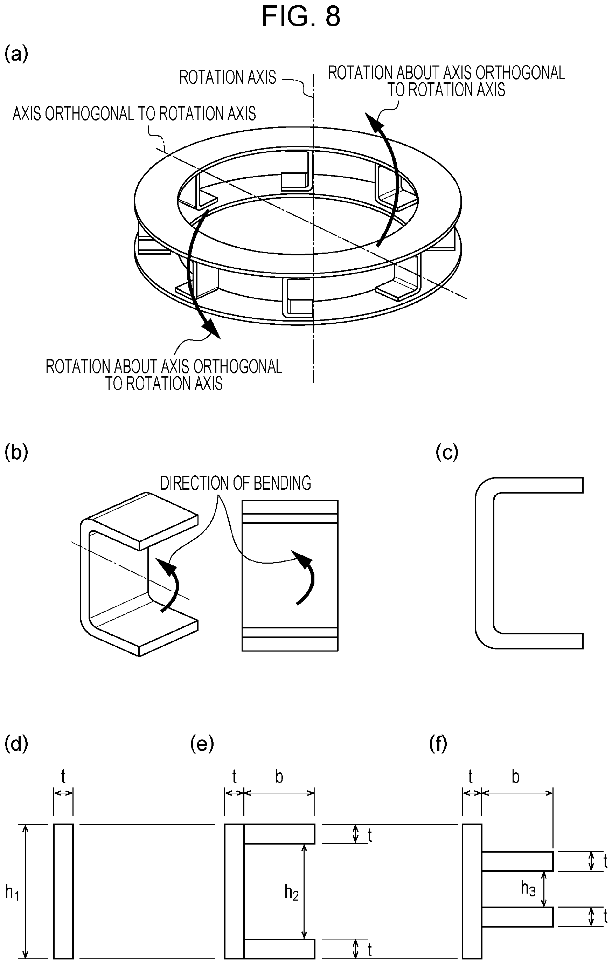

Fig. 8(a) illustrates rotation caused by other-axis interference. The rotation is about an axis orthogonal to a rotation axis, and a deformation resulting from the rotation becomes a disturbance factor of a sensor deformation amount and decreases torque detection accuracy.

Fig. 8(b) is a diagram focusing on one elastic body section and showing how rotation caused by other-axis interference works. It is presumable that action to bend in an arrow direction in the drawing occurs.

Therefore, to reduce other-axis interference, it is effective to increase flexural rigidity for bending in the arrow direction. A cross section causing the flexural rigidity is shown in Fig. 8(c). In other words, a metal component having an elastic section and a top surface section has such a shape that is bent at the connection between the elastic section and the top surface section. A metal component having an elastic section and a bottom surface section has such a shape that is bent at the connection between the elastic section and the bottom surface section.

A flexural rigidity is compared among three examples shown in Figs. 8(d), 8(e), and 8(f). A flexural rigidity is a product EI of a Young's modulus E and a geometrical moment of inertia I; however, Young's modulus is a material constant and less likely to be significant to be used in comparison of shape. Fig. 8(d) is the one that corresponds to a mode that does not have a top surface section or a bottom surface section. Fig. 8(e) is the one that has a portion corresponding to a top surface section and a portion corresponding to a bottom surface section and that simulates the present embodiment. As a result of comparison between Fig. 8(d) and Fig. 8(e), it is presumably possible to discuss the superiority of having a top surface section and a bottom surface section. Fig. 8(f) is the one in which a portion corresponding to a top surface section and a portion corresponding to a bottom surface section are brought close to a center. As a result of comparing this with Fig. 8(f), it is presumably possible to discuss the validity of the positions of the portions respectively corresponding to the top surface section and the bottom surface section.

Where the geometrical moments of inertia of Figs. 8(d), 8(e), and 8(f) are Ia, Ib, and Ic, these are expressed as follows from the mathematical formula of structural mechanics.

[Expression 1]

$$I_a = \frac{th_1^3}{12}$$

$$I_b = \frac{th_1^3}{12} + \frac{b}{12}\{(h_2 + 2t)^3 - h_2^3\}$$

$$I_c = \frac{th_1^3}{12} + \frac{b}{12}\{(h_3 + 2t)^3 - h_3^3\}$$

Subsequently, specific numeric values are substituted into the mathematical expressions, and Ia, Ib, and Ic are compared. The numeric values all are in mm and are $h_1 = 20$, $h_2 = 16$, $h_3 = 8$, t = 2, and b = 10 that are in ranges close to those of the present embodiment. Then, Ia, Ib, and Ic are calculated as follows.

[Expression 2]

$$I_a = \frac{th_1^3}{12} = \frac{2 \times 20^3}{12} = 1333[mm^4]$$

$$I_b = \frac{th_1^3}{12} + \frac{b}{12}\{(h_2 + 2t)^3 - h_2^3\}$$

$$= \frac{2 \times 20^3}{12} + \frac{10}{12}\{(16 + 2 \times 2)^3 - 16^3\} = 4586[mm^4]$$

$$I_c = \frac{th_1^3}{12} + \frac{b}{12}\{(h_3 + 2t)^3 - h_3^3\}$$

$$= \frac{2 \times 20^3}{12} + \frac{10}{12}\{(8 + 2 \times 2)^3 - 8^3\} = 2346[mm^4]$$

Ib is about 3.4 times as large as Ia. From this result, it is presumable that a deformation due to other-axis interference is smaller in the shape of Fig. 8(e) than in the shape of Fig. 8(d). In other words, as for the presence or absence of a top surface section and the presence or absence of a bottom surface section, bending causing other-axis interference can be smaller when a top surface section and a bottom surface section are provided. Ib is about 1.9 times as large as Ic. This indicates that a deformation due to other-axis interference is smaller when the top surface section and the bottom surface section are respectively located at the top end and bottom end of the elastic section. From the above study, when a metal bending component is used, the metal bending component is disposed such that the plate-thickness direction of an elastic section is a tangential direction of an imaginary circle, and a cross section having high rigidity against bending causing other-axis interference can be formed by forming a top surface section through bending forming at the top end portion of the elastic section and forming a top surface section through bending forming at the bottom end, so it is preferable.

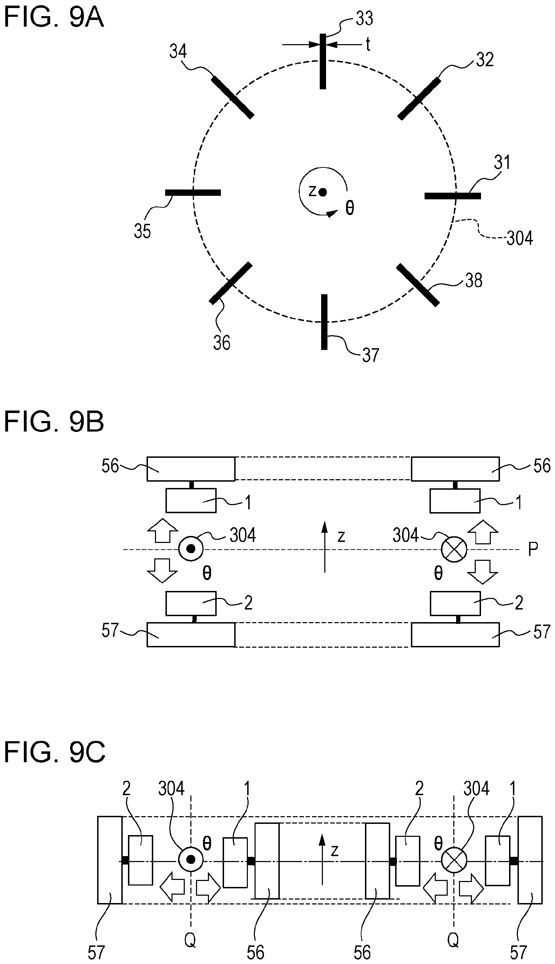

In Figs. 1 and 2, the plane P is assumed, and the imaginary circle 304 in the plane P has been studied. Here, a study will be made on the assumption of the imaginary circle 304. As shown in Fig. 9A, a configuration that the imaginary circle 304 passes through the elastic sections 31 to 38 and the elastic sections 31 to 38 in a plate-thickness (t) direction is preferable in forming a torque sensor. Therefore, as shown in Fig. 9A, it is possible to make considerations on the four or more (here, eight) elastic sections 31 to 38 with reference to the imaginary circle 304 passing through the elastic sections 31 to 38 in the plate-thickness directions. In other words, the imaginary circle 304 just needs to pass through at least four discretely disposed elastic sections 31 to 38 in the plate-thickness direction of each of the elastic sections 31 to 38. The at least four elastic sections 31 to 38 are discretely disposed along the imaginary circle 304. In Fig. 9A, the center of the imaginary circle 304 is defined as a Z axis, and a direction around the Z axis is defined as a θ direction. The four or more elastic sections 31 to 38 through which the imaginary circle 304 passes give a force applied to the structure 5 in the θ direction, that is, an appropriate deformation according to a torque to the structure 5.

When considered with reference to the imaginary circle 304, the top surface section 1 just needs to be provided on one side of the imaginary circle 304, and the bottom surface section 2 just needs to be provided on the other side of the imaginary circle 304. The reinforcement component 56 just needs to be provided on one side of the imaginary circle 304, and the reinforcement component 57 just needs to be provided on the other side of the imaginary circle 304. Then, the reinforcement component 56 and the top surface section 1 just need to be coupled to each other on one side of the imaginary circle 304, and the reinforcement component 57 and the bottom surface section 2 just need to be coupled to each other on the other side of the imaginary circle 304. Specifically, the top surface section 1 just needs to have a coupling portion with the reinforcement component 56 on one side of the imaginary circle 304, and the bottom surface section 2 just needs to have a coupling portion with the reinforcement component 57 on the other side of the imaginary circle 304. It is preferable that the top surface section 1 and the bottom surface section 2 be opposed to each other and the imaginary circle 304 be located between the top surface section 1 and the bottom surface section 2; however, the top surface section 1 and the bottom surface section 2 are not necessarily opposed to each other. It is preferable that the reinforcement component 56 and the reinforcement component 57 be opposed to each other and the imaginary circle 304 be located between the reinforcement component 56 and the reinforcement component 57; however, the reinforcement component 56 and the reinforcement component 57 do not necessarily need to be opposed to each other. The top surface section 1 has a coupling portion with the reinforcement component 56, and the bottom surface section 2 has a coupling portion with the reinforcement component 57, so the top surface section 1 and the bottom surface section 2 may be referred to as coupling surface sections. For example, the top surface section 1 may be referred to as first coupling surface section, and the bottom surface section 2 may be referred to as second coupling surface section. The first coupling surface section and the second coupling surface section may translate into a top surface section and a bottom surface section, translate into a front surface section and a back surface section, translate into an outer surface section and an inner surface section, translate into a right surface portion and a left surface portion, or translate into a front surface section and a rear surface portion, according to the positional relationship.

Fig. 9B is a schematic diagram when the imaginary circle 304 of Fig. 9A is viewed from the side. A first cross section of a part of the imaginary circle 304, heading toward the far side of the sheet, is shown on the right side of the Z axis, and a second cross section of a part of the imaginary circle 304, heading toward the near side of the sheet, is shown on the left side of the Z axis. A distance from the Z axis to the first cross section or the second cross section corresponds to the radius of the imaginary circle 304, and a distance from the first cross section to the second cross section corresponds to the diameter of the imaginary circle 304. One side and the other side of the imaginary circle 304 are respectively indicated by arrows. Here, one side and the other side of the imaginary circle 304 are divided in a direction parallel to the Z axis. In other words, a positive Z side (upper side) with respect to the plane P including the imaginary circle 304 is one side of the imaginary circle 304, and a negative Z side (lower side) with respect to the plane P including the imaginary circle 304 is the other side of the imaginary circle 304.

Fig. 9C is also a schematic diagram when the imaginary circle 304 of Fig. 9A is viewed from the side. In Fig. 9C as well, one side and the other side of the imaginary circle 304 are respectively indicated by arrows. The mode of Fig 9C differs from the mode of Fig. 9B in that one side and the other side of the imaginary circle 304 are divided in a direction orthogonal to the Z axis. In other words, an outer side with respect to a cylindrical plane Q including the imaginary circle 304 is one side of the imaginary circle 304, and an inner side with respect to the cylindrical plane Q including the imaginary circle 304 is the other side of the imaginary circle 304. Then, the reinforcement component 56 and the outer surface section 1 serving as a coupling surface section corresponding to the top surface section 1 in Fig. 9B can be provided on one side of the imaginary circle 304. The reinforcement component 57 and the inner surface section 2 serving as a coupling surface section corresponding to the bottom surface section 2 in Fig. 9B can be provided on the other side of the imaginary circle 304. As compared to the mode of Fig. 9A, in the mode of Fig. 9B, a distance from the central axis (Z axis) of the imaginary circle 304 to the outer surface section 1 is different from a distance from the central axis (Z axis) to the inner surface section 2. For this reason, a difference easily occurs between a displacement of the outer surface section 1 and the reinforcement component 56 and a displacement of the inner surface section 2 and the reinforcement component 57. Therefore, with a mode like Fig. 9A with high symmetry, torque detection accuracy is more easily controlled. Here, one side and the other side of the imaginary circle 304 are divided in a direction parallel to the Z axis in Fig. 9B and are divided in a direction perpendicular to the Z axis in Fig. 9C. Alternatively, one side and the other side of the imaginary circle 304 may be divided in a direction oblique to the Z-axis. In this case, an outer side with respect to a conical plane including the imaginary circle 304 is one side of the imaginary circle 304, and an inner side with respect to the conical plane including the imaginary circle 304 is the other side of the imaginary circle 304.

<First Embodiment>

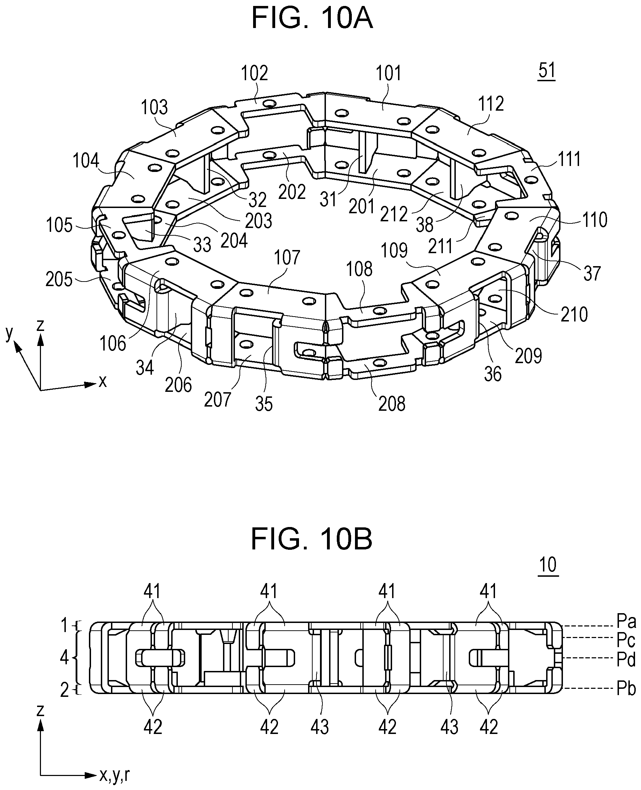

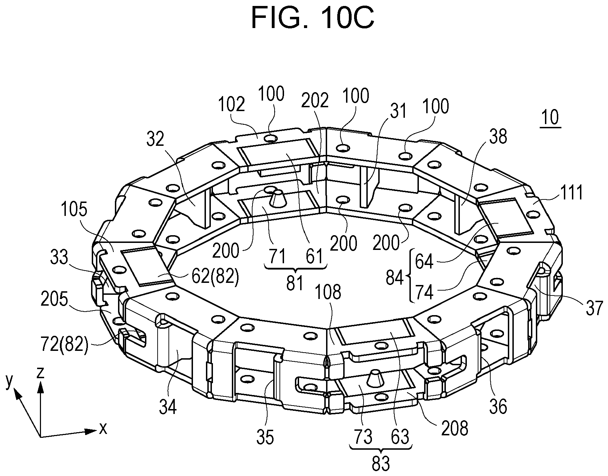

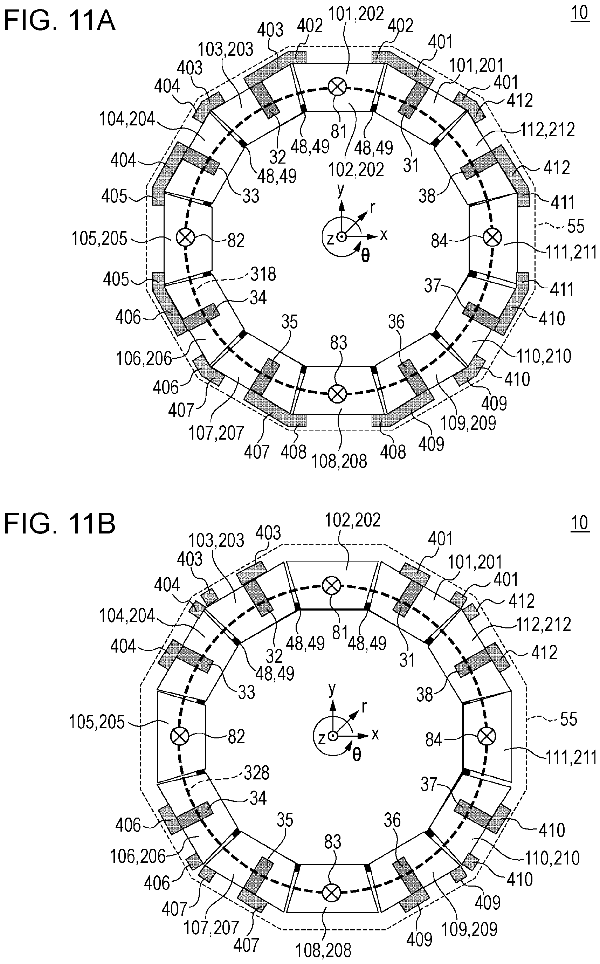

Fig. 10A is a perspective view of an example of one metal component 51 formed by bending a metal member. Fig. 10B is a side view of the example of the one metal component 51 formed by bending a metal member. Fig. 10B shows imaginary planes Pa, Pb, Pc, Pd parallel to one another. Fig. 10C is a perspective view of one example of a sensor 10 including the metal component 51 and a detector 8 (detecting units 81 to 84). Fig. 11A is a sectional view of the metal component 51, taken along the plane Pc, and shows the structure of the metal component 51 in the plane Pc.

Fig. 11B is a sectional view of the metal component 51, taken along the plane Pd, and shows the structure of the metal component 51 in the plane Pd.

The metal component 51 has a substantially regular M-gon outline 55 (see Figs. 11A and 11B) in plan view to the planes Pa, Pb, Pc, Pd and has a substantially regular dodecagon (that is, M = 12) outline 55 in this example. M can be greater than or equal to three, M may be four, M is preferably greater than or equal to five, and M is preferably less than or equal to 24. As M increases, the outline 55 of the metal component 51 approaches a circular shape, so the accuracy of detecting a displacement in the θ direction improves. However, as M increases, bending (described later) becomes more complicated, so $5 \leq M \leq 24$ is appropriate. M is preferably a multiple of 2 (even number) from the viewpoint of symmetry. Furthermore, from the viewpoint of symmetry in the x direction and in the y direction orthogonal to the x direction, M is more preferably a multiple of 4. To provide a shape close to a circular shape, M is preferably greater than or equal to six where the ratio of the circumference of a circle to its diameter is about three. When the above conditions are considered, M = 8, 12, 16 is preferable. In the following description, a natural number M can be read as a positive real number m ($M - 0.5 \leq m < M + 0.5$) that is rounded off to M.

As shown in Fig. 10B, the metal component 51 has a top surface section 1 and a bottom surface section 2 opposed to the top surface section 1. The top surface section 1 is provided in the plane Pa. The bottom surface section 2 is provided in the plane Pb. The metal component 51 has eight elastic sections 31 to 38. As shown in Fig. 11A, the eight elastic sections 31 to 38 are discretely disposed in the plane Pc. As shown in Fig. 11B, the eight elastic sections 31 to 38 are discretely disposed in the plane Pd. The eight elastic sections 31 to 38 disposed in the planes Pc, Pd are provided such that the planes Pc, Pd are located between the top surface section 1 and the bottom surface section 2.

As shown in Fig. 10B, the metal component 51 has a side surface section 4. The side surface section 4 connects with the top surface section 1 and the bottom surface section 2. The metal component 51 is bent by bending at connections 41 between the top surface section 1 and the side surface section 4. The metal component 51 is bent by bending at connections 42 between the bottom surface section 2 and the side surface section 4. Each of the elastic sections 31 to 38 connects with the side surface section 4, and the metal component 51 is bent by bending at a connection 43 between the side surface section 4 and each of the elastic sections 31 to 38.

The top surface section 1 shown in Fig. 10B is made up of a plurality of top plate portions 101, 102, 103, 104, 105, 106, 107, 108, 109, 110, 111, 112 arranged along the plane Pa as shown in Fig. 10A. The plurality of top plate portions 101 to 112 is disposed in the plane Pa. Figs. 11A and 11B show the positional relationship between the plurality of top plate portions 101 to 112 and the plurality of elastic sections 31 to 38 by superposing the plurality of top plate portions 101 to 112, disposed in the plane Pa, over the elastic sections 31 to 38.

As shown in Figs. 11A and 11B, of the plurality of top plate portions 101 to 112, two top plate portions adjacent to each other are joined with each other by a joint 48. The joint 48 may be, for example, a welding portion welding two top plate portions adjacent to each other or may be a bonding portion bonding two top plate portions adjacent to each other. For example, the top plate portion 101 and the top plate portion 102 of the plurality of top plate portions 101 to 112 are joined with each other by the joint 48 formed by welding. The top plate portion 102 and the top plate portion 103 of the plurality of top plate portions 101 to 112 are joined with each other by the joint 48 formed by welding. The top plate portion 103 and the top plate portion 104 of the plurality of top plate portions 101 to 112 are joined with each other by the joint 48 formed by welding.

The bottom surface section 2 shown in Fig. 10B is made up of a plurality of bottom plate portions 201, 202, 203, 204, 205, 206, 207, 208, 209, 210, 211, 212 arranged along the plane Pb as shown in Fig. 10A. The plurality of top plate portions 201 to 212 is disposed in the plane Pb. Figs. 11A and 11B show the positional relationship between the plurality of bottom plate portions 201 to 212 and the plurality of elastic sections 31 to 38 by superposing the plurality of bottom plate portions 201 to 212, disposed in the plane Pb, over the elastic sections 31 to 38.

As shown in Figs. 11A and 11B, of the plurality of bottom plate portions 201 to 212, two bottom plate portions adjacent to each other are joined with each other by a joint 49. The joint 49 may be, for example, a welding portion welding two bottom plate portions adjacent to each other or may be a bonding portion bonding two bottom plate portions adjacent to each other. For example, the bottom plate portion 201 and the bottom plate portion 202 of the plurality of bottom plate portions 201 to 212 are joined with each other by the joint 49 formed by welding. The bottom plate portion 202 and the bottom plate portion 203 of the plurality of bottom plate portions 201 to 212 are joined with each other by the joint 49 formed by welding. The bottom plate portion 203 and the bottom plate portion 204 of the plurality of bottom plate portions 201 to 212 are joined with each other by the joint 49 formed by welding.

The metal component 51 according to the present embodiment has a structure in which the mode of the metal component 51 shown in Fig. 6 is repeatedly disposed in an annular shape. In the mode shown in Fig. 10A, the elastic sections 31, 32 correspond to the elastic sections 31, 32 in Fig. 6, and the elastic sections 33 to 38 also correspond to the elastic sections 31, 32 in Fig. 6. For example, the elastic sections 31, 33, 35, 37 in the mode shown in Fig. 10A correspond to the elastic section 31 in Fig. 6, and the elastic sections 32, 34, 36, 38 in the mode shown in Fig. 10A correspond to the elastic section 32 in Fig. 6.

In the mode shown in Fig. 10A, the top plate portion 101 can correspond to the metal portion 11 in Fig. 6, the top plate portion 103 can correspond to the metal portion 12 in Fig. 6, and the top plate portion 102 can correspond to the metal portion 13 in Fig. 6. In the mode shown in Fig. 10A, the bottom plate portion 201 can correspond to the metal portion 21 in Fig. 6, the bottom plate portion 203 can correspond to the metal portion 22 in Fig. 6, and the bottom plate portion 202 can correspond to the metal portion 23 in Fig. 6. Similarly, the top plate portion 104 can correspond to the metal portion 11 in Fig. 6, the top plate portion 106 can correspond to the metal portion 12 in Fig. 6, and the top plate portion 105 can correspond to the metal portion 13 in Fig. 6. In the mode shown in Fig. 10A, the bottom plate portion 204 can correspond to the metal portion 21 in Fig. 6, the bottom plate portion 206 can correspond to the metal portion 22 in Fig. 6, and the bottom plate portion 205 can correspond to the metal portion 23 in Fig. 6. Similarly, the top plate portion 107 can correspond to the metal portion 11 in Fig. 6, the top plate portion 109 can correspond to the metal portion 12 in Fig. 6, and the top plate portion 108 can correspond to the metal portion 13 in Fig. 6. In the mode shown in Fig. 10A, the bottom plate portion 207 can correspond to the metal portion 21 in Fig. 6, the bottom plate portion 209 can correspond to the metal portion 22 in Fig. 6, and the bottom plate portion 208 can correspond to the metal portion 23 in Fig. 6. Similarly, the top plate portion 110 can correspond to the metal portion 11 in Fig. 6, the top plate portion 112 can correspond to the metal portion 12 in Fig. 6, and the top plate portion 111 can correspond to the metal portion 13 in Fig. 6. In the mode shown in Fig. 10A, the bottom plate portion 210 can correspond to the metal portion 21 in Fig. 6, the bottom plate portion 212 can correspond to the metal portion 22 in Fig. 6, and the bottom plate portion 211 can correspond to the metal portion 23 in Fig. 6.

As shown in Figs. 11A and 11B, the side surface section 4 shown in Fig. 10B is made up of a plurality of side plate portions 401, 402, 403, 404, 405, 406, 407, 408, 409, 410, 411, 412 arranged along the planes Pc, Pd. The plurality of side plate portions 401 to 412 is disposed in the planes Pc, Pd.

Of the plurality of side plate portions 401 to 412, two side plate portions adjacent to each other are connected with each other by a connection 44 (the reference sign is omitted in the drawing). The number of the connections 44 can be M or M - 1 (for example, M = 12). For example, the metal component 51 is bent by bending at the connection 44 between the side plate portion 401 and the side plate portion 402 of the plurality of side plate portions 401 to 412. The metal component 51 is bent by bending at the connection 44 between the side plate portion 402 and the side plate portion 403 of the plurality of side plate portions 401 to 412. The metal component 51 is bent by bending at the connection 44 between the side plate portion 403 and the side plate portion 404 of the plurality of side plate portions 401 to 412. The metal component 51 is bent by bending at the connection 44 between the side plate portion 411 and the side plate portion 412 of the plurality of side plate portions 401 to 412. The side plate portion 412 and the side plate portion 401 of the plurality of side plate portions 401 to 412 may be joined with each other by welding or the like at a joint between the side plate portion 412 and the side plate portion 401, or the side plate portion 412 and the side plate portion 401 may be separated.

Each of the plurality of top plate portions 101 to 112 and one of the plurality of side plate portions 401 to 412 adjacent to a corresponding one of the plurality of top plate portions 101 to 112 are connected by the connection 41 (see Fig. 10B). For example, the metal component 51 is bent by bending at the connection 41 between the side plate portion 401 and the top plate portion 101 of the plurality of top plate portions 101 to 112. The metal component 51 is bent by bending at the connection 41 between the side plate portion 402 and the top plate portion 102 of the plurality of top plate portions 101 to 112. The metal component 51 is bent by bending at the connection 41 between the side plate portion 403 and the top plate portion 103 of the plurality of top plate portions 101 to 112. The metal component 51 is bent by bending at the connection 41 between the side plate portion 404 and the top plate portion 104 of the plurality of top plate portions 101 to 112.

Each of the plurality of bottom plate portions 201 to 212 and one of the plurality of side plate portions 401 to 412 adjacent to a corresponding one of the plurality of bottom plate portions 201 to 212 are connected by the connection 42 (see Fig. 10B). For example, the metal component 51 is bent by bending at the connection 42 between the side plate portion 401 and the bottom plate portion 201 of the plurality of bottom plate portions 201 to 212. The metal component 51 is bent by bending at the connection 42 between the side plate portion 402 and the bottom plate portion 202 of the plurality of bottom plate portions 201 to 212. The metal component 51 is bent by bending at the connection 42 between the side plate portion 403 and the bottom plate portion 203 of the plurality of bottom plate portions 201 to 212. The metal component 51 is bent by bending at the connection 42 between the side plate portion 404 and the bottom plate portion 204 of the plurality of bottom plate portions 201 to 212.

As described above, in the metal component 51, two portions connected to each other via any one of the connections 41, 42, 43, 44 are bent at the connection therebetween. An angle formed between two portions is defined by an inferior angle of 0° to 180° or a superior angle of 180° to 360°. A bending angle between two portions is defined by an angle obtained by subtracting an inferior angle from 180°.

An inferior angle formed by two side plate portions connected to each other substantially coincides with the interior angle of a regular M-gon and is about $(180 - (360/M))°$. The inferior angle is an obtuse angle when $M \geq 5$, the inferior angle is 108° when $M = 5$, and the inferior angle is 150° when $M = 12$. When M is replaced with m ($M - 0.5 \leq m < M + 0.5$) where $M = 12$, an inferior angle formed between two side plate portions connected to each other ranges from 148.7° to 151.2°. An inferior angle formed between each of the top plate portions 101 to 112 and a corresponding one of the side plate portions 401 to 412, connected to each other, and an inferior angle formed between each of the bottom plate portions 201 to 212 and a corresponding one of the side plate portions 401 to 412, connected to each other, are typically right angle (90°) and may range from 80° to 100°.

Therefore, where M ≥ 5, an inferior angle formed between two side plate portions connected to each other is larger than an inferior angle formed between each of the top plate portions 101 to 112 and a corresponding one of the side plate portions 401 to 412, connected to each other, and is larger than an inferior angle formed between each of the bottom plate portions 201 to 212 and a corresponding one of the side plate portions 401 to 412, connected to each other. For example, an inferior angle formed between the side plate portion 401 and the side plate portion 402 is larger than an inferior angle formed between the top plate portion 101 and the side plate portion 401 and is larger than an inferior angle formed between the top plate portion 102 and the side plate portion 402. An inferior angle formed between the side plate portion 401 and the side plate portion 402 is larger than an angle formed between the bottom plate portion 201 and the side plate portion 401 and is larger than an angle formed between the bottom plate portion 202 and the side plate portion 402. An inferior angle formed between the side plate portion 402 and the side plate portion 403 is larger than an inferior angle formed between the top plate portion 102 and the side plate portion 402 and is larger than an inferior angle formed between the top plate portion 103 and the side plate portion 403. An inferior angle formed between the side plate portion 402 and the side plate portion 403 is larger than an angle formed between the bottom plate portion 202 and the side plate portion 402 and is larger than an angle formed between the bottom plate portion 203 and the side plate portion 403.

As shown in Fig. 11A, the eight elastic sections 31 to 38 are disposed in the plane Pc such that an imaginary circle 318 passes through the eight elastic sections 31 to 38. As shown in Fig. 11B, the eight elastic sections 31 to 38 are disposed in the plane Pd such that an imaginary circle 328 passes through the eight elastic sections 31 to 38.

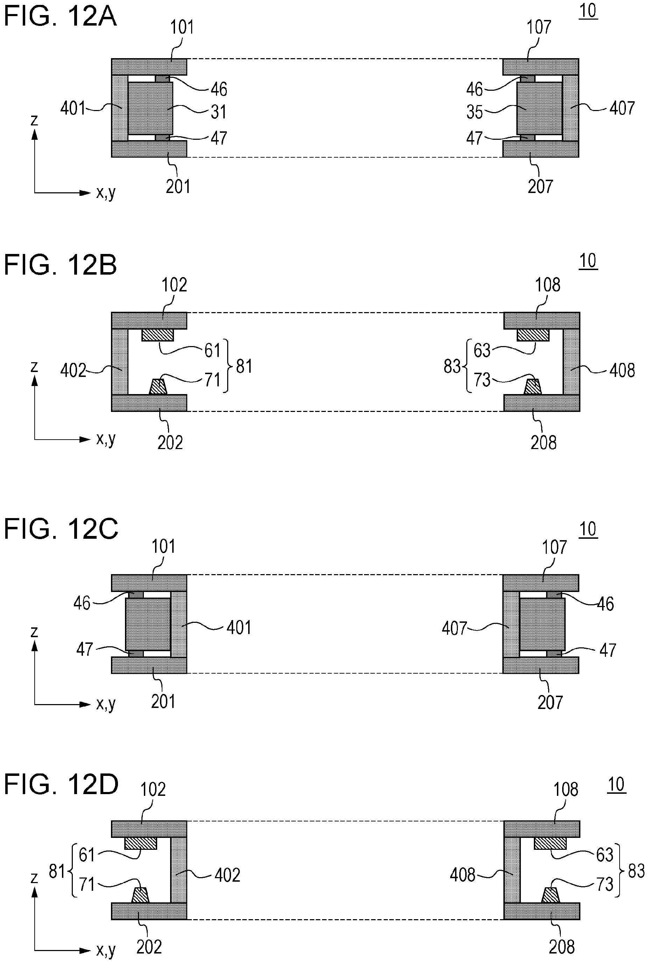

Fig. 12A is a sectional view, including the elastic sections 31, 35, of the sensor 10 shown in Figs. 10A to 10C, 11A and 11B.

The elastic section 31 is provided under the top plate portion 101 such that the elastic section 31 overlaps the top plate portion 101 in the z direction. The elastic section 31 is provided over the bottom plate portion 201 such that the elastic section 31 overlaps the bottom plate portion 201 in the z direction. The elastic section 31 is provided between the top plate portion 101 and the bottom plate portion 201, opposed to each other.

The elastic section 35 is provided under the top plate portion 107 such that the elastic section 35 overlaps the top plate portion 107 in the z direction. The elastic section 35 is provided over the bottom plate portion 207 such that the elastic section 35 overlaps the bottom plate portion 207 in the z direction. The elastic section 35 is provided between the top plate portion 107 and the bottom plate portion 207, opposed to each other.

In Figs. 10A to 10C, 11A, and 11B as well, the elastic section 32 is provided under the top plate portion 103 such that the elastic section 32 overlaps the top plate portion 103 in the z direction. The elastic section 32 is provided over the bottom plate portion 203 such that the elastic section 32 overlaps the bottom plate portion 203 in the z direction. The elastic section 32 is provided between the top plate portion 103 and the bottom plate portion 203, opposed to each other.

In Figs. 10A to 10C, 11A, and 11B as well, the elastic section 33 is provided under the top plate portion 104 such that the elastic section 33 overlaps the top plate portion 104 in the z direction. The elastic section 33 is provided over the bottom plate portion 204 such that the elastic section 33 overlaps the bottom plate portion 204 in the z direction. The elastic section 33 is provided between the top plate portion 104 and the bottom plate portion 204, opposed to each other.

Similarly, each of the elastic sections 34 to 38 overlaps a corresponding one of the top plate portions 106, 107, 109, 110, 112 and overlaps a corresponding one of the bottom plate portions 206, 207, 209, 210, 212.

As shown in Fig. 12A, each of the elastic sections 31 to 38 is joined with the top surface section 1 by a joint 46. The joint 46 may be, for example, a welding portion welding the top surface section 1 with each of the elastic sections 31 to 38, adjacent to each other, or may be a bonding portion bonding the top surface section 1 to each of the elastic sections 31 to 38, adjacent to each other. For example, the elastic section 31 and the top plate portion 101 that overlap each other are joined with each other by the joint 46 formed by welding. The elastic section 35 and the top plate portion 107 that overlap each other are joined with each other by the joint 46 formed by welding. Similarly, each of the elastic sections 32 to 34, 36 to 38 and a corresponding one of the top plate portions 103, 104, 106, 109, 110, 112, which overlaps the elastic section, are joined with each other by the joint 46.

As shown in Fig. 12A, each of the elastic sections 31 to 38 is joined with the bottom surface section 2 by a joint 47. The joint 47 may be, for example, a welding portion welding the bottom surface section 2 with each of the elastic sections 31 to 38, adjacent to each other, or may be a bonding portion bonding the bottom surface section 2 to each of the elastic sections 31 to 38, adjacent to each other. For example, the elastic section 31 and the bottom plate portion 201 that overlap each other are joined with each other by the joint 47 formed by welding. The elastic section 35 and the bottom plate portion 207 that overlap each other are joined with each other by the joint 47 formed by welding. Similarly, each of the elastic sections 32 to 34, 36 to 38 and a corresponding one of the bottom plate portions 203, 204, 206, 209, 210, 212, which overlaps the elastic section, are joined with each other by the joint 47.

Fig. 12B is a sectional view, including the detecting units 81, 83, of the sensor 10 shown in Figs. 10B, 11A, and 11B. As shown in Figs. 10C and 12B, the component 61 of the detecting unit 81 is fixed to the top plate portion 102, and the component 71 of the detecting unit 81 is fixed to the bottom plate portion 202. The component 62 of the detecting unit 82 is fixed to the top plate portion 105, and the component 72 of the detecting unit 82 is fixed to the bottom plate portion 205. The component 63 of the detecting unit 83 is fixed to the top plate portion 108, and the component 73 of the detecting unit 83 is fixed to the bottom plate portion 208. The component 64 of the detecting unit 84 is fixed to the top plate portion 111, and the component 74 of the detecting unit 84 is fixed to the bottom plate portion 211. Each of the components 61 to 64 is fixed to the structure 5 (for example, the top surface section 1) by, for example, adhesive. Each of the components 71 to 74 is also fixed to the structure 5 (for example, the bottom surface section 2) by, for example, adhesive.

As is apparent from Figs. 10A to 10C, 11A, 11B, 12A, and 12B, the side surface section 4 may make up the outer side surface of the metal component 51. Therefore, as shown in Fig. 12A, for example, the elastic section 31 and the elastic section 35 can be located between the side plate portion 401 and the side plate portion 407. The distance between the elastic section 31 and the elastic section 35 is less than the distance between the side plate portion 401 and the side plate portion 407. As shown in Fig. 12C, for example, the detecting unit 81 and the detecting unit 83 can be located between the side plate portion 402 and the side plate portion 408.

In another mode, the side surface section 4 may make up the inner side surface of the metal component 51. Therefore, as shown in Fig. 12C, for example, the side plate portion 401 and the side plate portion 407 can be located between the elastic section 31 and the elastic section 35. The distance between the elastic section 31 and the elastic section 35 may be greater than the distance between the side plate portion 401 and the side plate portion 407. As shown in Fig. 12D, for example, the side plate portion 402 and the side plate portion 408 can be located between the detecting unit 81 and the detecting unit 83.

Here, the mode in which the component 6 is fixed to the top surface section 1, the component 7 is fixed to the bottom surface section 2, and the component 6 and the component 7 are opposed to each other in the z direction has been described. However, the component 6 and the component 7 just need to be relatively displaced as a result of a deformation of the structure 5, and, for example, the component 6 and the component 7 may be opposed to each other in the r direction. In this case, for example, an inner side surface section and an outer side surface section may be provided, one of the component 6 and the component 7 may be fixed to the inner side surface section, and the other one of the component 6 and the component 7 may be fixed to the outer side surface section. Alternatively, the component 6 and the component 7 may be opposed to each other in the θ direction. Alternatively, the components 6, 7 may be fixed to a component (for example, a reinforcement component (described later)) of the structure 5, different from a metal component having the elastic section group 3. Alternatively, one of the components 6, 7 may be fixed to a component (for example, a link (described later)) outside the sensor 10, and the other one of the components 6, 7 may be fixed to the sensor 10.

In the above-described mode, the description has been made on the assumption that the detection target force is a force in the θ direction (circumferential direction), so the top surface section 1, the bottom surface section 2, and the side surface section 4, which are portions of the structure 5, other than the elastic sections 31 to 38 of the structure 5, can function as rigid sections. However, when, for example, a force in the x direction, the y direction, or the r direction is set for a detection target force, the side surface section 4 can function as an elastic section, and portions described as the elastic sections 31 to 38 can function as rigid sections. When a force in the z direction is set for a detection target force, portions described as the elastic sections 31 to 38 and the side surface section 4 can function as elastic sections.

As shown in Fig. 10C, the top surface section 1 (top plate portions 101 to 112) has holes 100. The bottom surface section 2 (bottom plate portions 201 to 212) has holes 200. The holes 100, 200 are used to couple a metal component, another component (for example, a link or a reinforcement component (described later)), and the sensor 10 with one another. For example, a threaded groove is formed on the inner surface of each of the holes 100, 200, screws extending through another component are screwed to the holes 100, 200, and the another component is fastened to the metal component 51. Alternatively, bolts extending through another component extend through the holes 100, 200 and screwed to nuts separately provided, and the another component is fastened to the metal component 51 by bolts and nuts.

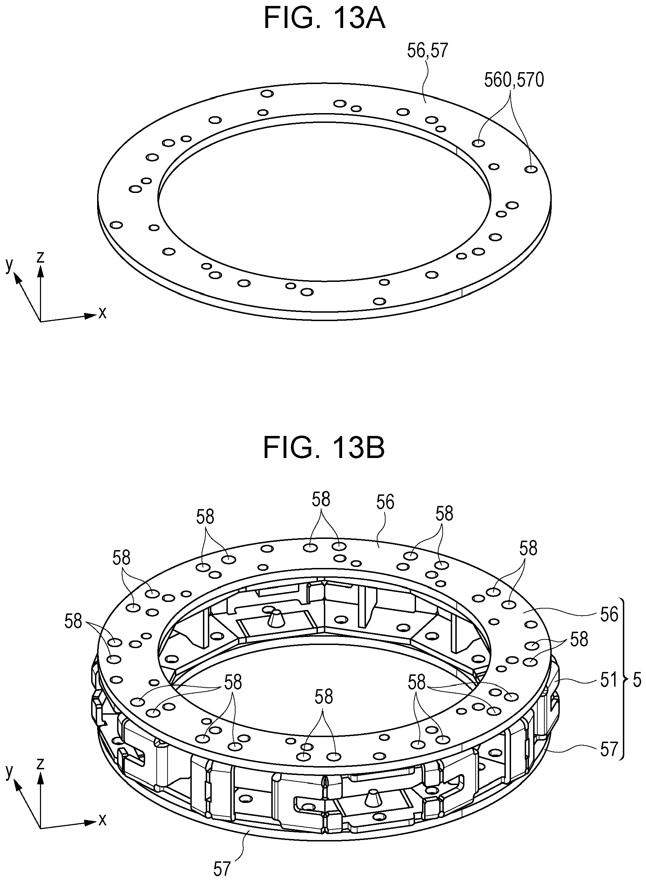

The structure 5 of the sensor 10 shown in Fig. 13B can include a reinforcement component 56 shown in Fig. 13A in addition to the metal component 51. The reinforcement component 56 overlaps a plurality of elastic sections of at least four elastic sections included in the elastic section group 3. The reinforcement component 56 is coupled to the metal component 51, and the reinforcement component 56 can be typically coupled to the top surface section 1 of the metal component 51. The structure 5 of the sensor 10 can include a reinforcement component 57 shown in Fig. 13A in addition to the metal component 51. The reinforcement component 57 overlaps a plurality of elastic sections of at least four elastic sections included in the elastic section group 3. The reinforcement component 57 is coupled to the metal component 51, and the reinforcement component 57 can be typically coupled to the bottom surface section 2 of the metal component 51. In this example, the reinforcement components 56, 57 have substantially the same shape as shown in Fig. 13A.

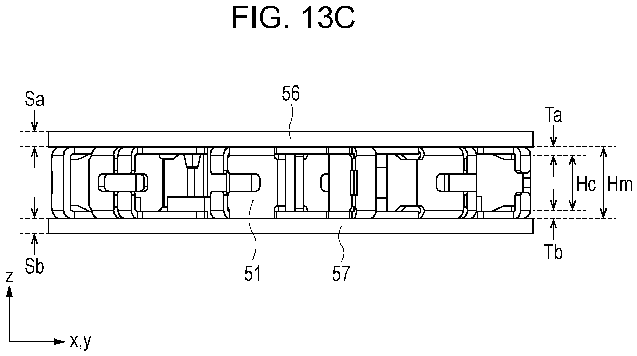

The metal component 51 is disposed between the reinforcement component 56 and the reinforcement component 57 and is coupled to the reinforcement component 56 and the reinforcement component 57. The plane shape of the metal component 51 is substantially an annular shape (regular M-gon), and the reinforcement components 56, 57 also have a substantially annular shape as shown in Fig. 13A. As shown in Fig. 13C, the annular reinforcement component 56 and the annular reinforcement component 57 are disposed so as to sandwich the annular metal component 51.

The metal component 51 according to the present embodiment has a structure in which the mode of the reinforcement components 56, 57 shown in Fig. 6 is repeatedly disposed in an annular shape. In the mode shown in Fig. 13B, a portion of the reinforcement component 56, overlapping the top plate portion 101 (which corresponds to the metal portion 11), can correspond to the overlapping portion 561, and a portion of the reinforcement component 56, overlapping the top plate portion 103 (which corresponds to the metal portion 12), can correspond to the overlapping portion 562. A portion of the reinforcement component 56, overlapping the top plate portion 102 (which corresponds to the metal portion 13), can correspond to the relay portion 563. A portion of the reinforcement component 57, overlapping the bottom plate portion 201 (which corresponds to the metal portion 21), can correspond to the overlapping portion 571, and a portion of the reinforcement component 57, overlapping the bottom plate portion 203 (which corresponds to the metal portion 22), can correspond to the overlapping portion 572. A portion of the reinforcement component 57, overlapping the bottom plate portion 202 (which corresponds to the metal portion 23), can correspond to the relay portion 573. In the mode shown in Fig. 13B, a portion of the reinforcement component 56, overlapping the top plate portion 104 (which corresponds to the metal portion 11), can correspond to the overlapping portion 561, and a portion of the reinforcement component 56, overlapping the top plate portion 106 (which corresponds to the metal portion 12), can correspond to the overlapping portion 562. A portion of the reinforcement component 56, overlapping the top plate portion 105 (which corresponds to the metal portion 13), can correspond to the relay portion 563. A portion of the reinforcement component 57, overlapping the bottom plate portion 204 (which corresponds to the metal portion 21), can correspond to the overlapping portion 571, and a portion of the reinforcement component 57, overlapping the bottom plate portion 206 (which corresponds to the metal portion 22), can correspond to the overlapping portion 572. A portion of the reinforcement component 57, overlapping the bottom plate portion 205 (which corresponds to the metal portion 23), can correspond to the relay portion 573. In the mode shown in Fig. 13B, a portion of the reinforcement component 56, overlapping the top plate portion 107 (which corresponds to the metal portion 11), can correspond to the overlapping portion 561, and a portion of the reinforcement component 56, overlapping the top plate portion 109 (which corresponds to the metal portion 12), can correspond to the overlapping portion 562. A portion of the reinforcement component 56, overlapping the top plate portion 108 (which corresponds to the metal portion 13), can correspond to the relay portion 563. A portion of the reinforcement component 57, overlapping the bottom plate portion 207 (which corresponds to the metal portion 21), can correspond to the overlapping portion 571, and a portion of the reinforcement component 57, overlapping the bottom plate portion 209 (which corresponds to the metal portion 22), can correspond to the overlapping portion 572. A portion of the reinforcement component 57, overlapping the bottom plate portion 208 (which corresponds to the metal portion 23), can correspond to the relay portion 573. In the mode shown in Fig. 13B, a portion of the reinforcement component 56, overlapping the top plate portion 110 (which corresponds to the metal portion 11), can correspond to the overlapping portion 561, and a portion of the reinforcement component 56 overlapping the top plate portion 112 (which corresponds to the metal portion 12), can correspond to the overlapping portion 562. A portion of the reinforcement component 56, overlapping the top plate portion 111 (which corresponds to the metal portion 13), can correspond to the relay portion 563. A portion of the reinforcement component 57, overlapping the bottom plate portion 210 (which corresponds to the metal portion 21), can correspond to the overlapping portion 571, and a portion of the reinforcement component 57, overlapping the bottom plate portion 212 (which corresponds to the metal portion 22), can correspond to the overlapping portion 572. A portion of the reinforcement component 57, overlapping the bottom plate portion 211 (which corresponds to the metal portion 23), can correspond to the relay portion 573. A portion of the reinforcement component 56, overlapping any one of the top plate portions 101, 103, 104, 106, 107, 110, 112, also serves as the extended portion 564 or the extended portion 565 (see Fig. 6). A portion of the reinforcement component 57, overlapping any one of the bottom plate portions 201, 203, 204, 206, 207, 210, 212, also serves as the extended portion 574 or the extended portion 575 (see Fig. 6).

Fig. 13C shows the thickness Ta of the top surface section 1, the thickness Tb of the bottom surface section 2, the height Hc of the side surface section 4, and the height Hm of the metal component 51. Here, the height Hm is the sum of the thickness Ta, the thickness Tb, and the height Hc (Hm = Ta + Tb + Hc). Each of the thickness Ta of the top surface section 1 and the thickness Tb of the bottom surface section 2 corresponds to the thickness Tm of the metal member 50 (metal plate). Each of the thickness of the side surface section 4 and the thickness of each of the elastic sections 31 to 38 also corresponds to the thickness Tm of the metal member (sheet metal). Typically, each of the thickness Ta and the thickness Tb is less than the height Hc (Ta & Tb < Hc). In this way, by extending the height Hc of the side surface section 4 as compared to each of the thickness Ta of the top surface section 1 and the thickness Tb of the bottom surface section 2, the rigidity of the metal component 51 against a detection target force is decreased. Each of the thickness Ta and the thickness Tb, for example, ranges from 0.4 mm to 3.2 mm and typically ranges from 1.0 mm to 2.5 mm. The height Hc, for example, ranges from 5 mm to 20 mm and typically ranges from 10 mm to 15 mm. The height Hm, for example, ranges from 6 mm to 26 mm and typically ranges from 12 mm to 19 mm.

Fig. 13C shows the thickness Sa of the reinforcement component 56 and the thickness Sb of the reinforcement component 57. The thickness Sa of the reinforcement component 56 is preferably greater than the thickness Ta of the top surface section 1 (Sa > Ta). The thickness Sb of the reinforcement component 57 is preferably greater than the thickness Tb of the bottom surface section 2 (Sb > Tb). In this way, by reducing the thickness of each of the top surface section 1 and the bottom surface section 2 as compared to the reinforcement components 56, 57, the workability (ease of bending) of the metal component 51 is improved while the rigidity of the structure 5 is ensured with the reinforcement components 56, 57. To achieve the above, each of the thicknesses Sa, Sb of the reinforcement components 56, 57 can be greater than the thickness Tm of the metal member 50 (Sa & Sb > Tm). Each of the thickness Sa of the reinforcement component 56 and the thickness Sb of the reinforcement component 57 is preferably less than the height Hm of the metal component 51 (Sa & Sb < Hm). Each of the thickness Sa of the reinforcement component 56 and the thickness Sb of the reinforcement component 57 is preferably less than the height Hc of the side surface section 4 (Sa & Sb < Hc). In this way, by extending the height Hm of the metal component 51 and the height Hc of the side surface section 4 as compared to the thicknesses Sa, Sb of the reinforcement components 56, 57, the rigidity of the metal component 51 against a detection target force is decreased. The height Hm of the metal component 51 substantially corresponds to the distance between the reinforcement component 56 and the reinforcement component 57 at a portion sandwiching any one of the elastic sections 31 to 38. Therefore, each of the thicknesses Sa, Sb of the reinforcement components 56, 57 may be less than the distance between the reinforcement component 56 and the reinforcement component 57. Each of the thickness Sa and the thickness Sb, for example, ranges from 1.0 mm to 5.0 mm and typically ranges from 1.5 mm to 3.0 mm. When the above-described conditions are generalized, the relationship Ta & Tb & Tm < Sa & Sb < Hc < Hm is preferably satisfied.

The thickness Ta of the top surface section 1 shown in Fig. 13C corresponds to each of the thicknesses T3, T5, T6 in Fig. 6, and the thickness Tb of the bottom surface section 2 corresponds to each of the thicknesses T4, T7, T8 in Fig. 6. The thickness Sa of the reinforcement component 56 shown in Fig. 13C corresponds to each of the thicknesses S1, S2, S5, S7, S8 in Fig. 6, and the thickness Sb of the reinforcement component 57 corresponds to each of the thicknesses S3, S4, S6, S9, S10 in Fig. 6. The thickness Tm of each of the elastic sections of the elastic section group 3 corresponds to each of the thicknesses T1, T2 in Fig. 6.

The material of the reinforcement components 56, 57 is preferably a material that ensures a desired rigidity. A metal material, a ceramic material, a glass material, a plastic material, or the like may be used. A metal material with a high ductility is more preferable than a ceramic material or a glass material with a high brittleness. A metal material used for the reinforcement components 56, 57 is an elemental metal or a mixture (alloy) of metals. The reinforcement components 56, 57 may be the ones obtained by plating a base material made of a metal material. To ensure the rigidity of the structure 5, the reinforcement components 56, 57 are preferably hard and are preferably, for example, a metal material with a Vickers hardness of 90 HV or higher. Iron alloys (steels), such as carbon steels and alloy steels, aluminum alloys, titanium alloys, and the like may be used as the material of the reinforcement components 56, 57. In terms of a material cost, iron alloys are suitable. Alloy steels, particularly, stainless steels (SUS) are suitable as the metal material of the reinforcement components 56, 57. For example, a stainless steel with magnetism can be used for the reinforcement components 56, 57. Since each of the reinforcement components 56, 57 has a simpler structure than the metal component 51 having the elastic sections 31 to 38, the reinforcement components 56, 57 can be prepared at low cost by a method, such as machining and casting.

When the metal component 51 has the eight elastic sections 31 to 38, the reinforcement components 56, 57 can overlap the eight elastic sections 31 to 38. The reinforcement components 56, 57 do not need to overlap all the elastic sections included in the elastic section group 3, and the elastic sections that the reinforcement component 56 overlaps do not need to completely coincide with the elastic sections that the reinforcement component 57 overlaps.

The reinforcement component 56 and the top surface section 1 are joined with each other by joints 58 shown in Fig. 13B. Each of the joints 58 may be, for example, a welding portion welding the top surface section 1 with the reinforcement component 56 or may be, for example, a bonding portion bonding the top surface section 1 with the reinforcement component 56. The reinforcement component 57 and the bottom surface section 2 are joined with each other by joints 59 (not shown) as in the case of the joints 58. Each of the joints 59 may be, for example, a welding portion welding the bottom surface section 2 with the reinforcement component 57 or may be, for example, a bonding portion bonding the bottom plate portion 2 with the reinforcement component 57.

The joints 58 join the top plate portions 101, 103, 104, 106, 107, 109, 110, 112, overlapping the elastic sections 31 to 38, with the reinforcement component 56. As described above, the elastic sections 31 to 38 are joined with the top plate portions 101, 103, 104, 106, 107, 109, 110, 112 by the joints 46. Therefore, the reinforcement component 56 is coupled to the elastic sections 31 to 38 via the top plate portions 101, 103, 104, 106, 107, 109, 110, 112 by the joints 46, 58. The joints 58 join the top plate portions 102, 105, 108, 111, to which the components 61 to 64 are fixed, with the reinforcement component 56. Therefore, the reinforcement component 56 is coupled to the components 61 to 64 via the top plate portions 102, 105, 108, 111 by the joints 58.

Similarly, the joints 59 join the bottom plate portions 201, 203, 204, 206, 207, 209, 210, 212, which overlap the elastic sections 31 to 38, with the reinforcement component 57. As described above, the elastic sections 31 to 38 are joined with the bottom plate portions 201, 203, 204, 206, 207, 209, 210, 212 by the joints 47. Therefore, the reinforcement component 57 is coupled to the elastic sections 31 to 38 via the bottom plate portions 201, 203, 204, 206, 207, 209, 210, 212 by the joints 47, 59. The joints 59 join the bottom plate portions 202, 205, 208, 211, to which the components 71 to 74 are fixed, with the reinforcement component 57. Therefore, the reinforcement component 57 is coupled to the components 71 to 74 via the bottom plate portions 202, 205, 208, 211 by the joints 59. In this way, since the reinforcement components 56, 57 are coupled to the elastic sections 31 to 38 or the detecting units 81 to 84, the detection accuracy of the sensor 10 increases.

At least any one of the components 61, 71 of the detecting unit 81, any one of the components 62, 72 of the detecting unit 82, any one of the components 63, 73 of the detecting unit 83, or any one of the components 64, 74 of the detecting unit 84 may be fixed to the reinforcement component 56 or the reinforcement component 57. In this case, at least any one of the components 61, 71, any one of the components 62, 72, any one of the components 63, 73, or any one of the components 64, 74 may be directly bonded to the reinforcement component 56 or the reinforcement component 57 or may be directly bonded to a supporting component fixed to the reinforcement component 56 or the reinforcement component 57.

As shown in Fig. 13A, the reinforcement component 56 has holes 560, and the reinforcement component 57 has holes 570. The holes 560, 570 are used to couple the structure 5, another component (for example, a link (described later) or the metal component 51), and the sensor 10 with one another. For example, a threaded groove is formed on the inner surface of each of the holes 560, 570, screws extending through another component are screwed to the holes 560, 570, and the another component is fastened to the reinforcement component. In this case, of the screws screwed to the holes 560, 570, portions projecting from the reinforcement components 56, 57 (holes 560, 570) may be accommodated in the holes 100, 200 of the metal component 51. Alternatively, bolts extending through another component extend through the holes 560, 570 and are screwed to nuts separately provided, and the another component is fastened to the reinforcement component 56 or the reinforcement component 57 by bolts and nuts. Alternatively, screws extending through another component extend through the holes 560, 570 and are screwed to the holes 100, 200 of the metal component 51, and the another component can be fastened to the reinforcement component 56 or the reinforcement component 57 by screws. Each of the holes 560 of the reinforcement component 56 and a corresponding one of the holes 100 of the top surface section 1 are aligned with each other, and a screw or a bolt can be inserted through both holes. Each of the holes 570 of the reinforcement component 57 and a corresponding one of the holes 200 of the bottom surface section 2 are aligned with each other, and a screw or a bolt can be inserted through both holes.

For example, an electrolytic zinc-coated steel (SECC) with a thickness Tm of 1.6 mm is subjected to punching and bending to set the inside diameter (diameter) of the metal component 51 to 78 mm, the outside diameter (diameter) to 106 mm, the thickness Hm to 15.6 mm, and the height Hc to 12.4 mm. The thickness of each of the top surface section, the bottom surface section, and the side surface section is 1.6 mm. The inside diameter (diameter) of each of the reinforcement components 56, 57 is set to 78 mm, the outside diameter (diameter) is set to 106 mm, and each of the thicknesses Sa, Sb is set to 2.3 mm. The elastic constants of each of the metal component 51 and the reinforcement components 56, 57 are set to a Young's modulus of 195 [GPa] and a Poisson's ratio of 0.29. Under the above conditions, the rigidity Gb against other-axis bending moment is Gb = 169 [kNm/rad] in the mode of Fig. 10C and Gb = 591 [kNm/rad] in the mode of Fig. 13B by using a finite element method. In this way, by the addition of the reinforcement components 56, 57, the rigidity becomes about 3.5 times, so it appears that the effect of reducing other-axis interference is large. For the physical properties of the reinforcement components 56, 57, the specific electric resistivity is higher than or equal to 75 $\mu\Omega\cdot$cm and lower than or equal to 85 $\mu\Omega\cdot$cm at room temperature, and the thermal conductivity is higher than or equal to 0.0340 cal/cm·sec·°C and lower than or equal to 0.0540 cal/cm·sec·°C at 100°C. The thermal expansion coefficient of each of the reinforcement components 56, 57 is higher than or equal to $9.8 \times 10^{-6}$/°C and lower than or equal to $11.8 \times 10^{-6}$/°C. The elastic modulus is higher than or equal to $10.0 \times 10^3$ kg/mm$^2$ and lower than or equal to $30.0 \times 10^3$ kg/mm$^2$. Each of the reinforcement components 56, 57 contains copper and niobium.

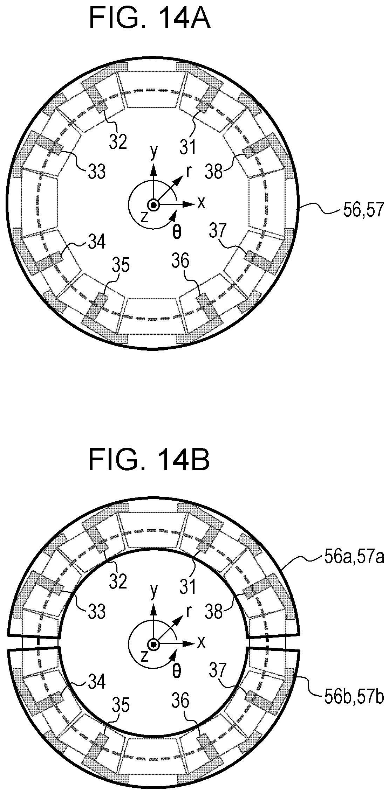

Another mode in which the structure 5 includes reinforcement components 56, 57 will be described with reference to Figs. 14A to 14D.

Fig. 14A is a plan view showing an overlap between the metal component 51 and the reinforcement components 56, 57 when viewed in the Z direction. The reinforcement components 56, 57 shown in Fig. 14A have a disc shape. The disc-shaped reinforcement components 56, 57 overlap the eight elastic sections 31 to 38. When the reinforcement components 56, 57 have a disc shape, the rigidity of the reinforcement components 56, 57 improves, and the rigidity of the structure 5 also improves, as compared to the case where the reinforcement components 56, 57 have an annular shape. The reinforcement component 56 and the reinforcement component 57 overlap each other at portions that do not overlap the metal component 51 (portions sandwiching a portion surrounded by the metal component 51).

Fig. 14B shows a mode in which the reinforcement component 56 shown in Fig. 13A is divided into a plurality of reinforcement components 56a, 56b and the reinforcement component 57 shown in Fig. 13A is divided into a plurality of reinforcement components 57a, 57b. The structure 5 of the sensor 10 includes four reinforcement components, that is, the two reinforcement components 56a, 56b coupled to the top surface section 1 of the metal component 51 and two reinforcement components 57a, 57b coupled to the bottom surface section 2 of the metal component 51. The reinforcement components 56a, 57a overlap the four elastic sections 31 to 33, 38 of the eight elastic sections 31 to 38. The four elastic sections 31 to 33, 38 are provided between the reinforcement component 56a and the reinforcement component 57a. The reinforcement components 56b, 57b overlap the four elastic sections 34 to 37 of the eight elastic sections 31 to 38. The four elastic sections 34 to 37 are provided between the reinforcement component 56b and the reinforcement component 57b.

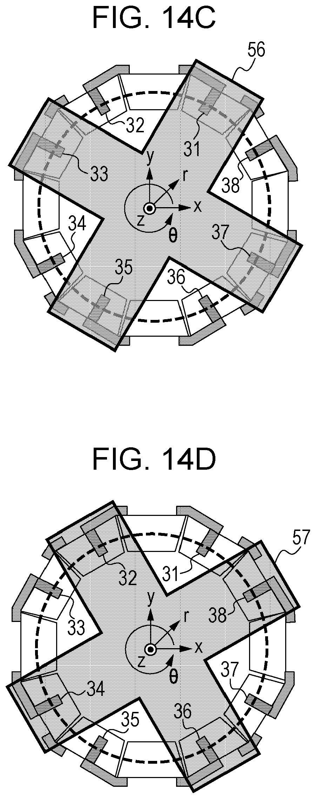

Figs. 14C and 14D each show a mode in which cross reinforcement components 56, 57 are used. The reinforcement component 56 overlaps the elastic sections 31, 33, 35, 37 and does not overlap the elastic sections 32, 34, 36, 38. The reinforcement component 57 overlaps the elastic sections 32, 34, 36, 38 and does not overlap the elastic sections 31, 33, 35, 37. The reinforcement component 56 and the reinforcement component 57 overlap each other at portions that do not overlap the metal component 51.

In Fig. 14C, a portion of the reinforcement component 56, connecting a portion overlapping the elastic section 31 (which corresponds to the overlapping portion 561) with a portion overlapping the elastic section 35 (which corresponds to the overlapping portion 562) in the r direction (radial direction), corresponds to the relay portion 563. A portion of the reinforcement component 56, connecting a portion overlapping the elastic section 33 (which corresponds to the overlapping portion 561) with a portion overlapping the elastic section 37 (which corresponds to the overlapping portion 562) in the r direction (radial direction), corresponds to the relay portion 563. In Fig. 14D, a portion of the reinforcement component 57, connecting a portion overlapping the elastic section 32 (which corresponds to the overlapping portion 571) with a portion overlapping the elastic section 36 (which corresponds to the overlapping portion 572) in the r direction (radial direction), corresponds to the relay portion 573. A portion of the reinforcement component 57, connecting a portion overlapping the elastic section 34 (which corresponds to the overlapping portion 571) with a portion overlapping the elastic section 38 (which corresponds to the overlapping portion 572) in the r direction (radial direction), corresponds to the relay portion 573. A portion of the reinforcement component 56, corresponding to the relay portion 563, and a portion of the reinforcement component 57, corresponding to the relay portion 573, overlap each other in the z direction, and the metal component 51 is not located therebetween.

The outline of each of the reinforcement components 56, 57 may be substantially the same as the outline 55 of the metal component 51 or may be different from the outline 55 of the metal component 51. In this example, the outline 55 of the metal component 51 is substantially regular dodecagon, and the outline of each of the reinforcement components 56, 57 is circular. Extended portions that the reinforcement components 56, 57 are extended outward from the outline 55 of the metal component 51 may be provided. For example, the components 6, 7 of the detector 8 may be fixed to the extended portions of the reinforcement components 56, 57.

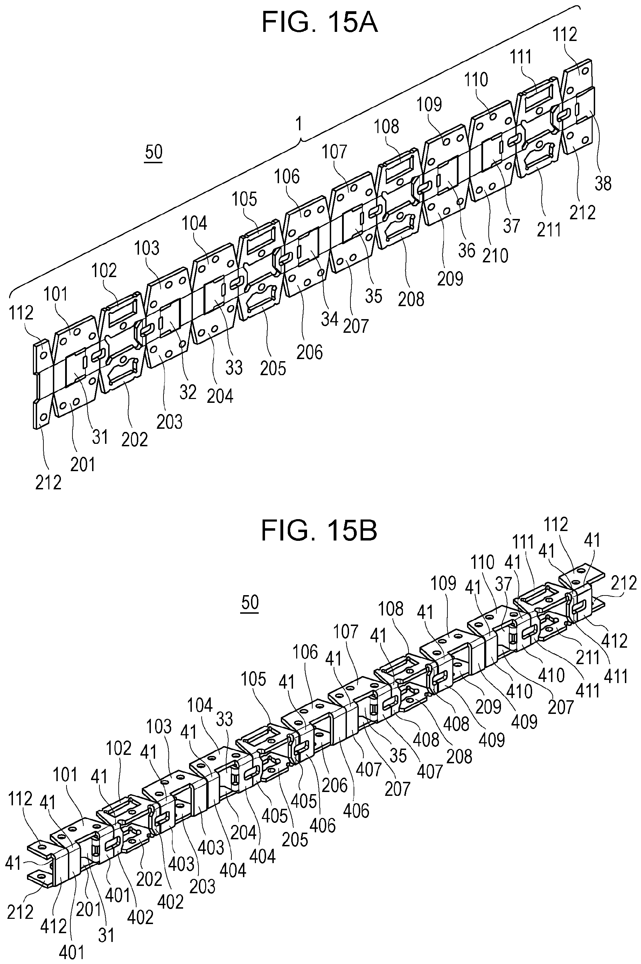

A method of forming the metal component 51 shown in Figs 10A to 12D will be described with reference to Figs. 15A, 15B, 16A to 16C, 17A, 17B, and 18A to 18C. This example shows one example that can be conceived to be industrially reasonably manufactured, and the embodiment is not limited thereto.

Initially, a metal member 50 shown in Fig. 15A is prepared. The metal member 50 at this stage is a narrow long plate-shaped member (metal plate) with a thickness of Tm. The thickness Tm can, for example, range from 0.4 mm to 3.2 mm. The metal member 50 can be prepared by punching a metal plate that is a raw material into a desired shape as shown in Fig. 15A. The metal material of the metal component 51 is desirably easy to be bent, so a common steel (carbon steel with a carbon content of 0.6% or lower) can be used. Examples of the metal member for the metal component 51 can include a cold-rolled steel (SPCC) and an electrolytic zinc-coated steel (SECC, bonderizing plate) that is an electrogalvanized cold-rolled steel.

The metal member 50 has a top surface portion that will be a top surface section 1, a bottom surface portion that will be a bottom surface section 2, and a center portion that is located between the top surface portion and the bottom surface portion and that will be elastic sections 3 and a side surface section 4. Top plate portions 101 to 112 are provided in the top surface portion. Portions that will be bottom plate portions 201 to 212 are provided in the bottom surface portion. Portions that will be elastic sections 31 to 38 and portions that will be side plate portions 401 to 412 are provided in the center portion. The metal member 50 at this stage is, for example, formed by shearing a sheet metal. The metal member 50 at this stage may be formed by machining from a square material or may be formed by casting. Forming the metal member 50 by shearing is beneficial in cost.

Subsequently, the metal member 50 is formed into a shape shown in Fig. 15B by performing first to third bending works on the metal member 50 shown in Fig. 15A. The metal member 50 at this stage is a narrow long U-shaped member.

The top surface portion and the bottom surface portion are opposed to each other. The elastic sections 31 to 38 overlap the top surface portion and the bottom surface portion. In this example, the number of connections 44 between the side plate portions 401 to 412 is M, the side plate portion 401 and part of the side plate portion 412 are connected via a connection, and the side plate portion 411 and a remaining part of the side plate portion 412 are connected via a connection.

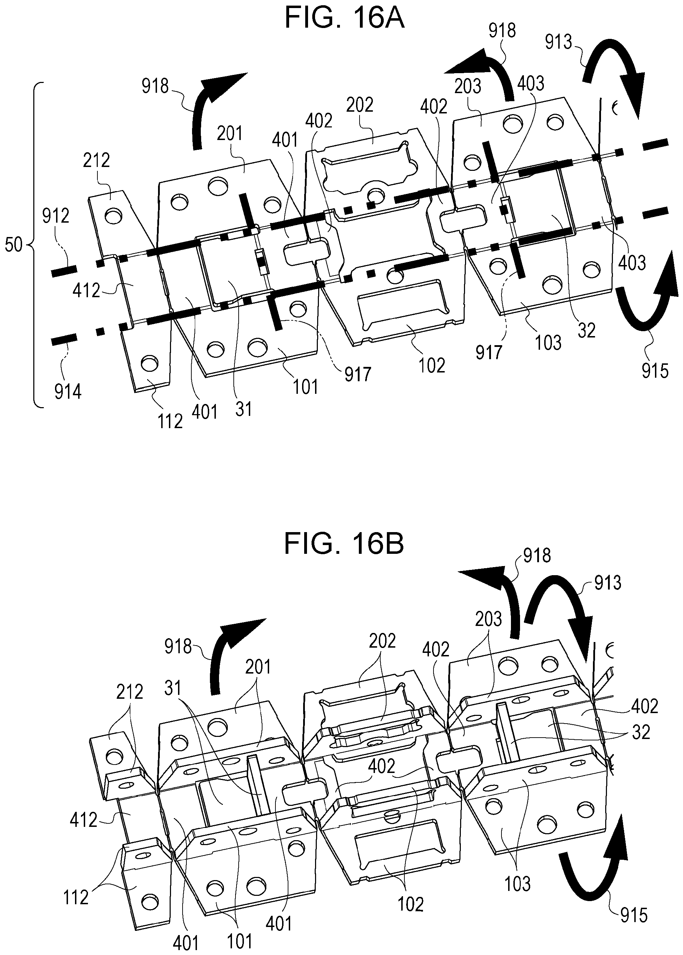

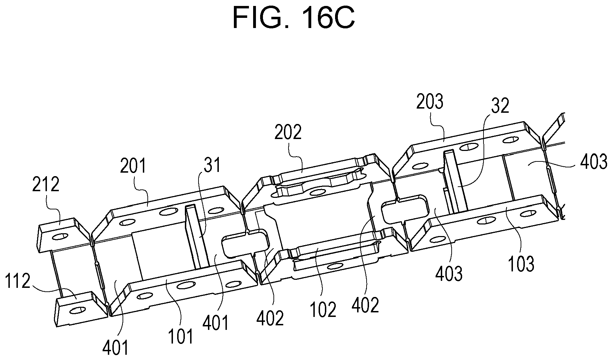

Fig. 16A is a partially enlarged view of the metal member 50 for the sake of illustration. Fig. 16A shows a state before the metal member 50 is subjected to first to third bending works. Fig. 16C shows a state after the metal member 50 is subjected to the first to third bending works. Fig. 16B shows a state before and after the metal member 50 is subjected to the first to third bending works.

The first bending work is performed as shown in Fig. 16B such that the elastic sections 31 to 38 are bent by 80° to 100° (in this example, 90°) in the direction of arrows 918 with folding lines set to rounding portions 917 indicated by the alternate long and two-short dashed lines in Fig. 16A.

The second bending work is performed as shown in Fig. 16B such that the bottom plate portions 201 to 212 are bent by 80° to 100° (in this example, 90°) in the direction of an arrow 913 with a folding line set to a rounding portion 912 indicated by the alternate long and two-short dashed lines in Fig. 16A.

The third bending work is performed as shown in Fig. 16B such that the top plate portions 101 to 112 are bent by 80° to 100° (in this example, 90°) in the direction of an arrow 915 with a folding line set to a rounding portion 914 indicated by the alternate long and two-short dashed lines in Fig. 16A.

As shown in Fig. 16C, each of the elastic sections 31 to 38 overlaps a corresponding one of the top plate portions 101 to 112 and a corresponding one of the bottom plate portions 201 to 212.

The order of the first to third bending works is optional; however, the second bending work and the third bending work are preferably performed after the first bending work. This is because, when the first bending work is performed after the second bending work and the third bending work, the top plate portions 101 to 112 and the bottom plate portions 201 to 212 tend to interfere with the first bending work during the first bending work.

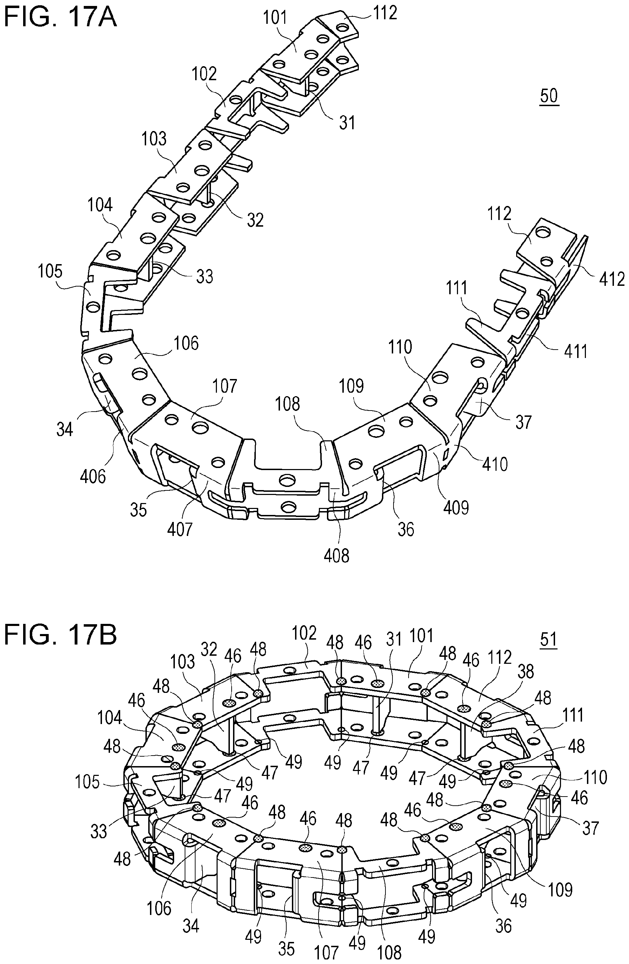

Subsequently, the metal member 50 is formed into a shape shown in Fig. 17A by performing fourth bending work on the metal member 50 shown in Fig. 15B. Subsequently, the metal member 50 is formed into a shape shown in Fig. 17B by performing the fourth bending work on the metal member 50 shown in Fig. 17B.

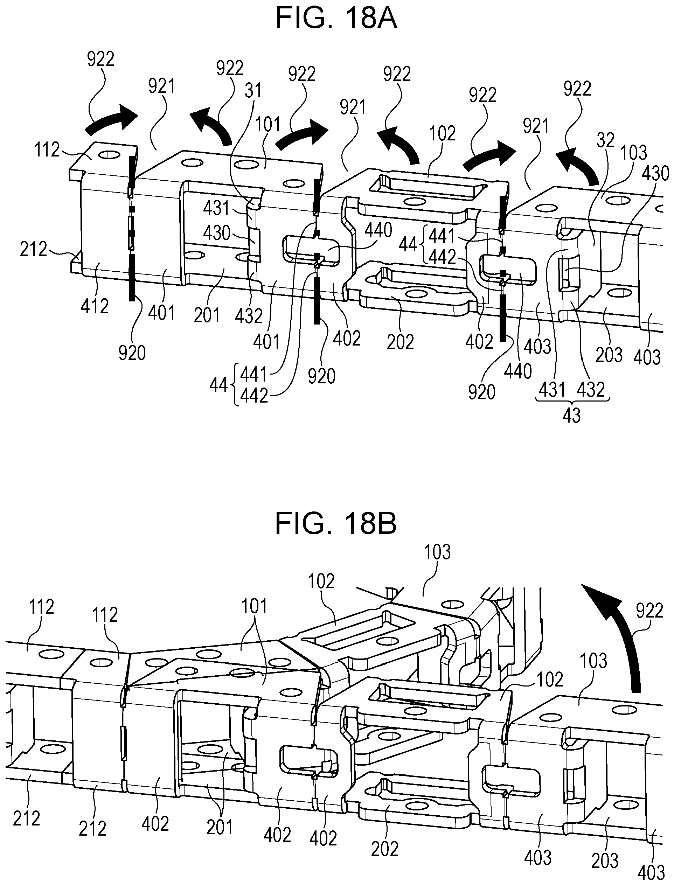

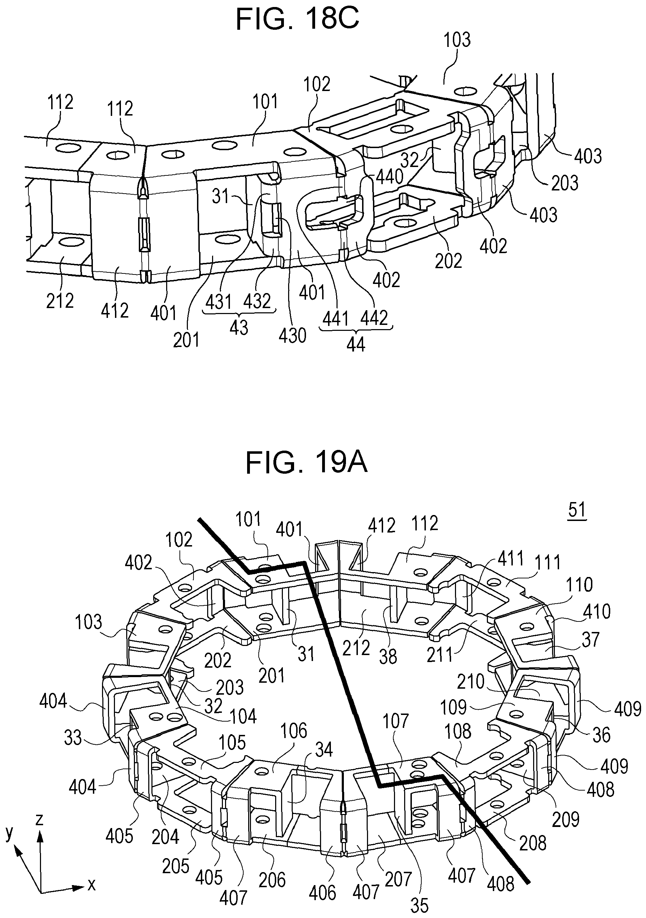

Fig. 18A is a partially enlarged view of the metal member 50 for the sake of illustration. Fig. 18A shows a state before the metal member 50 is subjected to the fourth bending work. Fig. 18C shows a state after the metal member 50 is subjected to the fourth bending works. Fig. 18B shows a state before and after the metal member 50 is subjected to the fourth bending works.

The fourth bending work is performed as shown in Fig. 18B such that the side surface sections 401 to 412 are bent by 30° ((360/M)°) in the directions of arrows 922 with folding lines set to rounding portions 920 indicated by the alternate long and two-short dashed lines in Fig. 18A. Through the fourth bending work, two adjacent top plate portions (for example, the top plate portion 101 and the top plate portion 102) of the top plate portions 101 to 112 can contact with each other. In order not to form a gap between two adjacent top plate portions as much as possible, in a state before the fourth bending work, an angle between opposed surfaces of two adjacent top plate portions (for example, the top plate portion 101 and the top plate portion 102) of the top plate portions 101 to 112 is set to ((360/M) °). Part of the side plate portion 412, connected to the side plate portion 401, and a remaining part of the side plate portion 412, connected to the side plate portion 411, are connected.

As shown in Figs. 18A and 18C, a connection 43 between the connected side plate portion and elastic section (for example, the side plate portion 401 and the elastic section 31, and the side plate portion 403 and the elastic section 32) includes an upper portion 431 and a lower portion 432 arranged in the z direction, and an air gap 430 is provided between the upper portion 431 and the lower portion 432. The air gap 430 can function as a clearance hole in the third bending work. By providing the air gap 430 to decrease the rigidity of the connection 43, the rigidity of the elastic section group 3 is decreased, with the result that the structure 5 is easy to deform.

As shown in Figs. 18A and 18C, a connection 44 between two adjacent side plate portions (for example, the side plate portion 401 and the side plate portion 402) includes an upper portion 441 and a lower portion 442 arranged in the z direction, and an air gap 440 is provided between the upper portion 441 and the lower portion 442. The air gap 440 can function as a clearance hole in the third bending work. By providing the air gap 440 to decrease the rigidity of the connection 44, the rigidity of the side surface section 4 is decreased, with the result that the structure 5 is easy to deform.

Subsequently, in Fig. 17B, a joint 46 between a top plate portion, of the top plate portions 101, 103, 104, 106, 107, 109, 110, 112, and an elastic section, of the elastic sections 31 to 38, overlapping each other, is formed. A joint 47 between a bottom plate portion, of the bottom plate portions 201, 203, 204, 206, 207, 209, 210, 212, and an elastic section, of the elastic sections 31 to 38, overlapping each other, is formed. A joint 48 between adjacent top plate portions of the top plate portions 101 to 112 is formed. A joint 49 between adjacent bottom plate portions of the bottom plate portions 201 to 212 is formed. Arc welding, spot welding, or laser welding can be used to form the joints 46 to 49.

In this way, by bending the metal member 50 having the plurality of elastic sections 31 to 38, the metal component 51 having the plurality of elastic sections 31 to 38 can be formed.

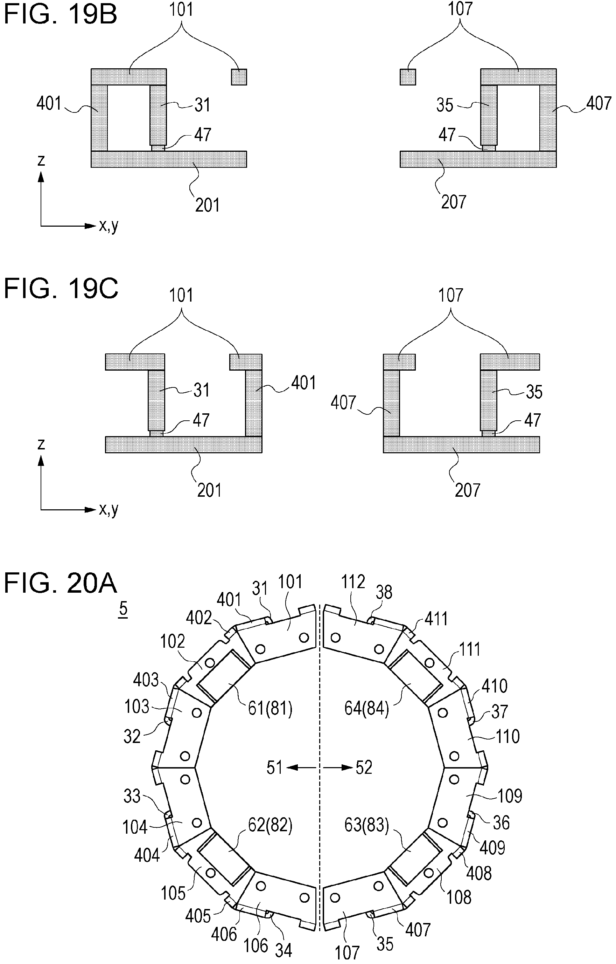

A modification of the metal component 51 will be described with reference to Figs. 19A to 19C. Fig. 19A is a perspective view of the metal component 51. Fig. 19B is a sectional view, including the elastic sections 31, 35, of the metal component 51, taken along the wide line in Fig. 19A.

In the metal component 51 shown in Figs. 10A to 13C, the metal component 51 is bent at the connection between the side surface section 4 and the elastic section group 3. However, in the present embodiment, each of the elastic sections 31 to 38 of the elastic section group 3 connects with the top surface section 1. The metal component 51 is bent by bending at the connection between the top surface section 1 and each of the elastic sections 31 to 38 of the elastic section group 3. For example, the metal component 51 is bent by bending at the connection between the top plate portion 101 and the elastic section 31. The elastic section 31 is provided over the bottom plate portion 201 such that the elastic section 31 overlaps the bottom plate portion 201 in the z direction. The metal component 51 is bent by bending at the connection between the top plate portion 103 and the elastic section 32. The elastic section 32 is provided over the bottom plate portion 203 such that the elastic section 32 overlaps the bottom plate portion 203 in the z direction. The metal component 51 is bent by bending at the connection between the top plate portion 107 and the elastic section 35. The elastic section 35 is provided over the bottom plate portion 207 such that the elastic section 35 overlaps the bottom plate portion 207 in the z direction. Similarly, each of the elastic sections 33, 34, 36, 37, 38 overlaps a corresponding one of the bottom plate portions 206, 207, 209, 210, 212.

As shown in Fig. 19B, each of the elastic sections 31 to 38 is joined with the bottom surface section 2 by a joint 47. The joint 47 may be, for example, a welding portion welding the bottom surface section 2 with each of the elastic sections 31 to 38, adjacent to each other, or may be a bonding portion bonding the bottom surface section 2 to each of the elastic sections 31 to 38, adjacent to each other. For example, the elastic section 31 and the bottom plate portion 201 that overlap each other are joined with each other by the joint 47 formed by welding. The elastic section 35 and the bottom plate portion 207 that overlap each other are joined with each other by the joint 47 formed by welding. Similarly, each of the elastic sections 32 to 34, 36 to 38 and a corresponding one of the bottom plate portions 203, 204, 206, 209, 210, 212, which overlaps the elastic section, are joined with each other by the joint 47.

As is apparent from Figs. 19A and 19B, the side surface section 4 may make up the outer side surface of the metal component 51. Therefore, as shown in Fig. 19B, for example, the distance between the elastic section 31 and the elastic section 35 is less than the distance between the side plate portion 401 and the side plate portion 407. In another mode, the side surface section 4 may make up the inner side surface of the metal component 51. Therefore, as shown in Fig. 19C, for example, the distance between the elastic section 31 and the elastic section 35 may be greater than the distance between the side plate portion 401 and the side plate portion 407.

<Second Embodiment>

In a second embodiment, the elastic section group 3 of the structure 5 is made up of a plurality of metal components. Fig. 20A shows an example in which the elastic section group 3 of the structure 5 is distributed between two metal components 51, 52. The semi-annular metal component 51 has four elastic sections 31 to 34. The semi-annular metal component 52 has four elastic sections 35 to 38. The metal component 51 has top plate portions 101 to 106, bottom plate portions 201 to 206, and side plate portions 401 to 406. The metal component 52 has top plate portions 107 to 112, bottom plate portions 207 to 212, and side plate portions 407 to 412. Detecting units 81, 82 are fixed to the metal component 51. Detecting units 83, 84 are fixed to the metal component 52. The metal component 51 and the metal component 52 are disposed such that the eight elastic sections 31 to 38, the top plate portions 101 to 112, the bottom plate portions 201 to 212, the side plate portions 401 to 412, and the detecting units 81 to 84 are disposed similarly to the structures 5 of Figs. 19A to 19C, and 20A to 20C.

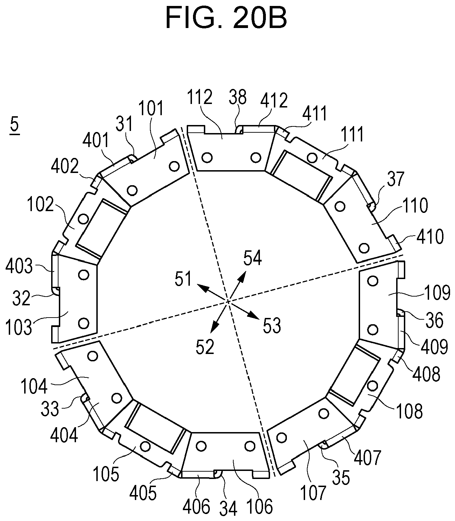

Fig. 20B shows an example in which the elastic section group 3 of the structure 5 is distributed among four metal components 51, 52, 53, 54. The quarter-annular metal component 51 has two elastic sections 31, 32. The quarter-annular metal component 52 has two elastic sections 33, 34. The quarter-annular metal component 53 has two elastic sections 35, 36. The quarter-annular metal component 54 has two elastic sections 37, 38. The metal component 51 has top plate portions 101 to 103, bottom plate portions 201 to 203, and side plate portions 401 to 403. The metal component 52 has top plate portions 104 to 106, bottom plate portions 204 to 206, and side plate portions 404 to 406. The metal component 53 has top plate portions 107 to 109, bottom plate portions 207 to 209, and side plate portions 407 to 409. The metal component 54 has top plate portions 110 to 112, bottom plate portions 210 to 212, and side plate portions 410 to 412. A detecting unit 81 is fixed to the metal component 51. A detecting unit 82 is fixed to the metal component 52. A detecting unit 83 is fixed to the metal component 53. A detecting unit 84 is fixed to the metal component 54.

The metal components 51 to 54 are disposed such that the eight elastic sections 31 to 38, the top plate portions 101 to 112, the bottom plate portions 201 to 212, the side surface sections 401 to 412, and the detecting units 81 to 84 are disposed similarly to the structures 5 of Figs. 19A to 19C, and 20A to 20C.

When the structure 5 is made up of a plurality of metal components each having at least two elastic sections, the accuracy of the structure 5 is improved by selecting each of the plurality of metal components from among metal components that provide sufficient performance. As the number of elastic sections included in one metal component increases, the yield of the one metal component can decrease. For this reason, by reducing the number of elastic sections included in one metal component to increase the number of metal components, the yield of the structure 5 is improved while the number of elastic sections is equivalent. The structure 5 is divided into two in the example shown in Fig. 20A, and the structure 5 is divided into four in the example shown in Fig. 20B. Alternatively, the structure 5 may be divided into three or may be divided into six. However, as the number of divisions of the structure 5 (the number of metal components having elastic sections) increases, assembly of the structure 5 tends to be complicated, so the number of divisions of the structure 5 is preferably about four.

A plurality of metal components that make up the structure 5 may be prepared by bending each of separate metal components, or a plurality of metal components may be prepared by bending one metal member and then cutting the metal member.

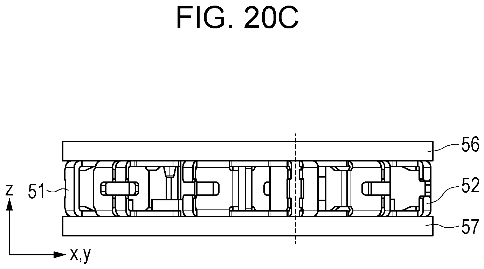

When the structure 5 is made up of a plurality of metal components each having at least two elastic sections, four or more elastic sections disposed separately on these plurality of metal components preferably similarly deform. Therefore, the plurality of metal components is preferably coupled by a reinforcement component. In the mode shown in Fig. 20C, the metal component 51 and the metal component 52, shown in Fig. 20A or Fig. 20B, are coupled via the reinforcement component 56. The reinforcement component 56 is joined with the top surface section of the metal component 51 and is joined with the top surface section of the metal component 52. The reinforcement component 56 overlaps the elastic sections of the metal component 51 and the elastic sections of the metal component 52. The metal component 51 and the metal component 52 are coupled via the reinforcement component 57. The reinforcement component 57 is joined with the bottom surface section of the metal component 51 and is joined with the bottom surface section of the metal component 52. The reinforcement component 57 overlaps the elastic sections of the metal component 51 and the elastic sections of the metal component 52. The mode of Fig. 14B and the mode of Fig. 20B can be combined. For example, the reinforcement component 56a may couple the metal component 51 with the metal component 52, and the reinforcement component 56b may couple the metal component 53 with the metal component 54. Only with this configuration, the metal component 51 and the metal component 54 are not coupled, and the metal component 52 and the metal component 53 are not coupled. For this reason, additionally, the reinforcement component 57a may couple the metal component 51 with the metal component 54, and the reinforcement component 57b may couple the metal component 52 with the metal component 53. Thus, the mode in which the four metal components 51 to 54 are coupled to one another by the four reinforcement components 56a, 56b, 57a, 57b is obtained.

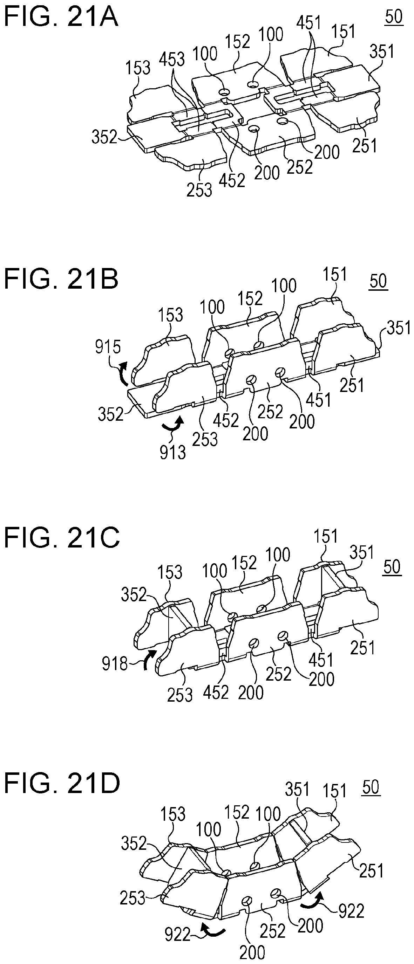

The mode of Fig. 20B will be more specifically described with reference to Figs. 21A to 21H. Each of the metal components 51 to 54 shown in Fig. 20B is formed by bending the metal member 50 shown in Fig. 21A.

In the step shown in Fig. 21A, the metal member 50 is prepared. The metal member 50 has side plate portions 451, 452, 453, top plate portions 151, 152, 153 respectively connected to the side plate portions 451, 452, 453, bottom plate portions 251, 252, 253 respectively connected to the side plate portions 451, 452, 453, and elastic sections 351, 352 respectively connecting with the side plate portions 451, 453.

In the step shown in Fig. 21B, a first bending work in which the top plate portions 151 to 153 are bent in the direction of an arrow 915 is performed such that the metal member 50 is bent at a connection between each of the side plate portions 451 to 453 and a corresponding one of the top plate portions 151 to 153. A second bending work in which the bottom plate portions 251 to 253 are bent in the direction of an arrow 913 is performed such that the metal member 50 is bent at a connection between each of the side plate portions 451 to 453 and a corresponding one of the bottom plate portions 251 to 253. A bending angle of each of the first and second bending works ranges from 80° to 100° (in this example, 90°).

In the step shown in Fig. 21C, a third bending work in which the elastic sections 351, 352 are bent in the direction of an arrow 918 is performed such that the metal member 50 is bent at a connection between each of the side plate portions 451, 453 and a corresponding one of the elastic sections 351, 352. A bending angle of the third bending work ranges from 80° to 100° (in this example, 90°).

In the step shown in Fig. 21D, a fourth bending work in which the side plate portions 451, 452 are respectively bent in the directions of arrows 922 is performed such that the metal member 50 is bent at a connection between the side plate portion 451 and the side plate portion 452 and at a connection between the side plate portion 452 and the side plate portion 453. A bending angle of the fourth bending work ranges from 20° to 40° (in this example, 30°).

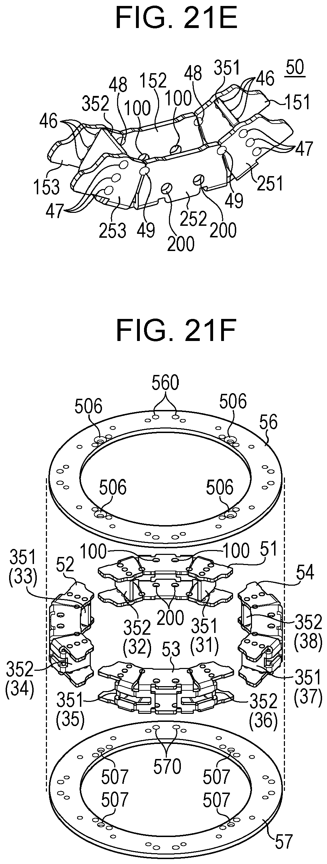

In the step shown in Fig. 21E, the portions of the metal member 50 are welded to each other. The top plate portion 151 and the elastic section 351 are joined by joints 46. The top plate portion 153 and the elastic section 353 are joined by joints 46. The bottom plate portion 251 and the elastic section 352 are joined by joints 47. The bottom plate portion 253 and the elastic section 352 are joined by joints 47. The top plate portion 151 and the top plate portion 152 are joined by a joint 48. The top plate portion 152 and the top plate portion 153 are joined by a joint 48. The bottom plate portion 251 and the bottom plate portion 252 are joined by a joint 49. The bottom plate portion 252 and the bottom plate portion 253 are joined by a joint 49.

In this way, four metal components 51 to 54 each having the elastic sections 351, 352 are prepared.

In the step shown in Fig. 21F, in addition to the four metal components 51 to 54, reinforcement components 56, 57 are prepared. The reinforcement component 56 has various fixing holes 560, 506. The reinforcement component 57 has various fixing holes 570, 507. The reinforcement component 56 and the reinforcement component 57 sandwich the four metal components 51 to 54. The metal components 51 to 54 are disposed such that an imaginary circle passes through the elastic sections 351, 352 of each of the metal components 51 to 54. The elastic section 351 of the metal component 51 corresponds to the elastic section 31 in Figs. 10A to 14D. The elastic section 352 of the metal component 51 corresponds to the elastic section 32 in Figs. 10A to 14D. The elastic section 351 of the metal component 52 corresponds to the elastic section 33 in Figs. 10A to 14D. The elastic section 352 of the metal component 52 corresponds to the elastic section 34 in Figs. 10A to 14D. The elastic section 351 of the metal component 53 corresponds to the elastic section 35 in Figs. 10A to 14D. The elastic section 352 of the metal component 53 corresponds to the elastic section 36 in Figs. 10A to 14D. The elastic section 351 of the metal component 54 corresponds to the elastic section 37 in Figs. 10A to 14D. The elastic section 352 of the metal component 54 corresponds to the elastic section 38 in Figs. 10A to 14D.

The top plate portion 151 of the metal component 51 corresponds to the top plate portion 101 in Figs. 10A to 14D, the top plate portion 152 of the metal component 51 corresponds to the top plate portion 102 in Figs. 10A to 14D, and the top plate portion 153 of the metal component 51 corresponds to the top plate portion 103 in Figs. 10A to 14D. The top plate portion 151 of the metal component 52 corresponds to the top plate portion 104 in Figs. 10A to 14D, the top plate portion 152 of the metal component 52 corresponds to the top plate portion 105 in Figs. 10A to 14D, and the top plate portion 153 of the metal component 52 corresponds to the top plate portion 106 in Figs. 10A to 14D. The top plate portion 151 of the metal component 53 corresponds to the top plate portion 107 in Figs. 10A to 14D, the top plate portion 152 of the metal component 53 corresponds to the top plate portion 108 in Figs. 10A to 14D, and the top plate portion 153 of the metal component 53 corresponds to the top plate portion 109 in Figs. 10A to 14D. The top plate portion 151 of the metal component 54 corresponds to the top plate portion 110 in Figs. 10A to 14D, the top plate portion 152 of the metal component 54 corresponds to the top plate portion 111 in Figs. 10A to 14D, and the top plate portion 153 of the metal component 54 corresponds to the top plate portion 112 in Figs. 10A to 14D.

The bottom plate portion 251 of the metal component 51 corresponds to the bottom plate portion 201 in Figs. 10A to 14D, the bottom plate portion 252 of the metal component 51 corresponds to the bottom plate portion 202 in Figs. 10A to 14D, and the bottom plate portion 253 of the metal component 51 corresponds to the bottom plate portion 203 in Figs. 10A to 14D. The bottom plate portion 251 of the metal component 52 corresponds to the bottom plate portion 204 in Figs. 10A to 14D, the bottom plate portion 252 of the metal component 52 corresponds to the bottom plate portion 205 in Figs. 10A to 14D, and the bottom plate portion 253 of the metal component 52 corresponds to the bottom plate portion 206 in Figs. 10A to 14D. The bottom plate portion 251 of the metal component 53 corresponds to the bottom plate portion 207 in Figs. 10A to 14D, the bottom plate portion 252 of the metal component 53 corresponds to the bottom plate portion 208 in Figs. 10A to 14D, and the bottom plate portion 253 of the metal component 53 corresponds to the bottom plate portion 209 in Figs. 10A to 14D. The bottom plate portion 251 of the metal component 54 corresponds to the bottom plate portion 210 in Figs. 10A to 14D, the bottom plate portion 252 of the metal component 54 corresponds to the bottom plate portion 211 in Figs. 10A to 14D, and the bottom plate portion 253 of the metal component 54 corresponds to the bottom plate portion 212 in Figs. 10A to 14D.

The side plate portion 451 of the metal component 51 corresponds to the side plate portion 401 in Figs. 10A to 14D, the side plate portion 452 of the metal component 51 corresponds to the side plate portion 402 in Figs. 10A to 14D, and the side plate portion 453 of the metal component 51 corresponds to the side plate portion 403 in Figs. 10A to 14D. The side plate portion 451 of the metal component 52 corresponds to the side plate portion 404 in Figs. 10A to 14D, the side plate portion 452 of the metal component 52 corresponds to the side plate portion 405 in Figs. 10A to 14D, and the side plate portion 453 of the metal component 52 corresponds to the side plate portion 406 in Figs. 10A to 14D. The side plate portion 451 of the metal component 53 corresponds to the side plate portion 407 in Figs. 10A to 14D, the side plate portion 452 of the metal component 53 corresponds to the side plate portion 408 in Figs. 10A to 14D, and the side plate portion 453 of the metal component 53 corresponds to the side plate portion 409 in Figs. 10A to 14D. The side plate portion 451 of the metal component 54 corresponds to the side plate portion 410 in Figs. 10A to 14D, the side plate portion 452 of the metal component 54 corresponds to the side plate portion 411 in Figs. 10A to 14D, and the side plate portion 453 of the metal component 54 corresponds to the side plate portion 412 in Figs. 10A to 14D.

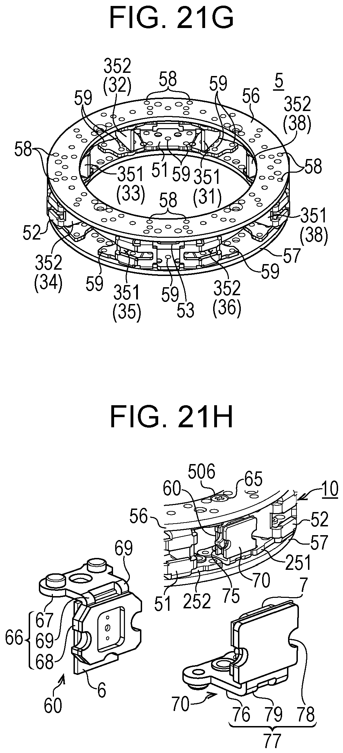

In the step shown in Fig. 21G, the reinforcement component 56 and the top plate portions 151 to 153 of each of the metal components 51 to 54 are joined by joints 58, and the reinforcement component 57 and the bottom plate portions 251 to 253 are joined by joints 59.

In the step shown in Fig. 21H, a head unit 60 including a component 6 that is the detection head of an encoder and a scale unit 70 including a component 7 that is the scale of the encoder are fixed to the structure 5. The head unit 60 includes the component 6 and a holding component 66 that holds the component 6. The holding component 66 holding the component 6 is fixed to the reinforcement component 56 by a fixing component 65, such as a screw, a rivet, and a bolt. The fixing component 65 for fixing the holding component 66 is inserted into the hole 506 and coupled to the holding component 66. The scale unit 70 includes the component 7 and a holding component 77 that holds the component 7. The holding component 77 for holding the component 7 is fixed to the reinforcement component 57 by a fixing component 75, such as a screw, a rivet, and a bolt. The fixing component 75 for fixing the holding component 77 is inserted into the hole 507 and coupled to the holding component 77.

The holding component 66 has a fixing portion 67 fixed to the reinforcement component 56, and a holding portion 68 holding the component 6. The holding component 66 is bent by bending at a connection 69 between the fixing portion 67 and the holding portion 68. The holding component 77 has a fixing portion 76 fixed to the reinforcement component 57, and a holding portion 78 holding the component 7. The holding component 77 is bent by bending at a connection 79 between the fixing portion 76 and the holding portion 78.

The fixing portion 67 of the holding component 66 in the detecting unit 81 is provided between the top plate portion 153 (which corresponds to the top plate portion 103) of the metal component 51 and the top plate portion 151 (which corresponds to the top plate portion 104) of the metal component 52. The fixing portion 76 of the holding component 77 in the detecting unit 81 is provided between the bottom plate portion 253 (which corresponds to the bottom plate portion 203) of the metal component 51 and the bottom plate portion 251 (which corresponds to the bottom plate portion 204) of the metal component 52. The fixing portion 67 of the holding component 66 in the detecting unit 82 is provided between the top plate portion 153 (which corresponds to the top plate portion 106) of the metal component 52 and the top plate portion 151 (which corresponds to the top plate portion 107) of the metal component 53. The fixing portion 76 of the holding component 77 in the detecting unit 82 is provided between the bottom plate portion 253 (which corresponds to the bottom plate portion 206) of the metal component 52 and the bottom plate portion 251 (which corresponds to the bottom plate portion 207) of the metal component 53. The fixing portion 67 of the holding component 66 in the detecting unit 83 is provided between the top plate portion 153 (which corresponds to the top plate portion 109) of the metal component 53 and the top plate portion 151 (which corresponds to the top plate portion 110) of the metal component 54. The fixing portion 76 of the holding component 77 in the detecting unit 83 is provided between the bottom plate portion 253 (which corresponds to the bottom plate portion 209) of the metal component 53 and the bottom plate portion 251 (which corresponds to the bottom plate portion 210) of the metal component 54. The fixing portion 67 of the holding component 66 in the detecting unit 84 is provided between the top plate portion 153 (which corresponds to the top plate portion 112) of the metal component 54 and the top plate portion 151 (which corresponds to the top plate portion 101) of the metal component 51. The fixing portion 76 of the holding component 77 in the detecting unit 84 is provided between the bottom plate portion 253 (which corresponds to the bottom plate portion 212) of the metal component 54 and the bottom plate portion 251 (which corresponds to the bottom plate portion 201) of the metal component 51.

The holding portions 68, 78 are respectively bent with respect to the fixing portions 67, 76. The component 6 and the component 7 are opposed to each other in the r direction (radial direction). A force (torque) in the θ direction can be detected from a relative displacement between the component 6 and the component 7 in the θ direction resulting from a deformation of the structure 5. Here, the example in which the holding components 66, 77 are respectively fixed to the reinforcement components 56, 57 has been described. Alternatively, the reinforcement components 56, 57 may respectively have holding portions that hold the components 6, 7, and the components 6, 7 may be respectively fixed to the holding portions of the reinforcement components 56, 57.

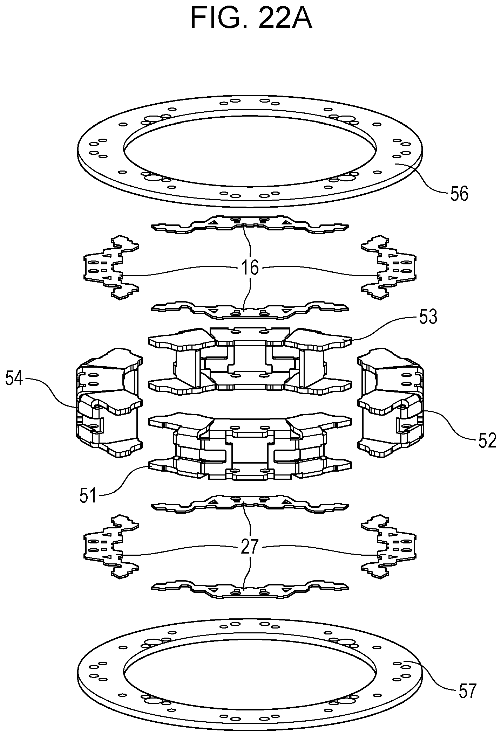

Fig. 22A shows a mode in which shims 16, 27 are used in addition to forming a structure 5 by using metal components 51 to 54 and reinforcement components 56, 57. The four shims 16 are disposed between the reinforcement component 56 and the four metal components 51 to 54. The four shims 27 are disposed between the reinforcement component 57 and the four metal components 51 to 54. Here, each set of the shims 16, 27 is divided into four. Alternatively, single continuous shims may be used as in the case of the reinforcement components 56, 57.

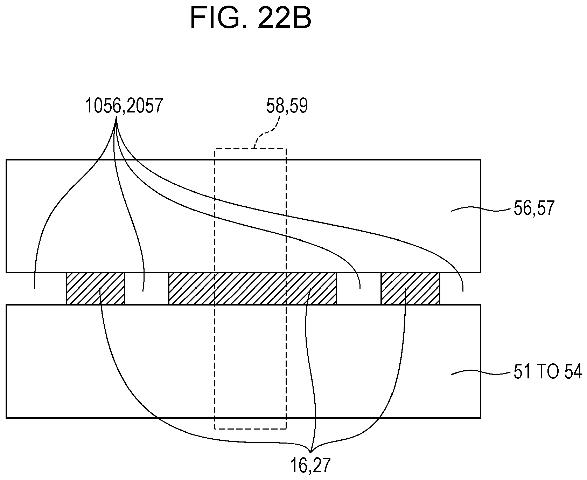

As shown in Fig. 22B, the gap 1056 equivalent to the thickness of the shims 16 is formed by the shims 16 between the reinforcement component 56 and the metal components 51 to 54, and the gap 2057 equivalent to the thickness of the shims 27 is formed by the shims 27 between the reinforcement component 57 and the metal components 51 to 54. Joints 58 can be formed by welding the reinforcement component 56, the shims 16, and the metal components 51 to 54 together. Joints 59 can be formed by welding the reinforcement component 57, the shims 27, and the metal components 51 to 54 together. The area in which the shims 16 and the metal components 51 to 54 are welded to each other to the area of the shims 16 is preferably higher than or equal to 25% and may be lower than or equal to 75%. The area in which the shims 27 and the metal components 51 to 54 are welded to each other to the area of the shims 27 is preferably higher than or equal to 25% and may be lower than or equal to 75%. The area in which the shims 16 and the metal components 51 to 54 are not welded to each other to the area of the shims 16 is preferably higher than or equal to 25% and may be lower than or equal to 75%. The area in which the shims 27 and the metal components 51 to 54 are not welded to each other to the area of the shims 27 is preferably higher than or equal to 25% and may be lower than or equal to 75%.

The area (the area when viewed in plan in the z direction) of each of the reinforcement components 56, 57 is, for example, 3800 mm², and the area of each of the top surface section 1 and the bottom surface section 2, which is the sum of the areas of the metal components 51 to 54, is, for example, 2500 mm$^2$. Assuming that the entire top surface section 1 and the entire bottom surface section 2 of the metal components 51 to 54 overlap the reinforcement components 56, 57, the area in which the reinforcement components 56, 57 overlap the metal components 51 to 54 is 2500 mm$^2$. The total area of the four shims 16 is, for example, 1700 mm$^2$, and the same applies to the four shims 27. The thickness of each of the shims 16, 27 is, for example, 30 um. The area of a portion of the top surface section 1, not overlapping the shims 16, is 800 mm$^2$ (= 2500 mm$^2$ - 1700 mm$^2$), and the area of the gap 1056 is also 800 mm$^2$. The area of a portion of the bottom surface section 2, not overlapping the shims 27, is 800 mm$^2$ (= 2500 mm$^2$ - 1700 mm$^2$), and the area of the gap 2057 is also 800 mm$^2$. The area in which the reinforcement component 56 is opposed to the metal components 51 to 54 via the gap 1056 to the area in which the reinforcement component 56 overlaps the metal components 51 to 54 is 32% (= 800 mm$^2$ ÷ 2500 mm$^2$). The area in which the reinforcement component 57 is opposed to the metal components 51 to 54 via the gap 2057 to the area in which the reinforcement component 57 overlaps the metal components 51 to 54 is 32% (= 800 mm$^2$ ÷ 2500 mm$^2$). The area of one of the welding portions 58 (substantially circular shape) is about 20 mm$^2$, and, when the welding portions 58 are provided at 48 locations, the total area of the welding portions 58 is 960 mm$^2$. The area of one of the welding portions 59 (substantially circular shape) is about 20 mm$^2$, and, when the welding portions 59 are provided at 48 locations, the total area of the welding portions 59 is 960 mm$^2$. The area of the welding portions 58 (960 mm$^2$) to the area of the shims 16 (1700 mm$^2$) is 56.5%. The area of the welding portions 59 (960 mm$^2$) to the area of the shims 27 (1700 mm$^2$) is 56.5%. 43.5% of the area of the shims 16 is not welded. 43.5% of the area of the shims 27 is not welded.

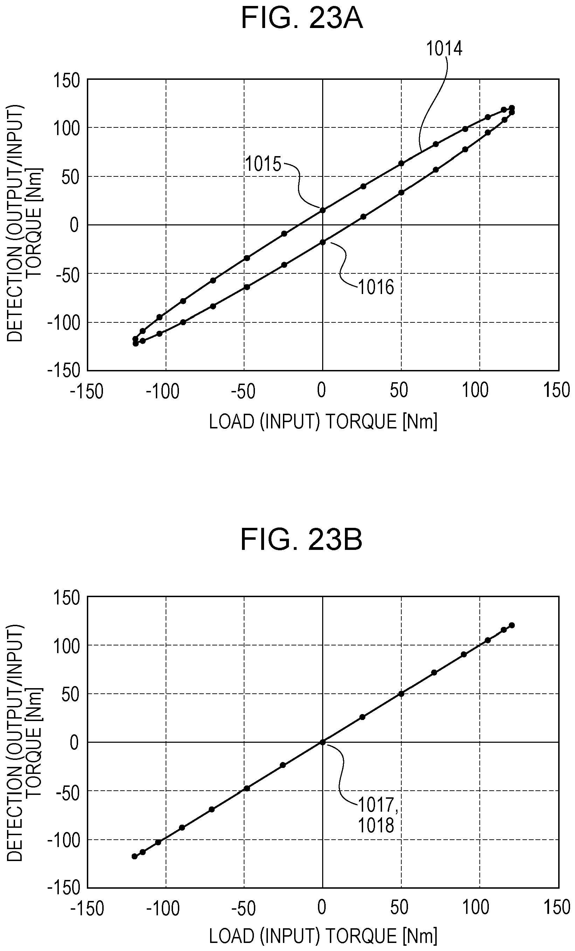

Figs. 23A and 23B show the relationship between load (input) torque and detected (output) torque for comparison when a torque shown in the θ direction of Figs. 3A and 3B is loaded in the sensor 10 according to the embodiment as shown in Figs. 21A to 21H, and 22. In acquiring the characteristics of Figs. 23A and 23B, a load (input) torque is successively changed in order of 0, +120, -120, 0 [Nm]. In Figs. 23A and 23B, when the torque is changing in a direction from a negative value toward a positive value, the curve is convex downward; whereas, when the torque is changing in a direction from a positive value toward a negative value, the curve is convex upward. Fig. 23A shows the characteristics of the sensor 10 in the case where the shims 16, 27 shown in Figs. 22A and 22B are omitted and the gaps 1056, 2057 are not provided. Fig. 23B shows the characteristics of the sensor 10 in the case where the gaps 1056, 2057 are provided by the shims 16, 27 as shown in Figs. 22A and 22B.

In the sensor 10 in which the gaps 1056, 2057 are not provided, friction between each of the metal components 51 to 54 and each of the reinforcement components 56, 57 is relatively large, so rotation due to a load of torque delays. Therefore, there is a large difference in output torque depending on the direction of rotation. For example, as shown in Fig. 23A, when the load (input) torque is zero, the detected (output) torque is value 1015 and value 1016, value 1015 is +15 Nm, value 1016 is -15 Nm, and there is a difference from a load (input) torque in each case. On the other hand, in the sensor 10 in which the gaps 1056, 2057 are provided by the shims 16, 27, friction between each of the metal components 51 to 54 and each of the reinforcement components 56, 57 is relatively small. Therefore, a delay of rotation due to a load of torque is difficult to occur, and a difference in output torque is difficult to occur depending on the direction of rotation. For example, as shown in Fig. 23B, value 1017 and value 1018 that are detected (output) torques in the case where the load (input) torque is zero are respectively +0.8 Nm, -0.8 Nm, and a difference from the load (input) torque is small as compared to the case of Fig. 23A.

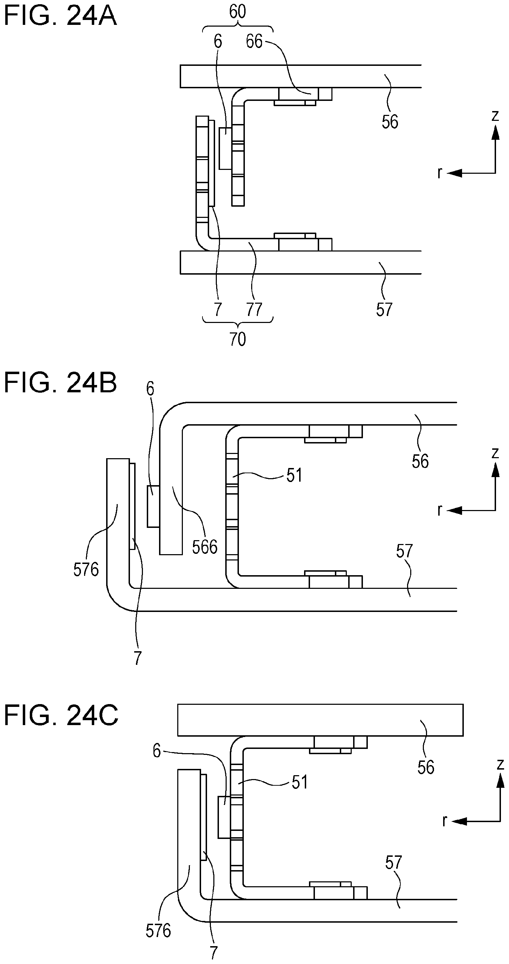

Fig. 24A shows a mode in which the head unit 60 including the component 6 (detection head) and the holding component 66 holding the component 6 is opposed in the r direction (radial direction) to the scale unit 70 including the component 7 (scale) and the holding component 77 holding the component 7. The holding component 66 is fixed to the reinforcement component 56. The holding component 77 is fixed to the reinforcement component 57.

In Fig. 24B, the reinforcement component 56 has an expanded portion 566, and the component 6 is fixed to the expanded portion 566. The reinforcement component 57 has an expanded portion 576, and the component 7 is fixed to the expanded portion 576.

In Fig. 24B, the reinforcement component 56 has an expanded portion 566, and the component 6 is fixed to the expanded portion 566. The reinforcement component 57 has an expanded portion 576, and the component 7 is fixed to the expanded portion 576.

In Fig. 24C, the component 6 is fixed to the metal component 51. The reinforcement component 57 has an expanded portion 576, and the component 7 is fixed to the expanded portion 576.

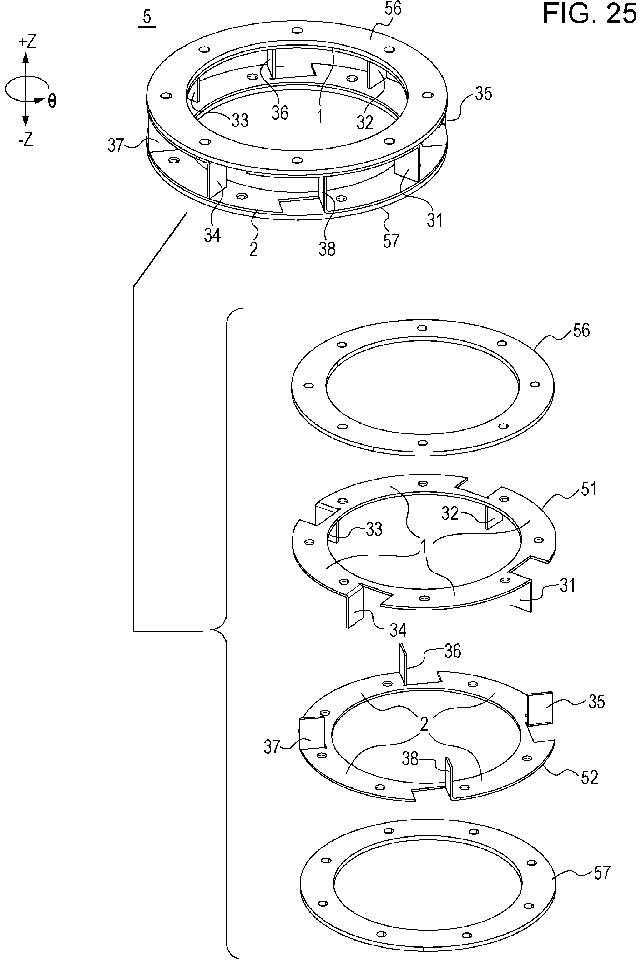

In an embodiment shown in Fig. 25 as well, the elastic section group 3 of the structure 5 is made up of a plurality of metal components. Fig. 25 is an exploded view of the sensor 10. The structure 5 has at least the reinforcement members 56, 57 and the metal components 51, 52 disposed between the reinforcement member 56 and the reinforcement member 57. The metal component 51 has the top surface section 1 and the elastic sections 31, 32, 33, 34. The metal component 51 is bent by bending at a connection between the top surface section 1 and each of the elastic sections 31, 32, 33, 34. The metal component 52 has the bottom surface section 2 and the elastic sections 35, 36, 37, 38. The metal component 52 is bent by bending at a connection between the bottom surface section 2 and each of the elastic sections 35, 36, 37, 38. When the metal component 51 and the metal component 52 are disposed such that the elastic sections 31, 32, 33, 34 are opposed to the bottom surface section 2 and the elastic sections 35, 36, 37, 38 are opposed to the top surface section 1, the metal component 51 and the metal component 52 are disposed such that an imaginary circle (not shown) passes through the eight elastic sections 31 to 38. The elastic sections 31, 32, 33, 34 may be welded to the bottom surface section 2 by joints, and the elastic sections 35, 36, 37, 38 may be welded to the top surface section 1 by joints.

<Third Embodiment>

A third embodiment differs from the first embodiment or the second embodiment in a manner in which the metal component 51 is bent. In other words, in the third embodiment, a metal component is bent by bending at a connection between a top surface section and each elastic section, and a metal component is bent by bending at a connection between a bottom surface section and each elastic section. With such a mode, the rigidity against bending causing other-axis interference is increased.

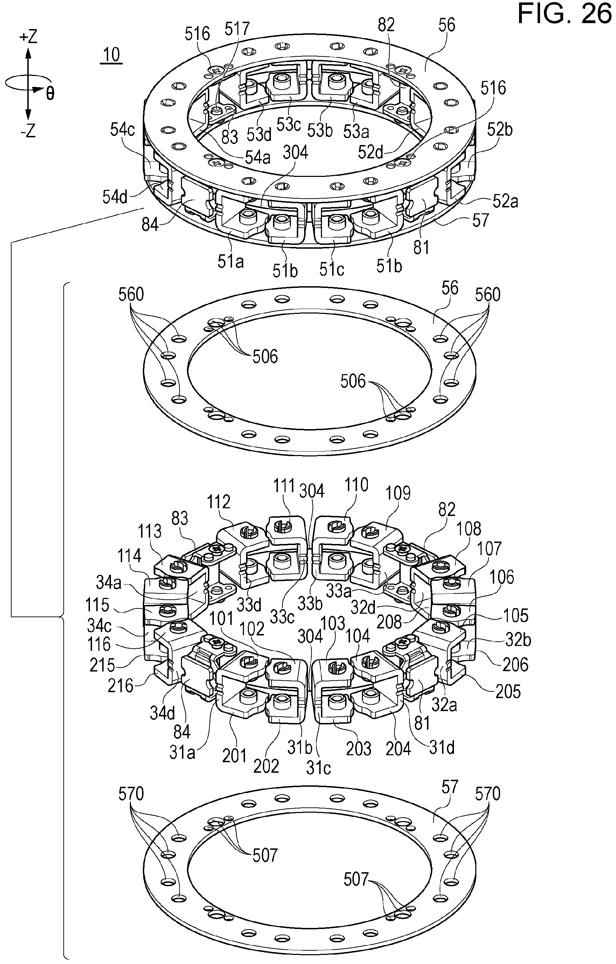

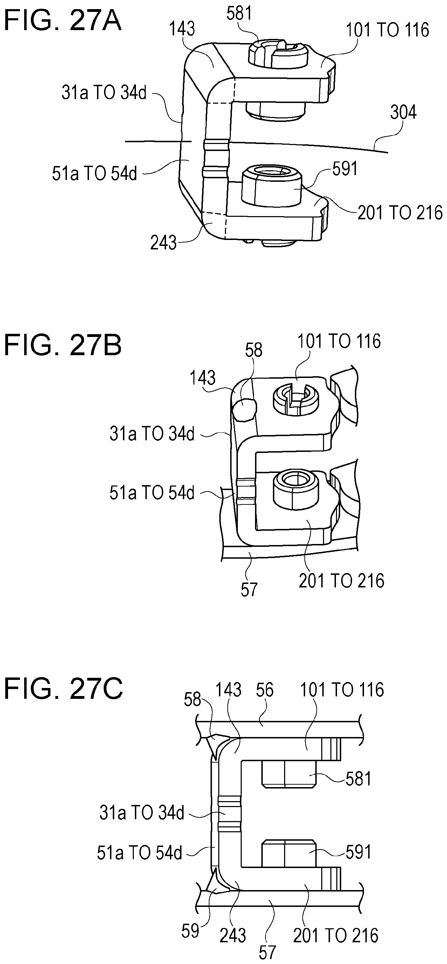

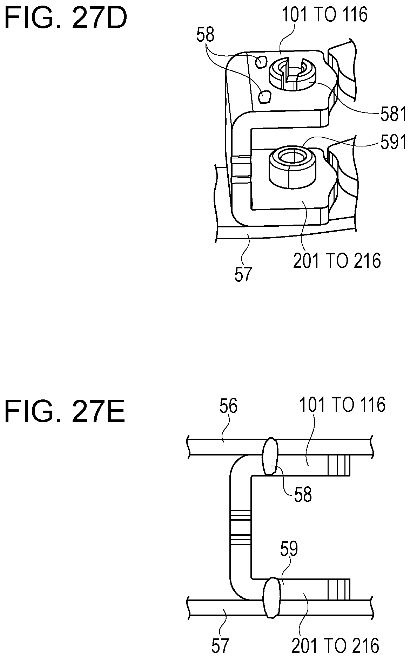

The structure of a sensor 10 according to the present embodiment will be described with reference to Figs. 26 and 27. An imaginary circle 304 in Fig. 26 is a circle of which the center is at the rotation axis of the torque 10 for the sake of convenience of description and does not exist as a form. As shown in Fig. 26, the sensor 10 is made up of a structure 5 including a reinforcement component 56, a reinforcement component 57, and metal components 51a to 54d, and a detector 8 including detecting units 81 to 84 that are optical encoders.

Fig. 26 is an exploded view of the sensor 10. The sensor 10 includes the reinforcement components 56, 57, four or more (16 in this example) metal components 51a, 51b, 51c, 51d, 52a, 52b, 52c, 52d, 53a, 53b, 53c, 53d, 54a, 54b, 54c, 54d as the structure 5. The metal components 51a to 54d are disposed between the reinforcement component 56 and the reinforcement component 57. The sensor 10 includes the four detecting units 81, 82, 83, 84 as the detector 8. Each of the detecting units 81 to 84 is coupled to the reinforcement component 56 with a screw 516 and a hole 506 of the reinforcement component 56. Each of the detecting units 81 to 84 is coupled to the reinforcement component 57 with a screw 517 and a hole 507 of the reinforcement component 57. Each of the reinforcement components 56, 57 is formed in a doughnut shape, a bagel shape, or a ring shape, and the reinforcement component 56 is disposed on the upper side (positive Z side) of a plane (imaginary plane) including the imaginary circle 304 substantially parallel to the imaginary plane. The reinforcement component 57 is disposed on the other side of the imaginary plane including the imaginary circle 304 substantially parallel to the imaginary plane. The reinforcement components 56, 57 can make up a flange for being respectively fastened to measurement targets (links) that are relatively displaced. The four detecting units 81 to 84 are disposed at opposing positions on a circle about the rotation axis on which a torque is applied. Each of the detecting units 81 to 84 that are optical encoders includes a scale component and a head component. The scale component and the head component are disposed such that one is fixed to the reinforcement component 56 and the other is fixed to the reinforcement component 57. Attachment of the detecting units 81 to 84 may be similar to the mode described with reference to Fig. 21H, and the modifications of Figs. 24B and 24C may be applied.

The 16 metal components 51a to 54d respectively include elastic sections 31a, 31b, 31c, 31d, 32a, 32b, 32c, 32d, 33a, 33b, 33c, 33d, 34a, 34b, 34c, 34d. For example, the metal component 51a includes the elastic section 31a, the metal component 51b includes the elastic section 31b, the metal component 51c includes the elastic section 31c, and the metal component 51d includes the elastic section 31d. The elastic sections 31a to 34d are disposed such that the imaginary circle 304 passes through the elastic sections 31a to 34d in the plate-thickness directions of the elastic sections 31a to 34d.

The 16 metal components 51a to 54d respectively include top plate portions 101, 102, 103, 104, 105, 106, 107, 108, 109, 110, 111, 112, 113, 114, 115, 116. The top plate portions 101 to 116 are disposed on one side (positive Z direction) of the imaginary circle 304 and are opposed to the imaginary circle 304.

The 16 metal components 51a to 54d respectively include bottom plate portions 201, 202, 203, 204, 205, 206, 207, 208, 209, 210, 211, 212, 213, 214, 215, 216. The bottom plate portions 201 to 216 are disposed on the other side (negative Z direction) of the imaginary circle 304 and are opposed to the imaginary circle 304.

Fig. 27A is an enlarged view including any one of the metal components 51a to 54d. Each of the metal components 51a to 54d has a corresponding one of the top plate portions 101 to 116, and each of the metal components 51a to 54d is bent by bending at a connection 143 between a corresponding one of the elastic sections 31a to 34d and a corresponding one of the top plate portions 101 to 116. Each of the metal components 51a to 54d has a corresponding one of the bottom plate portions 201 to 216, and each of the metal components 51a to 54d is bent by bending at a connection 243 between a corresponding one of the elastic sections 31a to 34d and a corresponding one of the bottom plate portions 201 to 216. For example, the metal component 51a is bent by bending at the connection 143 between the elastic section 31a and the top plate portion 101, and the metal component 51a is bent by bending at the connection 243 between the elastic section 31a and the bottom plate portion 201. For example, the metal component 51b is bent by bending at the connection 143 between the elastic section 31b and the top plate portion 102, and the metal component 51b is bent by bending at the connection 243 between the elastic section 31b and the bottom plate portion 202. For example, the metal component 51c is bent by bending at the connection 143 between the elastic section 31c and the top plate portion 103, and the metal component 51c is bent by bending at the connection 243 between the elastic section 31c and the bottom plate portion 203. For example, the metal component 51d is bent by bending at the connection 143 between the elastic section 31d and the top plate portion 104, and the metal component 51d is bent by bending at the connection 243 between the elastic section 31d and the bottom plate portion 201.

Each of the top plate portions 101 to 116 and a corresponding one of the bottom plate portions 201 to 216, respectively corresponding to the metal components 51a to 54d, are opposed to each other, and the imaginary circle 304 is located between each of the top plate portions 101 to 116 and an opposing one of the bottom plate portions 201 to 216.

Each of the top plate portions 101 to 116 has a hole, and a coupling component 581 is fitted to the hole. The coupling component 581 is a substantially cylindrical component and has a threaded hole inside. A part of the coupling component 581, protruding upward from a corresponding one of the top plate portions 101 to 116, is fitted to the hole 560 of the reinforcement component 56 as shown in Fig. 26. Each of the bottom plate portions 201 to 216 has a hole, and a coupling component 591 is fitted to the hole. The coupling component 591 is a substantially cylindrical component and has a threaded hole inside. A part of the coupling component 591, protruding downward from a corresponding one of the bottom plate portions 201 to 216, is fitted to the hole 570 of the reinforcement component 57 as shown in Fig. 26. The coupling components 581, 591 can be screw inserts in which an external thread is machined on the outer surface of the cylinder and an internal thread is machined on the inner surface. With the coupling portions, the top plate portions 101 to 116 are coupled to the reinforcement component 56, and the bottom plate portions 201 to 216 are coupled to the reinforcement component 57. A method of fastening the reinforcement components 56, 57 to the coupling components 591, 591 may be bolt coupling, and the threaded holes of the screw inserts may be used for fastening.

As shown in Figs. 27B and 27C, a joint 58 between each of the metal components 51a to 54d and the reinforcement component 56 (not shown) may be provided at the connection 143. Similarly, a joint 59 between each of the metal components 51a to 54d and the reinforcement component 57 may be provided at the connection 243. The connections 143 may be regarded as part of the top surface section 1 (the top plate portions 101 to 116), and the connections 243 may be regarded as part of the bottom surface section 2 (the bottom plate portions 201 to 216). In this way, since the reinforcement component 56 is proximate to the connections 143 and the reinforcement component 57 is proximate to the connections 243, these can be joined by fillet weld or the like. Fig. 3(a) is a view showing that welding joint is performed around the centers of the connections 143, 243 by the joints 58, 59. In Fig. 27B, to visualize the joint 58, the reinforcement component 56 is not shown. Fig. 27C is a sectional view from the side in a state of being joined as in the case of Fig. 27B.

As shown in Figs. 27D and 27E, the joint 58 between each of the metal components 51a to 54d and the reinforcement component 56 (not shown) may be provided on a corresponding one of the top plate portions 101 to 116. Similarly, the joint 59 between each of the metal components 51a to 54d and the reinforcement component 57 may be provided on a corresponding one of the bottom plate portions 201 to 216. In a range in which the reinforcement component 56 is in contact with each of the top plate portions 101 to 116 and a range in which the reinforcement component 57 is in contact with each of the bottom plate portions 201 to 216, both members in contact with each other can be coupled by a method, such as welding. Figs. 27D and 27E show that welding joint is performed by the joints 58, 59 at two points in the range in which the reinforcement component 56 is in contact with a corresponding one of the top plate portions 101 to 116. In Fig. 27D, to visualize the joint 58, the reinforcement component 56 is not shown. Fig. 27C is a sectional view from the side in a state of being joined as in the case of Fig. 27B.

In the mode of Fig. 26, the orientations of the metal components 51a to 54d in the circumferential direction (Θ direction) are alternately changed. For example, a space between the top plate portion 101 of the metal component 51a and the bottom plate portion 201 of the metal component 51a and a space between the top plate portion 102 of the metal component 51b and the bottom plate portion 202 of the metal component 51b are located between the elastic section 31a of the metal component 51a and the elastic section 31b of the metal component 51b. A space between the top plate portion 103 of the metal component 51c and the bottom plate portion 203 of the metal component 51c and a space between the top plate portion 104 of the metal component 51d and the bottom plate portion 204 of the metal component 51d are located between the elastic section 31c of the metal component 51c and the elastic section 31d of the metal component 51d. A distance between the elastic section 31a of the metal component 51a and the elastic section 31b of the metal component 51b and a distance between the elastic section 31c of the metal component 51c and the elastic section 31d of the metal component 51d each are greater than a distance between the elastic section 31b of the metal component 51b and the elastic section 31c of the metal component 51c. Here, the metal components 51a to 51d have been described, and the same applies to the metal components 52a to 52d, the metal components 53a to 53d, and the metal components 54a to 54d. In this example, in the circumferential direction (Θ direction), the detecting unit 81 is disposed between the metal components 51a to 51d and the metal components 52a to 52d, and the detecting unit 82 is disposed between the metal components 52a to 52d and the metal components 53a to 53d. In this example, the detecting unit 83 is disposed between the metal components 53a to 53d and the metal components 54a to 54d in the circumferential direction (Θ direction), and the detecting unit 84 is disposed between the metal components 54a to 54d and the metal components 51a to 51d in the circumferential direction (Θ direction).

Hereinafter, for the embodiment shown in Figs. 21G and 21H and the embodiment shown in Fig. 26, the result of study on θ-Nt characteristics will be described.

The sensor 10 according to the embodiment shown in Fig. 21H is similar to the embodiment shown in Fig. 26 in that the reinforcement component 56 is coupled to one side of each of the metal components 51 to 54 and the reinforcement component 57 is coupled to the other side. However, the shapes of the metal components 51 to 54 are different.

Japanese Industrial Standards (JIS) G 3313 SECC (electrogalvanized steel sheet) is used for the material of a member that is a component of the sensor 10 according to the embodiment shown in Fig. 21H.

The Young's modulus E, yield point $\sigma y$, and Poisson's ratio v of this material are not set in the standards, but E = 195 [GPa], $\sigma y$ = 200 [MPa], and $\nu$ = 0.29 are determined through a material test.

Then, for both the reinforcement component 56 and the reinforcement component 57, the above-described steel sheet is formed into an annular shape with a thickness of 2.3 [mm], an outside diameter of about 100 [mm], and an inside diameter of about 80 [mm].

For the metal components 51 to 54, the steel sheet with a thickness of 1.6 [mm] is bent such that the dimension in the rotation axis direction is about 16 [mm].

Figs. 33D, 33E, and 33F show results of measured θ-Nt characteristics in a different range of torque loaded for the torque sensor according to the embodiment shown in Fig. 21H, and $\pm$65 Nm for Fig. 33D, $\pm$85 Nm for Fig. 33E, and $\pm$135 Nm for Fig. 33F. On the other hand, for each of the cases of Figs. 33D to 33F, stress analysis using a finite element method is performed. A stress has a distribution in the member, and a stress at a maximum point is represented by $\beta max$.

The relationship among torque range, torque detection error Te, and maximum stress $\sigma max$ is as follows. A torque detection error Te[%] is 1.5[%] in a torque range of $\pm$65 Nm, 3.5[%] in a torque range of $\pm$85 Nm, and 16[%] in a torque range of $\pm$135 Nm. The maximum stress $\sigma max$ [MPa] is 82 [MPa] in a torque range of $\pm$65 Nm, 107 [MPa] in a torque range of $\pm$85 Nm, and 170 [MPa] in a torque range of $\pm$135 Nm. The result is that the torque detection error Te increases with the value of the maximum stress $\sigma max$.

For this reason, to reduce the torque detection error Te, it was presumed that it was effective to reduce the maximum stress $\sigma max$, and it was determined to study a method therefor.

As the method, in a stress distribution resulting from the analysis of the finite element method, an area in which the maximum stress $\sigma max$ was occurring was investigated, and an attempt to locally reinforce the area was performed.

In the structure 5 in Fig. 21G, the area in which the maximum stress $\sigma max$ is occurring is the connection between the side plate portion 453 and the elastic section 352 or the side plate portion 452 in Fig. 21A. This area is four corners of a portion at which the metal member 50 is perforated in a quadrilateral shape. For this reason, it was presumed that there was a high possibility of stress reduction by closing the opening, and reinforcement was attempted.

Fig. 33G is a measurement result of the θ-Nt characteristics in an attempt for reinforcement. When the torque detection error Te is obtained from the results, the torque detection error Te is 0.6[%], and the maximum stress obtained through a finite element method is 70 [MPa].

Therefore, through an attempt for reinforcement, technical improvement is obtained for suppressing torque detection error and hysteresis loop.

However, metal portions are increased in this reinforcement, so the rotational rigidity Gz also necessarily increases.

A rotational rigidity Gz [kNm/rad] is calculated from the slope of the graph of the θ-Nt characteristics.

When the rotational rigidity Gz of the sensor 10 according to the embodiment shown in Fig. 21H is obtained from Fig. 33D, the rotational rigidity Gz is 120 [kNm/rad].

On the other hand, when the rotational rigidity Gz of the sensor 10 on which an attempt for reinforcement was performed is obtained from Fig. 33G, the rotational rigidity Gz is 570 [kNm/rad] and is 4.75 times as large as the rotational rigidity Gz of the sensor 10 before the attempt for reinforcement.

In contrast, Fig. 33H is a measurement result of the θ-Nt characteristics of the sensor 10 according to the present embodiment shown in Fig. 26. The torque detection error Te calculated from the results is 1.4[0], and a good value is obtained. In the sensor used in this measurement, Japanese Industrial Standards (JIS) G 3313 SECC (electrogalvanized steel sheet) is used for the material. Then, for both the reinforcement components 56, 57, the above-described steel sheet is formed into an annular shape with a thickness of 1.6 [mm], an outside diameter of about 100 [mm], and an inside diameter of about 80 [mm]. For the metal components 51a to 54d, the steel sheet with a thickness of 2.3 [mm] is bent such that the dimension in the rotation axis direction is about 16 [mm]. Through the stress analysis using a finite element method, the result of $\sigma max$ = about 70 [MPa] is obtained. Then, the rotational rigidity Gz of the sensor 10 according to the present embodiment is 203 [kNm/rad] from Fig. 33H. In another measurement condition, the result that the rotational rigidity Gz of the sensor 10 according to the present embodiment is 164 [kNm/rad] is obtained. In this way, the sensor 10 according to the present embodiment is equivalent to the sensor 10 after the above-described attempt for reinforcement in maximum stress σmax. Thus, while the torque detection error and the hysteresis loop are reduced, the rotational rigidity Gz is significantly reduced. This is implemented by each of the metal components 51a to 54d bent at the connection between a corresponding one of the elastic sections 31a to 34d and a corresponding one of the top plate portions 101 to 116.

This is also implemented by each of the metal components 51a to 54d bent at the connection between a corresponding one of the elastic sections 31a to 34d and a corresponding one of the bottom plate portions 201 to 216.

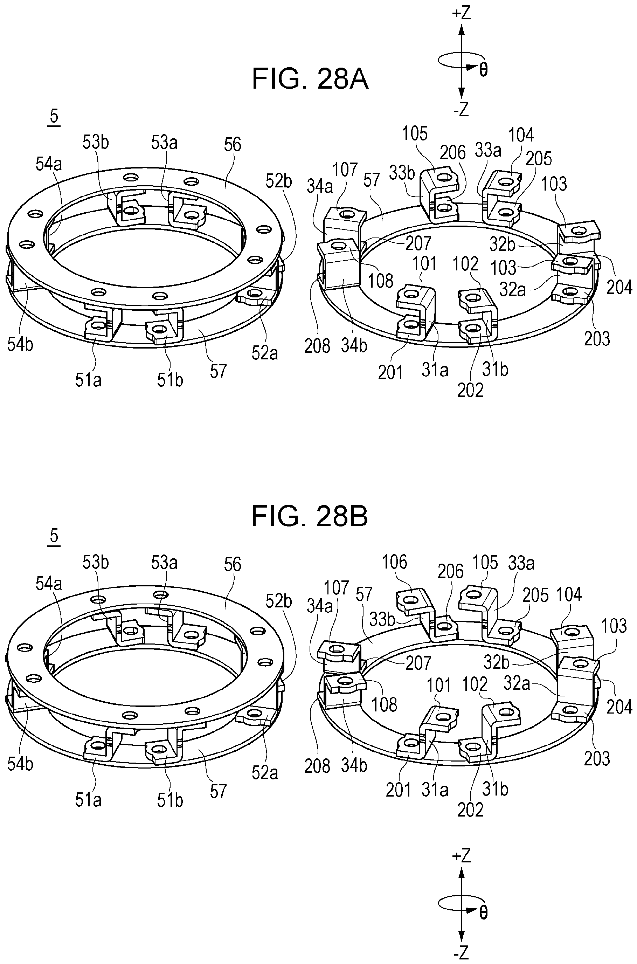

Fig. 28A is a modification of the example shown in Figs. 26 and 27. In the example of Fig. 28A, the eight metal components 51a to 54b are arranged in the same orientation in the circumferential direction θ.

A way of bending in Fig. 28B is different from the metal components described with reference to Figs. 27A to 27E. In the mode shown in Fig. 28B, each of the metal components 51a to 54b has the corresponding one of the top plate portions 101 to 108, and each of the metal components 51a to 54b is bent by bending at the connection 143 between a corresponding one of the elastic sections 31a to 34b and a corresponding one of the top plate portions 101 to 108. This point is similar to that of the mode shown in Figs. 27A to 27E. The top plate portions 101 to 108 are disposed on one side (positive Z direction) of an imaginary circle (not shown) and are opposed to the imaginary circle. The bottom plate portions 201 to 208 are disposed on the other side (negative Z direction) of the imaginary circle (not shown) and are opposed to the imaginary circle 304. However, each of the top plate portions 101 to 108 and a corresponding one of the bottom plate portions 201 to 208, respectively corresponding to the metal components 51a to 54b, are not opposed to each other in the Z direction. In the mode described with reference to Figs. 27A to 27E, each of the top plate portions 101 to 116 and a corresponding one of the bottom plate portions 201 to 216 extend to the same side in the circumferential direction with respect to a corresponding one of the elastic sections 31a to 34d. On the other hand, in the mode described with reference to Fig. 28B, each of the top plate portions 101 to 116 and a corresponding one of the bottom plate portions 201 to 216 extend to the opposite sides in the circumferential direction with respect to a corresponding one of the elastic sections 31a to 34d.

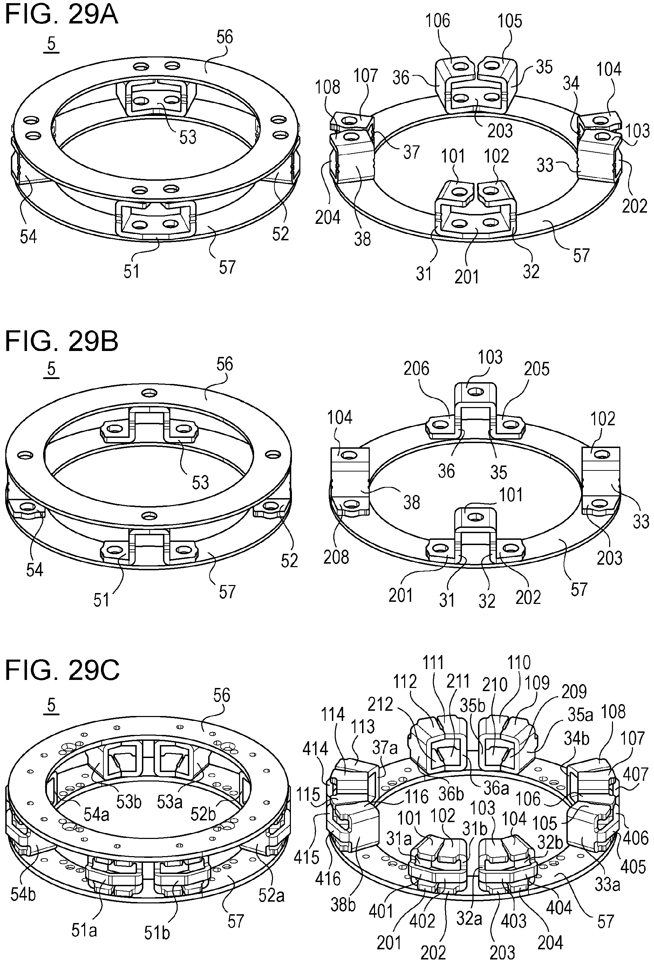

The structure 5 shown in Figs. 29A and 29B includes four metal components 51 to 54 and reinforcement members 56, 57, and each of the four metal components 51 to 54 has two elastic sections.

The metal component 51 of Fig. 29A has two top plate portions 101, 102, a bottom plate portion 201, an elastic section 31 connected to the top plate portion 101 and the bottom plate portion 201, and an elastic section 32 connected to the top plate portion 102 and the bottom plate portion 201. The top plate portions 101, 102 are opposed to the bottom plate portion 201. The metal component 53 of Fig. 29A has two top plate portions 105, 106, a bottom plate portion 203, an elastic section 35 connected to the top plate portion 105 and the bottom plate portion 203, and an elastic section 36 connected to the top plate portion 106 and the bottom plate portion 203. The top plate portions 105, 106 are opposed to the bottom plate portion 203. The metal components 51 to 54 of Fig. 29A adopt a similar bending method to those of Figs. 26, 27A to 27E, and 28A.

The metal component 51 of Fig. 29B has a top plate portion 101, two bottom plate portions 201, 202, an elastic section 31 connected to the top plate portion 101 and the bottom plate portion 201, and an elastic section 32 connected to the top plate portion 101 and the bottom plate portion 202. The top plate portion 101 is not opposed to the bottom plate portion 201. The metal component 53 of Fig. 29A has a top plate portion 103, two bottom plate portions 205, 206, an elastic section 35 connected to the top plate portion 103 and the bottom plate portion 205, and an elastic section 36 connected to the top plate portion 103 and the bottom plate portion 206. The top plate portion 103 is not opposed to the bottom plate portions 205, 206. The metal components 51 to 54 of Fig. 29B adopt a similar bending method to that of Fig. 28B.

The structure 5 shown in Fig. 29C includes eight metal components 51a to 54b and reinforcement members 56, 57, and each of the eight metal components 51a to 54b has two elastic sections along an imaginary circle (not shown). The metal component 51a has two top plate portions 101, 102, two bottom plate portions 201, 202, an elastic section 31a connecting the top plate portion 101 and the bottom plate portion 201, and an elastic section 31b connecting the top plate portion 102 and the bottom plate portion 202. The metal component 51a is bent at a connection between the top plate portion 101 and the elastic section 31a, a connection between the bottom plate portion 201 and the elastic section 31a, a connection between the bottom plate portion 202 and the elastic section 31b, and a connection between the top plate portion 102 and the elastic section 31b. The elastic section 31a and the elastic section 31b are coupled by a side plate portion 401 and a side plate portion 402. The metal component 51a is bent at a connection between the side plate portion 401 and the side plate portion 402. The same applies to the metal components 51b to 54b.

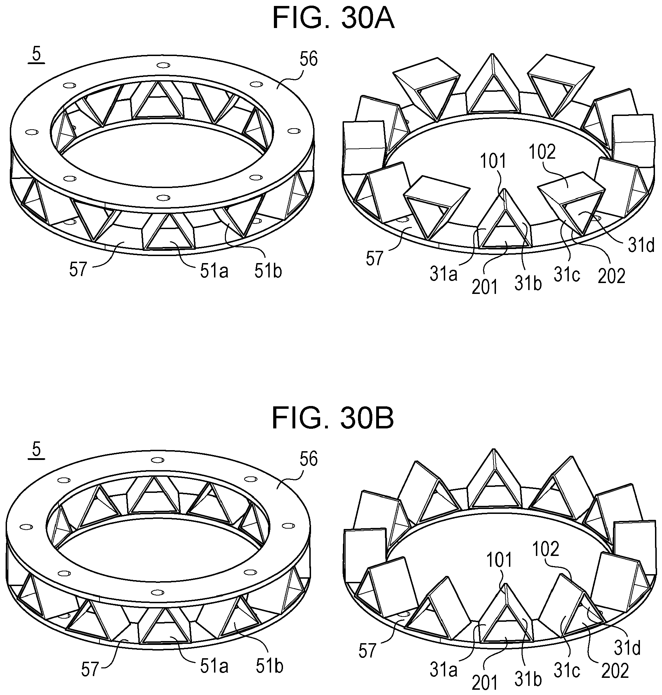

A structure 5 shown in Fig. 30A is made up of metal components 51a, 51b each bent into a triangular cylinder, and reinforcement components 56, 57. The metal component 51a has a bottom plate portion 201 and elastic sections 31a, 31b bent from the bottom plate portion 201. The elastic section 31a and the elastic section 31b are coupled at the top plate portion 101. The metal component 51b has a top plate portion 102 and elastic sections 32a, 32b bent from the top plate portion 102. The elastic section 32a and the elastic section 32b are coupled at the bottom plate portion 202. The metal component 51a and the metal component 51b are in such a relationship that the upward and downward orientations are changed, and a metal component similarly disposed as the metal component 51a and a metal component similarly disposed as the metal component 51b are alternately disposed in the circumferential direction.

In a structure 5 shown in Fig. 30B, for example, 12 metal components 51a as shown in Fig. 30A are arranged in the circumferential direction.

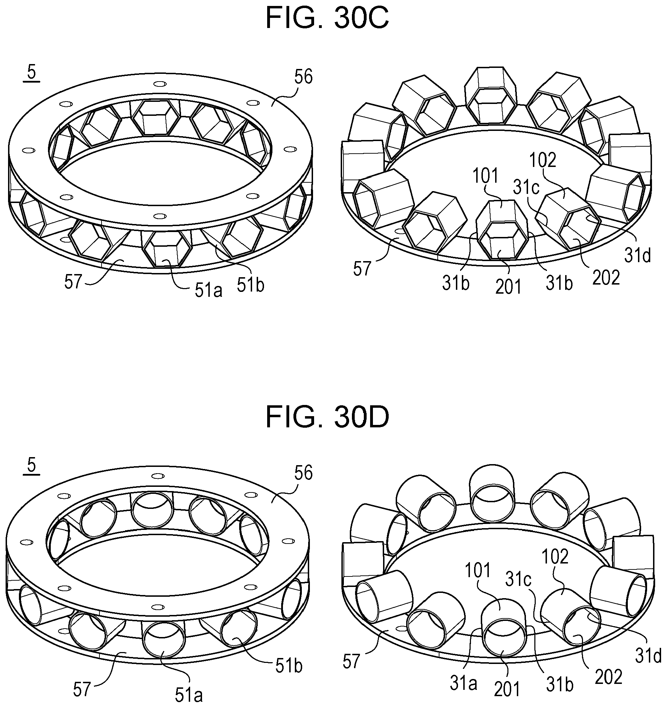

A structure 5 shown in Fig. 30C is made up of metal components 51a, 51b each bent into a hexagonal cylinder, and reinforcement components 56, 57. The metal component 51a has a top plate portion 101, a bottom plate portion 201, and elastic sections 31a, 31b bent from the top plate portion 101 and the bottom plate portion 201. The metal component 51b has a top plate portion 102, a bottom plate portion 202, and elastic sections 31c, 31d bent from the top plate portion 102 and the bottom plate portion 202. In the structure 5 shown in Fig. 30C, for example, 12 metal components like the metal components 51a, 51b are arranged in the circumferential direction.

A structure 5 shown in Fig. 30D is made up of metal components 51a, 51b each bent into a cylinder, and reinforcement components 56, 57. The metal component 51a has a top plate portion 101, a bottom plate portion 201, and elastic sections 31a, 31b bent from the top plate portion 101 and the bottom plate portion 201. The metal component 51b has a top plate portion 102, a bottom plate portion 202, and elastic sections 31c, 31d bent from the top plate portion 102 and the bottom plate portion 202. In the structure 5 shown in Fig. 30D, for example, 12 metal components like the metal components 51a, 51b are arranged in the circumferential direction.

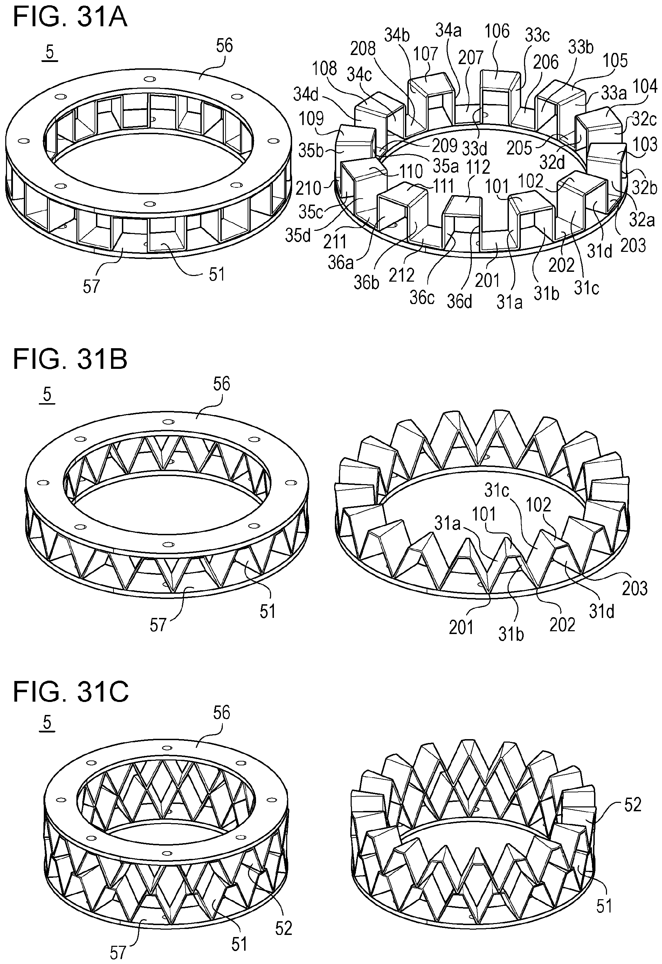

In each of the structures 5 shown in Figs. 31A to 31C, all the elastic sections located along the imaginary circle (not shown) each are made up of a single metal component 51. In the structure 5 shown in Fig. 31A, the metal component 51 has 24 elastic sections 31a to 36d that are alternately bent from top plate portions 101 to 112 and bottom plate portions 201 to 212. When the shape of the metal component 51 is developed in the circumferential direction, the shape is like rectangular waves.

When the shape of the metal component 51 of the structure 5 shown in Fig. 31B is developed in the circumferential direction, the shape is like triangular waves. The structure 5 shown in Fig. 31C has such a configuration that the metal component 51 shown in Fig. 31B is stacked one above the other in two layers. A first-layer metal component 51 is coupled to a reinforcement component 57, a second-layer metal component 52 is coupled to a reinforcement component 56, and the metal component 51 and the metal component 52 are coupled to each other.

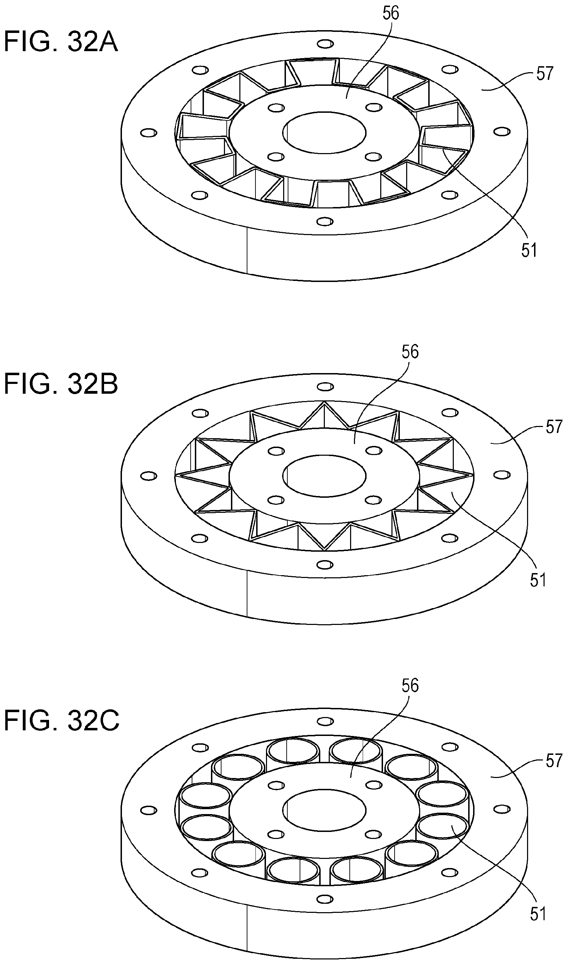

In the modes of Figs. 32A to 32C, an imaginary circle passes through a plurality of elastic sections, a reinforcement component 56 is disposed inside the imaginary circle, and a reinforcement component 57 is disposed outside the imaginary circle.

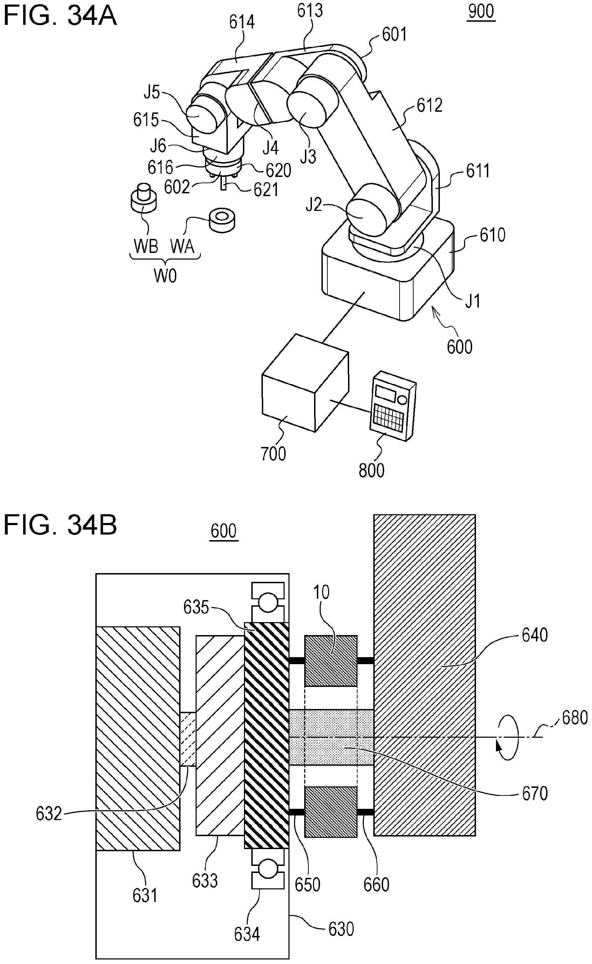

Fig. 34A is a perspective view showing a robot system 900 according to an embodiment. In Figs. 34A and 34B, a workpiece WA is, for example, a ring-shaped member, and a workpiece WB is, for example, a member having a protruding portion. A product WO is manufactured by fitting the workpiece WA to the workpiece WB.

The robot system 900 includes a robot 600, a controller 700 that controls the robot 600, and a teaching pendant 800. The robot 600 is one example of the machine apparatus 1000 and, in this example, an articulated robot. The robot 600 includes an articulated robot arm 601, and a robot hand 602 serving as an end effector that is the hand of the robot 600 and attached to the distal end of the robot arm 601.

The controller 700 controls the rotational angle of each of joints J1 to J6 of the robot arm 601. The robot 600 is capable of aiming the hand at a selected three-dimensional location in a selected three-direction posture within a movable range under control of the controller 700.

The teaching pendant 800 is a teaching unit that transmits data at a teaching point to the controller 700 and is used by an operator to designate the operation of the robot 600 mainly at an installation site of the robot system 900. The teaching pendant 800 has, for example, an operating section including operating keys for moving the posture (location and angle) of each joint of the robot arm 601, the location of a reference location disposed at the distal end or the like of the robot 600, or the like. When a robot operation is performed on the operating section of the teaching pendant 800, the controller 700 controls the operation of the robot arm 601 in response to the operation on the teaching pendant 800. At this time, the controller 700 runs a robot control program, and the portions of the robot 600 are controlled.

The robot hand 602 has a hand body 620 and a plurality of fingers 621 supported by the hand body 620 so as to be openable and closable. The workpiece WA can be gripped by causing the plurality of fingers 621 to perform closing operation. The workpiece WA can be released by causing the plurality of fingers 621 to perform opening operation. By gripping the workpiece WA with the plurality of fingers 621, it is possible to perform work to assemble the workpiece WA to the workpiece WB.

The robot arm 601 includes a plurality of links 611 to 616. The plurality of links 611 to 616 is rotatably coupled by the joints J1 to J6. A base 610 of the robot arm 601 is fixed to a stand 150. A driving mechanism having an electric prime mover (electric motor) is provided in each of the joints J1 to J6 of the robot arm 601. The electric motor is, for example, a servo motor. An electric prime mover with an appropriate output power for the magnitude of a torque needed is used as the driving mechanism at each of the joints J1 to J6. The sensor 10 is provided in at least one of the joints J1 to J6. The controller 700 controls the prime mover (motor) in accordance with information obtained from the sensor 10. The mechanisms of the joints J1 to J6 may have similar configurations or may be different.

For example, in the case of each joint of the robot arm 601, the sensor 10 measures a driving torque of the motor (not shown) that drives the joint, that is, a rotational driving force applied from the motor to the link. The sensor 10 is, for example, disposed at a predetermined location on a drive shaft of a drive line made up of a motor or a motor and a speed reducer, disposed inside the joint.

The robot arm 601 shown in Figs. 34A and 34B is a robot arm having a configuration in which a plurality of links is connected to each other via a corresponding one of a plurality of joints (six axes) in, for example, a serial link form. The robot hand 602 that is an end effector is connected to the link 616 at the distal end of the robot arm 601. The links 611, 612, 613, 614, 615, 616 of the robot arm 601 each are connected via a corresponding one of the joints, that is, the joints J1, J2, J3, J4, J5, J6 in the present embodiment.

The base 610 (base portion) and link 611 of the robot arm 601 are connected by the joint J1 that rotates around a rotation axis in a Z-axis direction. The joint J1 has, for example, a movable range of about ±180 degrees from the initial posture. The link 611 and link 612 of the robot arm 601 are connected by the joint J2. The rotation axis of the joint J2 coincides with a Y-axis direction in the illustrated state. The joint J2 has, for example, a movable range of about ±80 degrees from the initial posture.

The link 612 and link 613 of the robot arm 601 are connected by the joint J3. The joint J3 has, for example, a movable range of about ±70 degrees from the initial posture. The link 613 and link 614 of the robot arm 601 are connected by the joint J4. The joint J4 has, for example, a movable range of about ±180 degrees from the initial posture.

The link 614 and link 615 of the robot arm 601 are connected by the joint J5. The rotation axis of the joint J5 coincides with the Y-axis direction in the illustrated state. The joint J5 has, for example, a movable range of about ±120 degrees from the initial posture. The link 615 and link 616 of the robot arm 601 are connected by the joint J6. The joint J6 has, for example, a movable range of about ±240 degrees from the initial posture.

As described above, in the present embodiment, the rotation axes of the joints J1, J4, J6 are disposed parallel (or coaxially) with the central axes (alternate long and short dashed line) of coupled two links and are disposed such that a (relative) angle around the rotation axis of the two links can be changed. On the other hand, the rotation axes of the joints J2, J3, J5 are disposed such that a (relative) angle at which the central axes (alternate long and short dashed line) of two links coupled by a corresponding one of the joints intersect can be changed.

The robot hand 602 (end effector), such as an (electric) hand and a (pneumatically-driven) air hand, for performing assembling work or moving work in a production line is connected at the distal end of the link 616 of the robot arm 601. It is assumed that the robot hand 602 (end effector) is attached to the link 616 by a (half) fixing device (not shown), such as screwing, or can be attached by an attaching/detaching device (not shown), such as latching (ratchet). Particularly, when the robot hand 602 is detachable, a system in which the robot arm 601 is controlled and the end effector disposed at a supply location (not shown) is detached and attached or replaced by the operation of the robot itself is also conceivable.

Fig. 34B is a schematic sectional view of one of the joints J1 to J6. The joint connects the link 630 with the link 640. The link 630 includes a connecting member 635 supported by a bearing 634. The connecting member 635 and the sensor 10 are coupled to each other by the fixing member 650. Each of the fixing members 660 can be inserted into at least one of the above-described hole 100 and hole 560. Each of the fixing members 650 can be inserted into at least one of the above-described hole 200 and hole 570. The link 630 includes a motor 631 (a prime mover or an electric motor) that relatively moves the link 630 and the link 640. A rotating shaft 632 of the motor 631 is connected to a speed reducer 633. The speed reducer 633 is coupled to the connecting member 635. In this way, the prime mover (motor 631) and the sensor 10 are coupled via the speed reducer 633. The sensor 10 has an annular shape. A connection component 670 that connects the link 630 with the link 640 is provided in a space surrounded by the sensor 10. The connection component 670 is surrounded by at least four elastic sections (for example, eight elastic sections 31 to 38) included in the sensor 10. The connection component 670 may be a mechanical component, such as the motor 631 and the speed reducer 633, provided in the link 630 or the link 640 or may be a mechanical shaft (shaft) that connects mechanical components to each other. The connection component 670 may be a wiring component that electrically connects an electrical component provided in the link 630 with an electrical component provided in the link 640. In this way, using the annular sensor 10 to surround the connection component 670 with the sensor 10 is beneficial to reduce the size of the robot 600. Therefore, the annular reinforcement components 56, 57 shown in Fig. 20B are suitable as compared to the disc-shaped reinforcement components 56, 57 shown in Fig. 21A. The structure 5 of the sensor 10 deforms by a force applied to at least one of the link 630 and the link 640, and the deformation is detected by the detector 8. For example, the sensor 10 can be used as a torque sensor that detects a torque around an axis 680.

The robot 600 having a torque sensor and capable of torque control is often used to assemble an automobile engine component with a weight of several kilograms or assemble a component with a weight of several hundreds of grams. On the other hand, the robot 600 is not often used to assemble a small load with a weight of about several grams applied to a component during assembly, such as operating a small component, a thin film, and a sheet with a weight of several grams. This is because the accuracy of force (torque) control of an existing articulated robot is not so high and desired accuracy for assembly in a range of a weight of about several grams applied to a component by the end effector at the distal end of the robot arm 601 has not been achieved. The sensor 10 according to the present embodiment can be used as a low-cost, high-accuracy torque sensor and allows the robot 600 to handle a small workpiece with precise operation.

The robot 600 shown in Fig. 34A may be a cooperative robot. In manufacturing a product with the use of the cooperative robot, the robot 600 cooperatively manufactures a product with a human in the range of 1 m or less from the human. In such a manufacturing method, when the human contacts with the robot 600, the contact is detected by the sensor 10 provided in the robot 600, and control, such as an operation stop, can be performed. By reducing the cost of the sensor 10 provided in the robot 600, the cost of the robot 600 is reduced, so it is possible to reduce the cost of a product manufactured by the manufacturing method using the cooperative robot and to increase the safety of the manufacturing method.

The above-described embodiments may be modified as needed without departing from the technical idea. For example, a plurality of embodiments may be combined. The matter of part of at least one embodiment may be deleted or replaced. A new matter may be added to at least one embodiment.

The disclosed content of the specification includes not only the ones explicitly described in the specification but also all the matter that can be understood from the specification and the drawings attached to the specification. The disclosed content of the specification includes complements of individual concepts described in the specification. In other words, when, for example, "A is B" is described in the specification, even if the description that "A is not B" is omitted, the specification may be regarded describing that "A is not B". This is because, when "A is B" is described, it is assumed that the case "A is not B" has been considered.

[Configuration 1] A sensor including: a structure having at least four elastic sections discretely disposed along an imaginary circle; and a detector arranged to detect a deformation of the structure, wherein the structure includes at least one metal component having at least one elastic section of the four elastic sections, a first reinforcement component disposed on one side of the circle and coupled to the metal component, and a second reinforcement component disposed on one side of the circle and coupled to the metal component, the at least one metal component has a first coupling surface section disposed on one side of the circle and coupled to the first reinforcement component, and a second coupling surface section disposed on the other side of the circle and coupled to the second reinforcement component, and the at least one metal component is formed by bending a metal member.

[Configuration 2] In the sensor according to Configuration 1, the at least one metal component is bent by bending at a connection between the elastic section and the first coupling surface section.

[Configuration 3] In the sensor according to Configuration 1 or 2, the at least one metal component is bent by bending at a connection between the elastic section and the second coupling surface section.

[Configuration 4] In the sensor according to any one of Configurations 1 to 3, the four elastic sections are disposed such that the circle passes through the four elastic sections in plate-thickness directions of the four elastic sections.

[Configuration 5] In the sensor according to any one of Configurations 1 to 4, the circle is located between the first coupling surface section and the second coupling surface section.

[Configuration 6] In the sensor according to any one of Configurations 1 to 5, the first coupling surface section is made up of a plurality of top plate portions arranged along a plane including the circle, and the second coupling surface section is made up of a plurality of bottom plate portions arranged along the plane.

[Configuration 7] In the sensor according to any one of Configurations 1 to 6, the first reinforcement component and the second reinforcement component are welded to the metal component.

[Configuration 8] In the sensor according to any one of Configurations 1 to 7, the at least one metal component includes a first metal component having a first elastic section of the four elastic sections and a second metal component having a second elastic section of the four elastic sections.

[Configuration 9] In the sensor according to Configuration 8, the first reinforcement component is coupled to the first metal component, the second reinforcement component is coupled to the second metal component, and the second metal component is provided between the first reinforcement component and the second reinforcement component.

[Configuration 10] In the sensor according to Configuration 8, the at least one metal component includes a third metal component having a third elastic section of the four elastic sections and a fourth metal component having a fourth elastic section of the four elastic sections.

[Configuration 11] In the sensor according to any one of Configurations 1 to 10, the first reinforcement component has a first overlapping portion overlapping a first elastic section of the four elastic sections, a second overlapping portion overlapping a second elastic section of the four elastic sections, and a first relay portion connecting the first overlapping portion with the second overlapping portion, and the second reinforcement component has a third overlapping portion overlapping the first elastic section, a fourth overlapping portion overlapping the second elastic section, and a second relay portion connecting the third overlapping portion with the fourth overlapping portion.

[Configuration 12] In the sensor according to Configuration 11, a distance between the first overlapping portion and the metal component is less than a thickness of the first elastic section, and a distance between the fourth overlapping portion and the metal component is less than a thickness of the second elastic section.

[Configuration 13] In the sensor according to Configuration 11, the metal component has a first metal portion that satisfies at least one of overlapping the first relay portion and coupling the first elastic section to the second elastic section, the metal component has a first metal portion that satisfies at least one of overlapping the first relay portion and coupling the first elastic section to the second elastic section, and an air gap is provided between the first metal portion and the second metal portion.

[Configuration 14] In the sensor according to Configuration 13, a thickness of the first relay portion is greater than a thickness of the metal portion, and a thickness of the second relay portion is greater than a thickness of the second metal portion.

[Configuration 15] In the sensor according to Configuration 13 or 14, a thickness of the first relay portion is less than a distance between the first metal portion and the second metal portion, and a thickness of the second relay portion is less than the distance between the first metal portion and the second metal portion.

[Configuration 16] In the sensor according to any one of Configurations 13 to 15, a difference between a thickness of the first elastic section and a thickness of the first metal portion is less than a difference between a thickness of the first relay portion and the thickness of the first metal portion, and a difference between a thickness of the second elastic section and a thickness of the second metal portion is less than a difference between a thickness of the second relay portion and the thickness of the second metal portion.

[Configuration 17] The sensor according to any one of Configurations 1 to 16 further includes: a first coupling component coupling the first reinforcement component to the first coupling surface section, and a second coupling component coupling the second reinforcement component to the second coupling surface section.

[Configuration 18] In the sensor according to any one of Configurations 1 to 17, a first component of the detector is fixed to the first reinforcement component, and a second component of the detector is fixed to the second reinforcement component.

[Configuration 19] In the sensor according to any one of Configurations 1 to 18, the detector includes an optical encoder.

[Configuration 20] In the sensor according to any one of Configurations 1 to 19, the metal member is a cold-rolled steel.

[Configuration 21] An apparatus includes a first link; a second link arranged to relatively move with respect to the first link; and the sensor according to any one of Configurations 1 to 20, coupled to the first link and the second link.

[Configuration 22] In the apparatus according to Configuration 21, the apparatus is an articulated robot.

[Configuration 23] The apparatus according to Configuration 21 or 22 further includes a prime mover arranged to relatively move the first link and the second link.

[Configuration 24] In the apparatus according to Configuration 23, the prime mover and the sensor are coupled to each other via a speed reducer.

[Configuration 25] A system includes: the apparatus according to Configuration 23 or 24; and a controller configured to control control the prime mover in accordance with information obtained from the sensor.

[Configuration 26] A manufacturing method for a product includes manufacturing a product such that the apparatus according to Configuration 25 cooperates with a human within a range of 1 m from the human.

Embodiments of the present invention are not limited to the above-described embodiments. Various changes or modifications are applicable without departing from the spirit and scope of the present invention. Therefore, the following claims are attached to show the scope of the present invention.

This application claims the benefit of Japanese Patent Application No. 2021-175762 filed October 27, 2021 and No. 2021-185817 filed November 15, 2021, which are hereby incorporated by reference herein in their entirety.

Reference Signs List

31 to 38 elastic section
5 structure
51 to 54 metal component
56, 57 reinforcement component
8 detector

**Claims**

1. A sensor comprising:

a structure having at least four elastic sections discretely disposed along an imaginary circle; and
a detector arranged to detect a deformation of the structure, wherein
the structure includes

at least one metal component having at least one elastic section of the four elastic sections,
a first reinforcement component disposed on one side of the circle and coupled to the at least one metal component, and
a second reinforcement component disposed on the other side of the circle and coupled to the at least one metal component,

the at least one metal component has
a first coupling surface section disposed on the one side of the circle and coupled to the first reinforcement component, and
a second coupling surface section disposed on the other side of the circle and coupled to the second reinforcement component, and
the at least one metal component is formed by bending a metal member.

2. The sensor according to Claim 1, wherein the at least one metal component is bent by bending at a connection between the one elastic section and the first coupling surface section.

3. The sensor according to Claim 2, wherein the at least one metal component is bent by bending at a connection between the one elastic section and the second coupling surface section.

4. The sensor according to Claim 1, wherein the four elastic sections are disposed such that the circle passes through the four elastic sections in plate-thickness directions of the four elastic sections.

5. The sensor according to Claim 1, wherein the circle is located between the first coupling surface section and the second coupling surface section.

6. The sensor according to Claim 1, wherein the first coupling surface section is made up of a plurality of top plate portions arranged along a plane including the circle, and the second coupling surface section is made up of a plurality of bottom plate portions arranged along the plane.

7. The sensor according to Claim 1, wherein the first reinforcement component and the second reinforcement component are welded to the at least one metal component.

8. The sensor according to Claim 1, wherein the at least one metal component includes a first metal component having a first elastic section of the four elastic sections and a second metal component having a second elastic section of the four elastic sections.

9. The sensor according to Claim 8, wherein

the first reinforcement component is coupled to the first metal component,
the second reinforcement component is coupled to the second metal component, and
the second metal component is provided between the first reinforcement component and the second reinforcement component.

10. The sensor according to Claim 8, wherein the at least one metal component includes a third metal component having a third elastic section of the four elastic sections and a fourth metal component having a fourth elastic section of the four elastic sections.

11. The sensor according to Claim 1, wherein

the first reinforcement component has a first overlapping portion overlapping a first elastic section of the four elastic sections, a second overlapping portion overlapping a second elastic section of the four elastic sections, and a first relay portion connecting the first overlapping portion with the second overlapping portion, and
the second reinforcement component has a third overlapping portion overlapping the first elastic section, a fourth overlapping portion overlapping the second elastic section, and a second relay portion connecting the third overlapping portion with the fourth overlapping portion.

12. The sensor according to Claim 11, wherein a distance between the first overlapping portion and the metal component is less than a thickness of the first elastic section, and a distance between the fourth overlapping portion and the metal component is less than a thickness of the second elastic section.

13. The sensor according to Claim 11, wherein

the metal component has a first metal portion that satisfies at least one of overlapping the first relay portion and coupling the first elastic section to the second elastic section,
the metal component has a second metal portion that satisfies at least one of overlapping the second relay portion and coupling the first elastic section to the second elastic section, and
an air gap is provided between the first metal portion and the second metal portion.

14. The sensor according to Claim 13, wherein a thickness of the first relay portion is greater than a thickness of the first metal portion, and a thickness of the second relay portion is greater than a thickness of the second metal portion.

15. The sensor according to Claim 13, wherein

a thickness of the first relay portion is less than a distance between the first metal portion and the second metal portion, and
a thickness of the second relay portion is less than the distance between the first metal portion and the second metal portion.

16. The sensor according to Claim 13, wherein

a difference between a thickness of the first elastic section and a thickness of the first metal portion is less than a difference between a thickness of the first relay portion and the thickness of the first metal portion, and
a difference between a thickness of the second elastic section and a thickness of the second metal portion is less than a difference between a thickness of the second relay portion and the thickness of the second metal portion.

17. The sensor according to Claim 1, further comprising:

a first coupling component coupling the first reinforcement component to the first coupling surface section; and
a second coupling component coupling the second reinforcement component to the second coupling surface section.

18. The sensor according to Claim 1, wherein

a first component of the detector is fixed to the first reinforcement component, and
a second component of the detector is fixed to the second reinforcement component.

19. The sensor according to Claim 1, wherein the detector includes an optical encoder.

20. The sensor according to Claim 1, wherein the metal member is a cold-rolled steel.

21. An apparatus comprising: a first link; a second link arranged to relatively move with respect to the first link; and the sensor according to any one of Claims 1 to 20, coupled to the first link and the second link.

22. The apparatus according to Claim 21, wherein the apparatus is an articulated robot.

23. The apparatus according to Claim 21, further comprising a prime mover arranged to relatively move the first link and the second link.

24. The apparatus according to Claim 23, wherein the prime mover and the sensor are coupled to each other via a speed reducer.

**25.** A system comprising: the apparatus according to Claim 23; and a controller configured to control control the prime mover in accordance with information obtained from the sensor.

**26.** A manufacturing method for a product, comprising manufacturing a product such that the apparatus according to Claim 21 cooperates with a human within a range of 1 m from the human.

# FIG. 1A

_10_

# FIG. 1B

# FIG. 1C

# FIG. 2A

# FIG. 2B

# FIG. 2C

# FIG. 2D

# FIG. 3A

# FIG. 3B

FIG. 4A  10

1

6

3

7

2

FIG. 4B

929

10

1

930

3

2

FIG. 4C

931

10

1

932

3

2

FIG. 5A

FIG. 5B

FIG. 5C

# FIG. 6

# FIG. 7A

# FIG. 7B

## FIG. 7C

# FIG. 8

(a)

ROTATION AXIS

ROTATION ABOUT AXIS ORTHOGONAL
TO ROTATION AXIS

AXIS ORTHOGONAL TO ROTATION AXIS

ROTATION ABOUT AXIS ORTHOGONAL
TO ROTATION AXIS

(b)

DIRECTION OF BENDING

(c)

(d)

$t$

$h_1$

(e)

$t$    $b$

$t$

$h_2$

$t$

(f)

$t$    $b$

$t$

$h_3$

$t$

FIG. 9A

FIG. 9B

FIG. 9C

# FIG. 10A

# FIG. 10B

# FIG. 10C

EP 4 425 137 A1

FIG. 11A

FIG. 11B

56

FIG. 12A

FIG. 12B

FIG. 12C

FIG. 12D

# FIG. 13A

# FIG. 13B

# FIG. 13C

FIG. 14A

FIG. 14B

## FIG. 14C

## FIG. 14D

## FIG. 15A

## FIG. 15B

## FIG. 16A

## FIG. 16B

# FIG. 16C

FIG. 17A

FIG. 17B

## FIG. 18A

## FIG. 18B

FIG. 18C

FIG. 19A

FIG. 19B

FIG. 19C

FIG. 20A

# FIG. 20B

# FIG. 20C

FIG. 21A

FIG. 21B

FIG. 21C

FIG. 21D

# FIG. 21E

# FIG. 21F

# FIG. 21G

# FIG. 21H

# FIG. 22A

# FIG. 22B

# FIG. 23A

# FIG. 23B

FIG. 24A

FIG. 24B

FIG. 24C

FIG. 25

FIG. 26

+Z / θ / -Z

10

516 517 82 56
516
54c 52b
53c 53b 53a
83 53d 52d
54a 304
54d 52a
84 57
81
51a 51b 51c 51b

560 56 560
506
506

111 304 110
112 109
113 83 82 108
114 107
34a 106
115 33d 33b 32d 105
34c 33c 33a 208 32b
116 101 103 206
215 102 104 205
216 32a
34d 81
84 31b 31d
31a 201 203 204
202 31c

570 57 570
507
507

FIG. 27A

143   581   101 TO 116

31a TO 34d

304

51a TO 54d   591

201 TO 216

243

FIG. 27B

58   101 TO 116

143

31a TO 34d

51a TO 54d

57   201 TO 216

FIG. 27C

58   143   56   101 TO 116

581

31a TO 34d

51a TO 54d   591

59   243   201 TO 216

57

FIG. 27D

101 TO 116

58

581

591

57

201 TO 216

FIG. 27E

56

101 TO 116

58

59

57

201 TO 216

FIG. 28A

FIG. 28B

FIG. 29A

FIG. 29B

FIG. 29C

# FIG. 30A

# FIG. 30B

# FIG. 30C

# FIG. 30D

# FIG. 31A

# FIG. 31B

# FIG. 31C

FIG. 32A

56

57

51

FIG. 32B

56

57

51

FIG. 32C

56

57

51

FIG. 33A

FIG. 33B

FIG. 33C

FIG. 33D

FIG. 33E

FIG. 33F

FIG. 33G

FIG. 33H

FIG. 34A

FIG. 34B

## INTERNATIONAL SEARCH REPORT

| | International application No. |
|---|---|
| | **PCT/JP2022/040095** |

### A. CLASSIFICATION OF SUBJECT MATTER

*G01L 5/16*(2020.01)i; *B25J 19/02*(2006.01)i; *G01L 5/1627*(2020.01)i; *G01L 5/165*(2020.01)i; *G01L 5/166*(2020.01)i; *G01L 5/169*(2020.01)i

FI: G01L5/16; B25J19/02; G01L5/1627; G01L5/165; G01L5/166; G01L5/169

According to International Patent Classification (IPC) or to both national classification and IPC

### B. FIELDS SEARCHED

Minimum documentation searched (classification system followed by classification symbols)

G01L 1/00- 1/26; G01L 5/00- 5/28; B25J19/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-93291 A (CANON INC) 17 May 2012 (2012-05-17)<br>paragraphs [0030]-[0041], fig. 6-9 | 1-3, 5-12, 17-26 |
| A | JP 56-72323 A (MATSUSHITA ELECTRIC IND CO LTD) 16 June 1981 (1981-06-16)<br>p. 2, upper left column, line 10 to upper right column, line 8 | 1-26 |
| A | US 2019/0025143 A1 (DR. DOLL ENGINEERING GMBH) 24 January 2019 (2019-01-24)<br>entire text, all drawings | 1-26 |
| A | US 5445036 A (THE UNIVERSITY OF BRITISH COLUMBIA) 29 August 1995<br>(1995-08-29)<br>entire text, all drawings | 1-26 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/040095**

| Patent document cited in search report | | | Publication date (day/month/year) | Patent family member(s) | | | Publication date (day/month/year) |
|---|---|---|---|---|---|---|---|
| JP | 2012-93291 | A | 17 May 2012 | (Family: none) | | | |
| JP | 56-72323 | A | 16 June 1981 | (Family: none) | | | |
| US | 2019/0025143 | A1 | 24 January 2019 | DE | 102015215099 | B3 | |
| | | | | EP | 3332235 | A1 | |
| | | | | WO | 2017/025428 | A1 | |
| US | 5445036 | A | 29 August 1995 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017096929 A
- JP 2019174472 A
- JP 2021175762 A
- JP 2021185817 A